(19) Europäisches Patentamt
European Patent Office
Office européen des brevets

(11) **EP 4 746 379 A1**

(12) **EUROPEAN PATENT APPLICATION**
published in accordance with Art. 153(4) EPC

(43) Date of publication:
**20.05.2026 Bulletin 2026/21**

(21) Application number: **25829923.9**

(22) Date of filing: **18.06.2025**

(51) International Patent Classification (IPC):
*H04L 67/06* (2022.01)

(52) Cooperative Patent Classification (CPC):
**G06T 5/30; G06T 5/50; G06T 5/73; G06T 5/90;
G06T 7/90; H04L 67/06; H04N 19/11; H04N 19/172;
H04N 21/438; H04N 21/44; H04N 21/6334;
H04N 21/6336**

(86) International application number:
**PCT/CN2025/101701**

(87) International publication number:
**WO 2025/261389 (26.12.2025 Gazette 2025/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 20.06.2024  CN 202410804850
28.06.2024  CN 202410865237
23.09.2024  CN 202411336391

(71) Applicant: **Huawei Technologies Co., Ltd.
Shenzhen, Guangdong 518129 (CN)**

(72) Inventors:
• **LI, Qiao
Shenzhen, Guangdong 518129 (CN)**
• **LENG, Yongqiang
Shenzhen, Guangdong 518129 (CN)**
• **LUO, Pengfei
Shenzhen, Guangdong 518129 (CN)**
• **MA, An
Shenzhen, Guangdong 518129 (CN)**
• **BAI, Dengke
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **INFORMATION TRANSMISSION METHOD AND ELECTRONIC DEVICE**

(57)   This application provides an information transmission method and an electronic device. The method includes: obtaining N frames of first images, where each of the N frames of first images includes particle points encoded with target information, the particle points include locating points used to locate a display region and information points that indicate data, and in a same frame of first image, the locating point is cyclically displayed in a first preset color order, and the information point is cyclically displayed in a second preset color order; determining a target region that is in the first image and that includes the particle points; extracting the particle points from the first image based on the target region; and determining, based on distribution of the particle points, the target information encoded in the particle points. In this technical solution, a first electronic device may scan an image displayed by a second electronic device to obtain information encoded in the image, to implement information transmission between the first electronic device and the second electronic device. For example, during a device connection, this streamlines a device interaction process and enhances the futuristic appeal.

800

Obtain N frames of first images, where each of the N frames of first images includes particle points encoded with target information; the particle points include locating points used to locate a display region and information points that indicate data; in a same frame of first image, the locating point is cyclically displayed in a first preset color order, and the information point is cyclically displayed in a second preset color order; and N is greater than or equal to 3 — 810

Determine a target region that is in the first image and that includes the particle points — 820

Extract the particle points from the first image based on the target region — 830

Determine, based on distribution of the particle points, the target information encoded in the particle points — 840

FIG. 37

**Description**

This application claims priorities to Chinese Patent Application No. 202410804850.0, filed with the China National Intellectual Property Administration on June 20, 2024 and entitled "INFORMATION TRANSMISSION METHOD AND ELECTRONIC DEVICE", to Chinese Patent Application No. 202410865237.X, filed with the China National Intellectual Property Administration on June 28, 2024 and entitled "INFORMATION TRANSMISSION METHOD AND ELECTRONIC DEVICE", and to Chinese Patent Application No. 202411336391.4, filed with the China National Intellectual Property Administration on September 23, 2024 and entitled "INFORMATION TRANSMISSION METHOD AND ELECTRONIC DEVICE", all of which are incorporated herein by reference in their entireties.

**TECHNICAL FIELD**

This application relates to the field of electronic technologies, and more specifically, to an information transmission method and an electronic device.

**BACKGROUND**

In some scenarios in which information needs to be transmitted between electronic devices, a manner of scanning a two-dimensional code is usually used to perform connection pairing, account login, and the like between the devices. For example, when a first electronic device needs to establish a device connection to a second electronic device, the second electronic device needs to scan a two-dimensional code displayed on the first electronic device, to perform connection pairing. However, the manner of scanning the two-dimensional code requires a long interaction process and is inconvenient.

**SUMMARY**

Embodiments of this application provide an information transmission method and an electronic device. In this technical solution, a second electronic device may encode, in an image, information that needs to be transmitted, and a first electronic device may scan the image displayed by the second electronic device to obtain the information encoded in the image, to implement information transmission between the first electronic device and the second electronic device. For example, during a device connection, this streamlines a device interaction process and enhances the futuristic appeal.

According to a first aspect, an information transmission method is provided. The method is applied to a first electronic device, and the method includes: obtaining N frames of first images, where each of the N frames of first images includes particle points encoded with target information; the particle points include locating points used to locate a display region and information points that indicate data; in a same frame of first image, the locating point is cyclically displayed in a first preset color order, and the information point is cyclically displayed in a second preset color order; and N is greater than or equal to 3; determining a target region that is in the first image and that includes the particle points; extracting the particle points from the first image based on the target region; and determining, based on distribution of the particle points, the target information encoded in the particle points.

According to this embodiment of this application, the first electronic device may obtain the N frames of first images, and the first image includes the particle points encoded with the target information. In addition, in the same frame of image, the locating point and the information point in the particle points are cyclically displayed in the preset color orders, so that the encoded particle points can have a good concealment effect.

In addition, the first electronic device only needs to scan the first image, to extract the particle points, and further determine the target information encoded in the particle points. For example, the target information is a connection pairing code (for example, a PIN code) used for a device connection. The first electronic device may obtain the connection pairing code in this convenient manner, and establish a device connection relationship with a second electronic device. This way streamlines a device interaction process and enhances the futuristic appeal.

In some implementations, before determining the target region that is in the first image and that includes the particle points, the method further includes: determining that a first distance between the first electronic device and the second electronic device is less than or equal to a preset distance.

A specific value of the preset distance is not limited in embodiments of this application. For example, the preset distance may be 30 centimeters or 60 centimeters.

According to this embodiment of this application, when the first distance between the first electronic device and the second electronic device is less than the preset distance, the target region that is in the first image and that includes the particle points is determined, so that the information transmission method in this application can be performed when the distance between the two electronic devices is appropriate, to improve a possibility of successful decoding by the first electronic device.

In some implementations, determining the target region that is in the first image and that includes the particle points includes: performing downsampling on a 1st frame of first image in the N frames of first images based on the first distance, to obtain a second image; performing binarization processing on the second image to obtain a binary image; and determining the target region based on the binary image.

According to this embodiment of this application, the first electronic device performs downsampling on the first image based on the first distance to the second electronic device, performs binarization processing on the second image obtained through downsampling, and determines the target region based on the binary image. In this way, a downsampling rate can be more appropriate, and a workload of determining the target region by the first electronic device by processing the image can be reduced.

Optionally, the 1st frame of first image may be alternatively replaced with any one of first several frames of images in the N frames of first images. This is not limited in embodiments of this application. Alternatively, the 1st frame of first image may be replaced with one of the N frames of first images.

In some implementations, the method further includes: performing downsampling on the N frames of first images based on the target region, to obtain N frames of third images; performing intra-frame differential processing on the N frames of third images by using a first intra-frame difference parameter, to obtain N frames of first gray-scale images; and cropping the N frames of first gray-scale images based on the target region, to obtain N frames of second gray-scale images.

According to this embodiment of this application, the first electronic device performs downsampling on the N frames of first images based on the first distance, so that a workload of processing the image by the first electronic device can be reduced. In addition, intra-frame differential processing is performed on the image, so that particle points included in the obtained first gray-scale image are clearer. This helps the first electronic device obtain information encoded in the first gray-scale image. Further, the first electronic device crops the first gray-scale image by using the previously obtained target region, so that a size of the second gray-scale image obtained through cropping is the same as that of the target region, and the first electronic device only needs to process the second gray-scale image that includes a particle point part. This improves a decoding speed of the first electronic device.

In some implementations, extracting the particle points from the first image based on the target region includes: filtering M frames of second gray-scale images in the N frames of second gray-scale images by using an annular region capable of covering the target region, to obtain M frames of third gray-scale images, where each of the M frames of gray-scale images reserves a part covered by the annular region, and M is less than or equal to N; performing inter-frame differential processing on the M frames of third gray-scale images, to obtain M frames of fourth gray-scale images; performing binarization processing on the M frames of fourth gray-scale images, to obtain M frames of binary images; performing an OR operation on the M frames of binary images, to obtain a first target binary image; performing interference point filtering on the first target binary image, to obtain a second target binary image; and extracting the particle points from the second target binary image.

For example, the annular region capable of covering the target region may be used as a mask (mask) to filter the second gray-scale image, to reserve the part covered by the annular region.

According to this embodiment of this application, the second gray-scale image is filtered by using the annular region capable of covering the target region, to obtain particle points corresponding to the annular region, and particle points outside the annular region is filtered out. In this way, the M frames of third gray-scale images obtained by the first electronic device include particle points in the annular region, and a clutter in another region is filtered out.

In addition, the first electronic device may reserve, through differential processing between a plurality of frames, a different part in the plurality of frames of images. During encoding, the second electronic device cyclically displays the locating points and the information points in different colors, and a picture background and a clutter are the same. Therefore, the locating points and the information points in the image may be reserved as many as possible through differential processing, and a clutter part may be filtered out.

In addition, the first electronic device performs interference point filtering on the first target binary image, so that quality of the obtained second target binary image is better. This helps the first electronic device successfully extract the particle points with the encoded information from the second target binary image.

In some implementations, the method further includes: determining a plurality of groups of first information based on the N frames of first images; and fusing the plurality of groups of first information to obtain a first fusion result including the target information.

It should be understood that the first information is target information determined by the first electronic device based on the N frames of first images.

An example in which N is 5 is used for description. The first electronic device may determine a group of first information based on a 1st frame of image, a 2nd frame of image, and a 3rd frame of image, determine a group of first information based on the 2nd frame of image, the 3rd frame of image, and a 4th frame of image, and determine a group of first information based on the 3rd frame of image, the 4th frame of image, and a 5th frame of image. Then, the first electronic device may fuse the three groups of first information to obtain the final target information.

According to this embodiment of this application, the first electronic device may determine the plurality of groups of first information based on the N frames of first images, and fuse the plurality of groups of first information to obtain the final target information. In this way, the finally obtained target information can be more accurate.

In some implementations, the method further includes: obtaining second N frames of first images; determining a plurality of groups of second information based on the second N frames of first images; fusing the plurality of groups of second information, to obtain a second fusion result including the target information; and fusing the first fusion result and the second fusion result to obtain a third fusion result, where the third fusion result includes the finally determined target information.

According to this embodiment of this application, the first electronic device may further fuse a plurality of rounds of fusion results, so that the finally determined target information can be more accurate.

In some implementations, determining, based on the distribution of the particle points, the target information encoded in the particle points includes: determining a plurality of display regions based on distribution of the locating points in the particle points; determining information encoded in each of the plurality of display regions based on distribution of information points included in the plurality of display regions; and fusing the information encoded in each display region in a preset order, to obtain the target information.

According to this embodiment of this application, the first electronic device may determine the plurality of display regions based on the distribution of the locating points, determine the information encoded in each display region, and then fuse the information encoded in the plurality of display regions, to obtain the encoded target information. In this technical solution, the first electronic device can successfully obtain, through decoding, the target information encoded by the second electronic device.

In some implementations, the target information includes at least one of a connection pairing code, account login information, a product serial number, and a media access control MAC address of the second electronic device.

In another example, the target information may further include other content, for example, a conference link. This is not limited in embodiments of this application.

In some implementations, the particle points are distributed in an annular region.

In another example, the particle points may alternatively be distributed in another shape, for example, a rectangle or another regular or irregular shape.

In some implementations, the locating points include external locating points and internal locating points, and that the locating point is cyclically displayed in the first preset color order includes: The external locating point is cyclically displayed in a first color, a second color, and a third color, and the internal locating point is cyclically displayed in the second color, the third color, and the first color, where the first color, the second color, and the third color are different from each other.

Optionally, that the information point is cyclically displayed in the second preset color order includes: The information point is cyclically displayed in the third color, the first color, and the third color.

For example, the first color is yellow, the second color is blue, and the third color is gray. Alternatively, the first color, the second color, and the third color may be other colors.

In some implementations, the method further includes: determining the located display region based on the locating points in the particle points; and determining a version number of the second electronic device based on a quantity of information points in the display region, where different version numbers correspond to different quantities of information points in the display region.

For example, different quantities of information points included in the display region correspond to different version numbers of the second electronic device.

It should be understood that the first electronic device may alternatively determine the version number of the second electronic device based on a quantity of information points in a display region included in the plurality of frames.

It should be understood that, the version number of the second electronic device may be a system version number of the second electronic device, or may be a version number used by the second electronic device to encode information. According to this embodiment of this application, the first electronic device may determine the version number of the second electronic device by using the quantity of information points in the display region that is obtained through decoding, so that the first electronic device can conveniently and quickly determine the version number of the second electronic device. In this way, the first electronic device simply and efficiently determines the version number of the second electronic device.

In some implementations, the particle points further include corresponding version number points that indicate a version number of the second electronic device, and in the same frame of first image, the version number point is cyclically displayed in a third preset color order.

Optionally, a quantity of version number points is a preset quantity. For example, there are four or five version number points.

The third preset color order is different from the first preset color order and the second preset color order. For example, the third preset color order is a fourth color, a fifth color, and a sixth color, and the fourth color, the fifth color, and the sixth color are different from each other.

For example, the fourth color, the fifth color, and the sixth color each correspond to one of green, red, and gray. For example, the fourth color is green, the fifth color is red, and the sixth color is gray. For another example, the fourth color is red, the fifth color is gray, and the sixth color is green.

It should be understood that the fourth color, the fifth color, and the sixth color may alternatively be other colors. This is not limited in embodiments of this application.

Optionally, a difference between a center of gravity of a triangle formed by the fourth color, the fifth color, and the sixth color in a color gamut diagram and a center of gravity of a triangle formed by the first color, the second color, and the third color in the color gamut diagram is less than a preset difference. In this way, the information points and the locating points can have colors similar to those of the version number points, and can be better concealed in the background.

According to this embodiment of this application, the particle points may further include the version number points that indicate the version number. In the same frame of image, the version number is cyclically displayed in the preset color order. In this way, the version number points can be well concealed in the background, so that the user cannot perceive existence of these particle points with the naked eyes.

In some implementations, the method further includes: performing intra-frame differential processing on the N frames of third images by using a second intra-frame difference parameter, to obtain N frames of fifth gray-scale images; and cropping the N frames of fifth gray-scale images based on the target region, to obtain the N frames of sixth gray-scale images.

It should be understood that the second intra-frame difference parameter is different from the first intra-frame difference parameter. Alternatively, that the difference parameters are different may be understood as that a difference mode used by the first electronic device for the information point and the locating point is different from a difference mode used for the version number point. In this way, when extracting the information points and the locating points, the first electronic device can filter out the version number points, and when extracting the version number points, the first electronic device can filter out the information points and the locating points. This can improve a possibility of successful decoding by the first electronic device.

In some implementations, extracting the particle points from the first image based on the target region includes: filtering M frames of sixth gray-scale images in the N frames of sixth gray-scale images by using a second annular region capable of covering the version number points, to obtain M frames of seventh gray-scale images, where each of the M frames of seventh gray-scale images reserves a part covered by the second annular region, and M is less than or equal to N; performing inter-frame differential processing on the M frames of seventh gray-scale images, to obtain M frames of eighth gray-scale images; performing binarization processing on the M frames of eighth gray-scale images, to obtain M frames of binary images B; performing an OR operation on the M frames of binary images B, to obtain a third target binary image; performing interference point filtering on the third target binary image, to obtain a fourth target binary image; and extracting the version number points in the particle points from the fourth target binary image.

For example, the second annular region capable of covering the version number points may be used as a mask (mask) to filter the sixth gray-scale image, to reserve the part (including the version number points) covered by the second annular region.

In some examples, if the version number points are encoded on an inner circle in which inner-circle locating points in the locating points are located, the second annular region may be an annular region covering the inner circle.

In some examples, if the version number points are encoded on an outer circle in which outer-circle locating points in the locating points are located, the second annular region may be an annular region covering the outer circle.

According to this embodiment of this application, the first electronic device can successfully extract the version number points from the particle points.

In some implementations, determining, based on the distribution of the particle points, the target information encoded in the particle points includes: determining an angle sequence based on an angle between every two adjacent version number points in the version number points; and determining the version number of the second electronic device based on a relationship between the angle sequence and a preset angle sequence, where different version numbers correspond to different preset angle sequences.

It should be understood that the first electronic device may determine the angle sequence based on the angle between every two adjacent version number points in a preset order. For example, if there are four version number points, the angle sequence may include four angle values.

For example, a version number 1 corresponds to a preset angle sequence 1, a version number 2 corresponds to a preset angle sequence 2, and a version number 3 corresponds to a preset angle sequence 3.

According to this embodiment of this application, the first electronic device may determine the angle sequence based on distribution of the version number points, and match the angle sequence with the preset angle sequence, to determine the version number of the second electronic device.

In some implementations, determining the version number of the second electronic device based on the relationship between the angle sequence and the preset angle sequence includes: matching each angle in the angle sequence with a corresponding angle in the preset angle sequence, to determine a quantity of effective angles in the angle sequence; and when the quantity of effective angles in the angle sequence is greater than a first preset quantity, determining that the version number of the second electronic device is a version number corresponding to the preset angle sequence. For example, when a difference between a 1st angle in the angle sequence and a 1st angle in the preset angle sequence is small (for example, the difference is less than a preset value), it may be determined that the 1st angle is an effective angle.

For example, if the angle sequence includes four angles, the first preset quantity may be 2.

According to this embodiment of this application, when the angle sequence is matched with a preset angle sequence, if a quantity of effective angles is greater than the first preset quantity, it may be determined that the version number of the second electronic device is a version number corresponding to the preset angle sequence.

In some implementations, the version number points are located on a circle of the locating points, and each of the version number points is located between two adjacent locating points.

It should be understood that the circle of the locating points may be an inner circle or an outer circle.

In another example, alternatively, two version number points in the version number points may be located between two adjacent locating points. This is not limited in embodiments of this application.

According to this embodiment of this application, when the version number points are located in the inner circle or the outer circle of the locating points, the version number points may not affect encoding of the information points.

In addition, when the version number points are located in the inner circle, an image obtained by the first electronic device through secondary cropping may be smaller, so that a data amount of the first electronic device is reduced.

In some implementations, the method further includes: displaying first prompt information when it is determined that the version number of the second electronic device is higher than a version number of the first electronic device, where the first prompt information prompts to upgrade the first electronic device, or the first prompt information prompts a user to establish a connection relationship with the second electronic device by using the connection pairing code.

For example, the first prompt information may be text content "Scanning failed" and "A current version is low, and a pattern of the peer device cannot be parsed. Please use the connection code for connection or try again after the upgrade."

According to this embodiment of this application, when the first electronic device determines that the version number of the second electronic device is higher than the version number of the first electronic device, the first prompt information may be displayed, to prompt the user that a current version of the first electronic device is low and the first electronic device needs to be upgraded, or when a device connection is established by scanning a pattern, the first prompt information may alternatively prompt the user to establish the connection relationship with the second electronic device by using the connection pairing code or in a manual manner.

According to a second aspect, an information transmission method is provided. The method is applied to a second electronic device, and the method includes: generating particle points encoded with target information; displaying a first image, where the first image includes the particle points encoded with the target information, the particle points include locating points used to locate a display region and information points that indicate data, and in a same frame of first image, the locating point is cyclically displayed in a first preset color order, and the information point is cyclically displayed in a second preset color order.

According to this embodiment of this application, the particles encoded in the first image displayed by the second electronic device include the locating points and the information points. In the same frame of first image, the locating point is cyclically displayed in the first preset color order, and the information point is cyclically displayed in the second preset color order. In this way, the locating point and the information point may be cyclically displayed in different colors, to increase hiding of the particle points.

In some implementations, the particle points further include corresponding version number points that indicate a version number of the second electronic device, and in the same frame of first image, the version number point is cyclically displayed in a third preset color order.

According to this embodiment of this application, the particle points encoded by the second electronic device may further include the version number points that indicate the version number. In the same frame of image, the version number is cyclically displayed in the preset color order. In this way, the version number points can be well concealed in a background, so that a user cannot perceive existence of these particle points with naked eyes.

According to a third aspect, this application provides an electronic device, including one or more processors and one or more memories. The one or more memories store one or more programs, and when the one or more programs are executed by the one or more processors, the information transmission method in the first aspect and the second aspect and any possible implementation of the first aspect and the second aspect is performed.

According to a fourth aspect, this application provides an apparatus, including a module configured to implement the information transmission method in the first aspect and the second aspect and any possible implementation of the first aspect and the second aspect.

According to a fifth aspect, this application provides a chip. The chip includes a processor and a communication interface. The communication interface is configured to receive a signal and transmit the signal to the processor. The processor processes the signal, so that the information transmission method in the first aspect and the second aspect and any possible implementation of the first aspect and the second aspect is performed.

According to a sixth aspect, this application provides a readable storage medium. The readable storage medium stores instructions, and when the instructions are run on an electronic device, the information transmission method in the first aspect and the second aspect and any possible implementation of the first aspect and the second aspect is performed.

According to a seventh aspect, this application provides a program product. The program product includes program code, and when the program code is run on an electronic device, the information transmission method in the first aspect and the second aspect and any possible implementation of the first aspect and the second aspect is performed.

## BRIEF DESCRIPTION OF DRAWINGS

FIG. 1 is a diagram of a structure of an electronic device according to an embodiment of this application;
FIG. 2 is a diagram of a software structure of an electronic device according to an embodiment of this application;
FIG. 3(a) and FIG. 3(b) is a diagram of a scenario to which an embodiment of this application is applicable;
FIG. 4 is a diagram in which an electronic device performs region division on an annular pattern according to an embodiment of this application;
FIG. 5 is another diagram in which an electronic device performs region division on an annular pattern according to an embodiment of this application;
FIG. 6 is a diagram of possible distribution of information points according to an embodiment of this application;
FIG. 7 is a diagram of particle points included in an annular pattern according to an embodiment of this application;
FIG. 8 is a schematic flowchart of a decoding method according to an embodiment of this application;
FIG. 9 is a diagram of determining a distance according to an embodiment of this application;
FIG. 10 is a schematic flowchart of extracting an ROI according to an embodiment of this application;
FIG. 11 is a diagram of extracting an ROI according to an embodiment of this application;
FIG. 12 is a diagram of analyzing pixels in an image to extract an ROI according to an embodiment of this application;
FIG. 13 is a diagram of determining an image including particle points according to an embodiment of this application;
FIG. 14 is a schematic flowchart of determining locating points and information points according to an embodiment of this application;
FIG. 15 is a diagram of a result of determining locating points and information points according to an embodiment of this application;
FIG. 16 is a schematic flowchart of filtering an interference point according to an embodiment of this application;
FIG. 17 is a diagram of sorting based on a product of a target luminance difference and a quantity of target connected components according to an embodiment of this application;
FIG. 18 is a diagram of locating point supplementation according to an embodiment of this application;
FIG. 19 is a schematic flowchart of determining a connection pairing code based on locating points and information points according to an embodiment of this application;
FIG. 20 is a diagram of determining locations of information points according to an embodiment of this application;
FIG. 21 is a diagram of extracting information points according to an embodiment of this application;
FIG. 22 is a diagram of obtaining a connection pairing code through multi-frame fusion according to an embodiment of this application;
FIG. 23 and FIG. 24 are diagrams of multi-round fusion according to an embodiment of this application;
FIG. 25 is a diagram of decoding performed between electronic devices of different versions according to an embodiment of this application;
FIG. 26(a) to FIG. 26(c) are diagrams of a group of GUIs according to an embodiment of this application;
FIG. 27 is a diagram of encoding a version number point according to an embodiment of this application;
FIG. 28 is a schematic flowchart of determining a version number of an electronic device according to an embodiment of this application;
FIG. 29 is a diagram of determining an image including version number points according to an embodiment of this application;
FIG. 30 is a diagram of determining a binary image according to an embodiment of this application;
FIG. 31 is a schematic flowchart of filtering an interference point according to an embodiment of this application;
FIG. 32 is a diagram of a plurality of possibilities of decoding an included angle sequence by an electronic device according to an embodiment of this application;
FIG. 33 is a schematic flowchart of determining a version number based on version number points according to an embodiment of this application;

FIG. 34A and FIG. 34B are a schematic flowchart of determining a version number by using an angle sequence according to an embodiment of this application;

FIG. 35 is a diagram of filtering particle points by using a precise mask according to an embodiment of this application;

FIG. 36 is a diagram of determining information points according to an embodiment of this application; and

FIG. 37 is a schematic flowchart of an information transmission method according to an embodiment of this application.

## DESCRIPTION OF EMBODIMENTS

The following describes the technical solutions of this application with reference to accompanying drawings.

A method in embodiments of this application may be applied to an electronic device like a smartphone, a tablet computer, a notebook computer, a personal computer (personal computer, PC), an ultra-mobile personal computer (ultra-mobile personal computer, UMPC), a netbook, a vehicle-mounted device, a smart television, a wearable device, a foldable device, or an internet of things (internet of things, IoT) device.

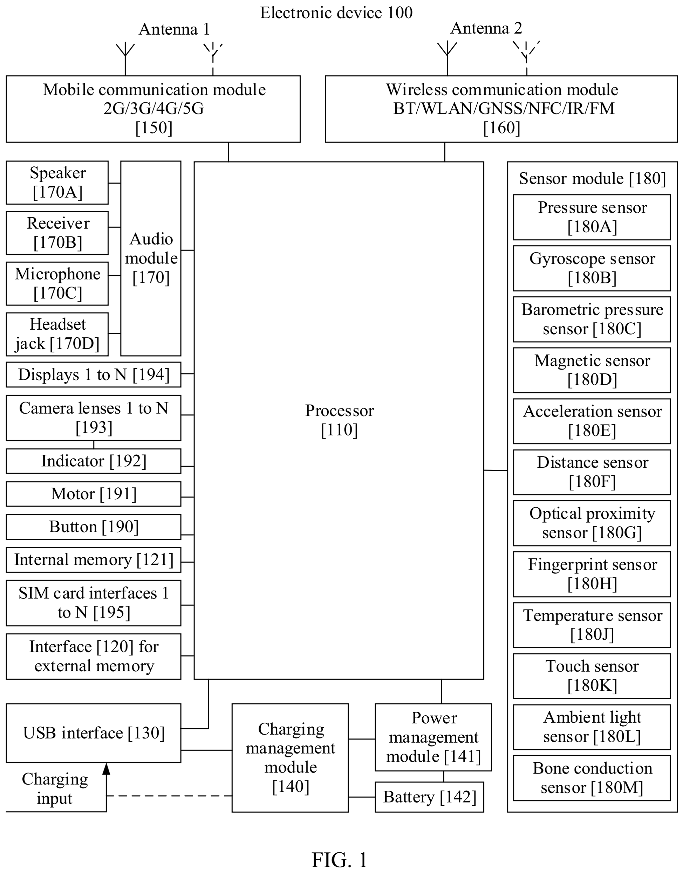

FIG. 1 is a diagram of a structure of an electronic device 100. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera lens 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or there may be a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access and reduces waiting time of the processor 110. Therefore, system efficiency is improved.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus interface, and/or the like.

The I2C interface is a two-way synchronization serial bus, and includes one serial data line (serial data line, SDA) and one serial clock line (serial clock line, SCL).

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170.

The PCM interface may also be used for audio communication, and sample, quantize, and code an analog signal. In some embodiments, the audio module 170 may be coupled to the wireless communication module 160 through a PCM bus interface.

The UART interface is a universal serial data bus, and is used for asynchronous communication. The bus may be a two-way communication bus, and converts to-be-transmitted data between serial communication and parallel communication. In some embodiments, the UART interface is usually configured to connect the processor 110 to the wireless communication module 160.

The MIPI interface may be configured to connect the processor 110 to a peripheral device like the display 194 or the camera lens 193.

The GPIO interface may be configured through software. The GPIO interface may be configured for control signals or data signals. In some embodiments, the GPIO interface may be configured to connect the processor 110 to the camera lens 193, the display 194, the wireless communication module 160, the audio module 170, the sensor module 180, and the like.

The USB interface 130 is an interface that conforms to a USB standard specification, and may be specifically a mini USB interface, a micro USB interface, a USB type-C interface, or the like. The USB interface 130 may be connected to the charger to charge the electronic device 100, or may be configured to transmit data between the electronic device 100 and a peripheral device.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some wired charging embodiments, the charging management module 140 may receive a charging input from a wired charger through the USB interface 130. In some wireless charging embodiments, the charging management module 140 may receive a wireless charging input through a wireless charging coil of the electronic device 100. The charging management module 140 supplies power to the electronic device through the power management module 141 while charging the battery 142.

The power management module 141 is configured to connect the battery 142, the charging management module 140, and the processor 110.

A wireless communication function of the electronic device 100 may be implemented through the antenna 1, the antenna 2, the mobile communication module 150, the wireless communication module 160, the modem processor, the baseband processor, and the like.

The mobile communication module 150 may provide a wireless communication solution that is applied to the electronic device 100 and that includes 2G, 3G, 4G, 5G, and the like.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor, and is then transferred to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology.

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel.

The display panel may be a liquid crystal display (liquid crystal display, LCD), or may be a display panel made of one of materials such as an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, or a quantum dot light-emitting diode (quantum dot light-emitting diode, QLED). In some embodiments, the electronic device 100 may include one or N displays 194, where N is a positive integer greater than 1.

The electronic device 100 may implement a photographing function through the ISP, the camera lens 193, the video codec, the GPU, the display 194, the application processor, and the like.

The ISP is configured to process data fed back by the camera lens 193. The camera lens 193 is configured to capture a static image or a video.

The digital signal processor is configured to process a digital signal, and may process another digital signal in addition to the digital image signal.

The video codec is configured to compress or decompress a digital video.

The interface 120 for external memory may be configured to connect to an external storage card, for example, a micro SD card, to extend a storage capability of the electronic device 100.

The internal memory 121 may be configured to store computer-executable program code, and the executable program code includes instructions. The processor 110 runs the instructions stored in the internal memory 121, to perform various function applications of the electronic device 100 and data processing.

The electronic device 100 can implement an audio function through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal.

The speaker 170A, also referred to as a "loudspeaker", is configured to convert an electrical audio signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset.

The sensor module 180 may include the pressure sensor 180A, the gyroscope sensor 180B, the barometric pressure sensor 180C, the acceleration sensor 180E, the distance sensor 180F, the fingerprint sensor 180H, the touch sensor 180K, the bone conduction sensor 180M, and the like.

The button 190 includes a power button, a volume button, and the like.

The motor 191 may generate a vibration prompt.

The indicator 192 may be an indicator light, and may indicate a charging status and a power change, or may indicate a message, a missed call, a notification, and the like.

The SIM card interface 195 is configured to connect to a SIM card.

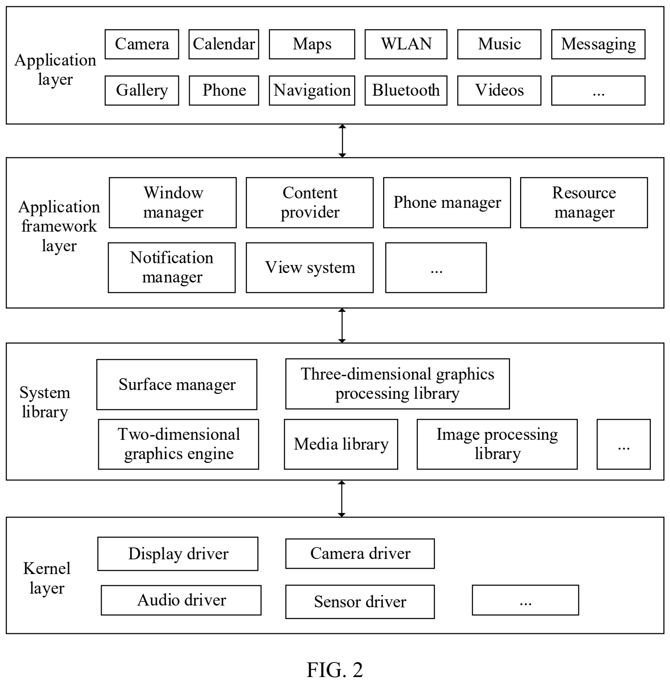

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, an operating system is divided into four layers: an application layer, an application framework layer, a system library, and a kernel layer from top to bottom. The application layer may include a series of application packages.

As shown in FIG. 2, the application packages may include applications (applications, Apps) such as Camera, Gallery, Calendar, Phone, Maps, Navigation, WLAN, Bluetooth, Music, Videos, Messaging, and Wallet.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to: store and obtain data, and enable the data to be accessed by an application. The data may include a video, an image, an audio, calls that are made and received, a browsing history and bookmarks, a phone book, and the like.

The view system includes visual controls such as a control for displaying a text and a control for displaying a picture. The view system may be configured to construct an application. A display interface may include one or more views. For example, a display interface including a notification icon of Messaging may include a text display view and a picture display view.

The phone manager is configured to provide a communication function of the electronic device 100, for example, management of a call status (including answering, hang-up, or the like).

The resource manager provides various resources such as a localized string, an icon, an image, a layout file, and a video file for an application.

The notification manager enables an application to display notification information in the status bar, and may be configured to convey a notification message. The notification manager may automatically disappear after a short pause without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application running on a background or a notification that appears on the screen in a form of a dialog window. For example, text information is displayed in the status bar, an announcement is given, the electronic device vibrates, or the indicator light blinks.

The kernel library includes two parts: a functional function that needs to be invoked by a Java language and a kernel library.

The application layer and the application framework layer run in a virtual machine. The virtual machine executes Java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playback and recording in a plurality of commonly used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Before the technical solutions in embodiments of this application are described, some technical terms that may be used in this application are first described as follows.

Image binarization is to set a gray-scale value of a pixel in an image to 0 or 255. After the image binarization, the entire image presents only a black and white visual effect.

In some scenarios in which information needs to be transmitted between electronic devices, a manner of scanning a two-dimensional code is usually used to perform connection pairing, account login, and the like between the devices. For example, when a first electronic device needs to establish a device connection to a second electronic device, the second electronic device needs to scan a two-dimensional code displayed on the first electronic device to perform connection pairing. However, the manner of scanning the two-dimensional code requires a long interaction process and is inconvenient.

In view of this, embodiments of this application provide an information transmission method and an electronic device. In this technical solution, a second electronic device may encode, in an image, information that needs to be transmitted, and a first electronic device may scan the image displayed by the second electronic device to obtain the information encoded in the image, to implement information transmission between the first electronic device and the second electronic device. For example, during a device connection, a connection pairing code can be conveniently transmitted in this manner, streamlining a device interaction process and enhancing the futuristic appeal.

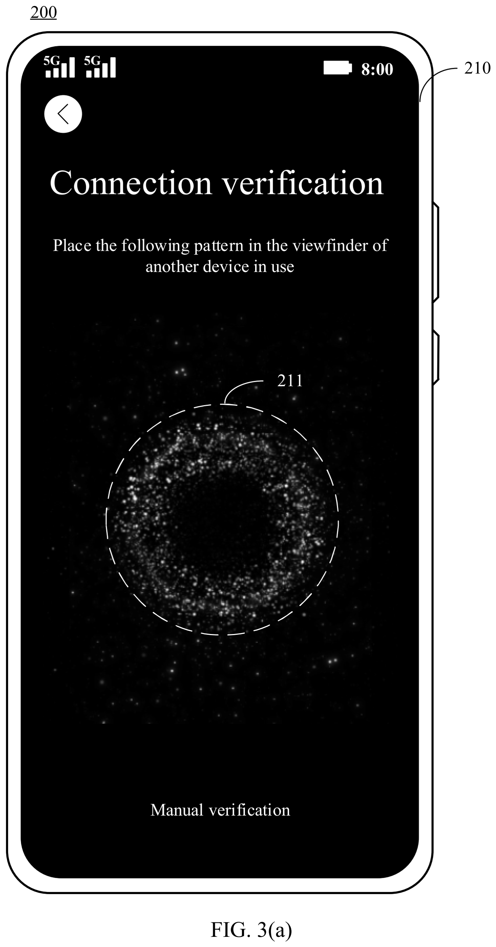

The following describes the technical solutions for information transmission in embodiments of this application with reference to FIG. 3(a) to FIG. 21.

It should be understood that in embodiments of this application, an example in which device connection information is transmitted between electronic devices is used for description. However, this should not constitute a limitation on a scenario to which this application is applicable.

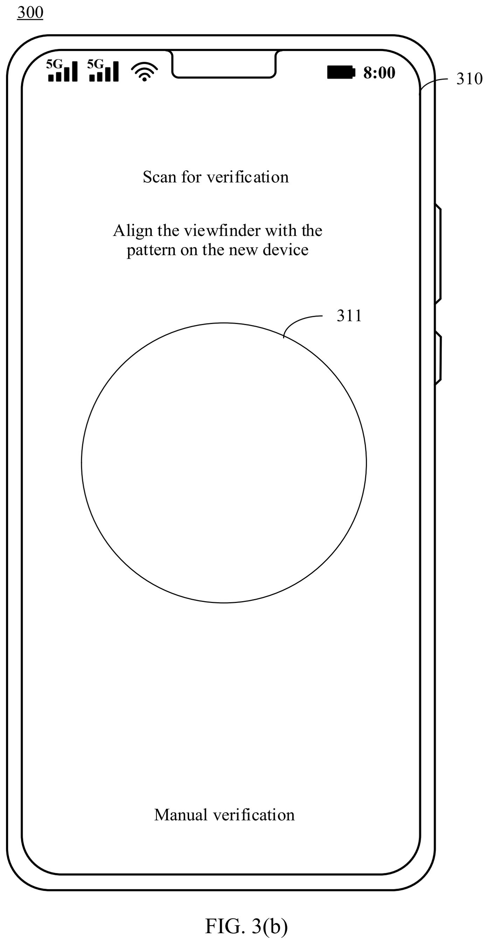

For example, FIG. 3(a) and FIG. 3(b) are a diagram of a scenario to which an embodiment of this application is applicable.

In a device connection scenario, as shown in FIG. 3(a), an electronic device 200 may display a display interface 210, and the display interface 210 may be used for a device connection.

The display interface 210 may include a specially designed pattern 211 (for example, a dynamic pattern). The specially designed pattern 211 may be used for the device connection, account login, data transmission, and a MeeTime connection between the electronic device 200 and another electronic device, and may be further used for projection and conference attendance of the electronic device 200, and the like. For example, the display interface 210 may further include text prompt content "Verify connection" and "Place the following pattern in a viewfinder of another device in use" that prompt a user to perform an operation.

For example, the dynamic pattern may be a ring, for example, a HarmonyOS ring (which may also be referred to as a star ring). The dynamic pattern may alternatively be in another shape, for example, a rectangle, a circle, or an ellipse. For ease of description, in this embodiment of this application, an example in which the dynamic pattern is a ring is used for description. The ring may include a plurality of yellow-blue-gray particles, and the plurality of yellow-blue-gray particles may be encoded with information that needs to be transmitted by the electronic device 200.

For example, the information that needs to be transmitted may include device connection information, a verification code, account login information, projection information, and conference information. The device connection information may be a connection pairing code. For example, the connection pairing code has 6 digits: "147258". In another example, alternatively, the connection pairing code may include an English letter, or the connection pairing code may include 4 digits, 8 digits, or the like.

Alternatively, the device connection information may further include other information of the electronic device 200, such as a device identifier, a model, and a media access control (media access control, MAC) address.

For ease of description, in this embodiment of this application, an example in which the device connection information is a 6-digit connection pairing code is used for description.

It should be understood that the electronic device 200 may encode the connection pairing information in the annular pattern in a specific encoding manner. The following describes, with reference to specific embodiments, an implementation in which the electronic device 200 encodes the connection pairing information in the annular pattern. Details are not described herein.

When an electronic device 300 needs to establish a device connection to the electronic device 200, the electronic device 300 may scan the pattern 211 on the display interface 210 of the electronic device 200, to obtain the connection pairing information encoded in the pattern 211, and establish a connection relationship with the electronic device 200 by using the connection pairing information.

As shown in FIG. 3(b), when the electronic device 300 needs to establish the device connection to the electronic device 200, the electronic device 300 may display a display interface 310. The display interface 310 may include a viewfinder 311, text prompt content "Scan for verification" and "Align the viewfinder with the pattern on the new device", and the like.

It should be understood that the viewfinder 311 may be located at a central location of the display interface 310, or may be located at another location of the display interface 310. This is not limited in embodiments of this application. It should be further understood that, when framing the pattern 211 on the display interface 210 of the electronic device 200, the viewfinder 311 may further display a breathing animation or a loading animation. This is not limited in embodiments of this application.

For example, the breathing animation may be understood as that, when framing the pattern 211, the viewfinder 311 may gradually shrink to obtain the pattern 211. In addition, the viewfinder 311 may further display a dynamic change effect of a color stroke. It should be understood that the color stroke may be regular or irregular, and the color stroke may further rotate in a preset direction, or the color stroke may alternatively dynamically change from large to small or from small to large. Alternatively, during the framing, the viewfinder 311 may further display, in the obtained pattern 211, a dynamic icon that indicates to load content. Alternatively, during the framing, the viewfinder 311 may further display, in the obtained pattern 211, a dynamic change effect of a loading process.

For example, the new device may be the electronic device 200.

In another example, the display interface 310 may alternatively be a viewfinder display interface of an invoked camera lens or a viewfinder display interface of an invoked camera. This is not limited in embodiments of this application.

In another example, the display interface 310 may alternatively be displayed in a half-modal manner. For example, the display interface 310 may cover a part of a previous display interface.

It should be further understood that the following describes, with reference to specific embodiments, an implementation in which the electronic device 300 obtains the device connection information by decoding the annular pattern. Details are not described herein.

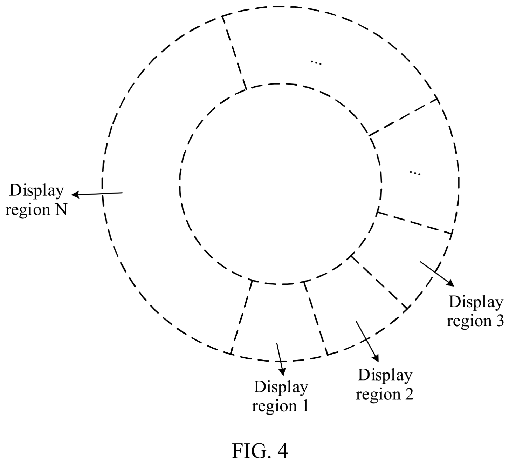

The following describes, with reference to FIG. 4 to FIG. 7, a technical solution in which an electronic device encodes a connection pairing code in an annular pattern in embodiments of this application.

For example, FIG. 4 is a diagram in which the electronic device performs region division on the annular pattern according to an embodiment of this application. As shown in FIG. 4, the electronic device may divide the annular pattern into n display regions in a preset order: a display region 1, a display region 2, a display region 3, ..., and a display region N, where N is greater than or equal to 6.

The electronic device may separately encode 6 digits of the connection pairing code in the N display regions in the preset order, where one digit is encoded in each display region.

For ease of description, an example in which N is 6 and the 6-digit connection pairing code is "318031" is used for description.

For example, the electronic device encodes a 1st digit "3" in the display region 1, encodes a 2nd digit "1" in the display region 2, encodes a 3rd digit "8" in the display region 3, encodes a 4th digit "0" in the display region 4, encodes a 5th digit "3" in the display region 5, and encodes a 6th digit "1" in the display region 6.

In some cases, the electronic device may further perform redundancy encoding on the connection pairing code during encoding, so that when some regions in the region 1 to the region n cannot be identified by a peer device, the peer device can still successfully obtain the connection pairing code, thereby improving a possibility of successful decoding by the peer device.

For example, N is 12. One connection pairing code "318031" is encoded in the display region 1 to the display region 6, and another same connection pairing code "318031" is encoded in the display region 7 to the display region 12.

In another example, the electronic device may alternatively encode more connection pairing codes. This is not limited in embodiments of this application. This redundant encoding manner can improve the possibility of successful decoding by the peer device.

It should be understood that the electronic device may be the foregoing electronic device 200.

In another example, still refer to FIG. 4. Sizes of the N display regions are not limited in embodiments of this application. In some examples, the sizes of the N display regions may be the same, or the sizes of the N display regions may be different.

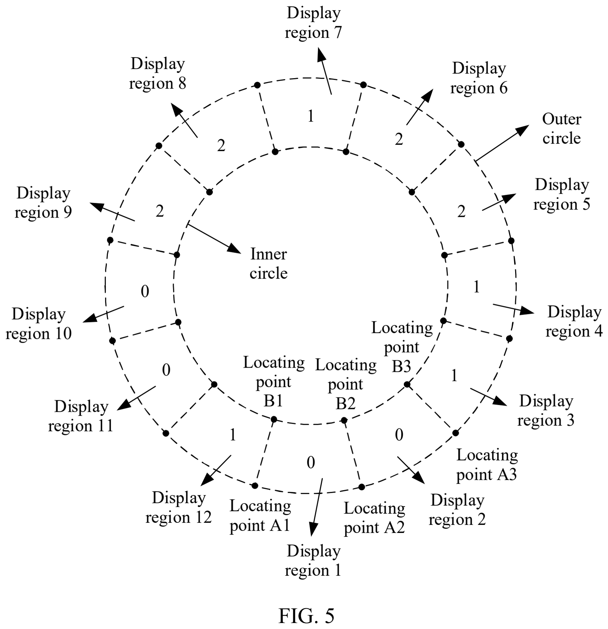

For example, the electronic device evenly divides the annular pattern into 12 same display regions. The following describes the technical solution with reference to FIG. 5.

FIG. 5 is another diagram in which the electronic device performs region division on the annular pattern according to an embodiment of this application. As shown in FIG. 5, the electronic device may evenly divide the annular pattern into 12 display regions: a display region 1, a display region 2, ..., and a display region 12.

For example, each display region may be located by using one locating structure. The locating structure may include several locating points.

An example in which the locating structure includes four locating points is used for description. For the display region 1, the locating structure may include two external locating points and two internal locating points. The external locating points are a locating point A1 and a locating point A2, and the internal locating points are a locating point B1 and a locating point B2.

It may be understood that, as shown in FIG. 5, external locating points of locating structures of all the display regions are distributed on a same outer circle, internal locating points of locating structures of all the display regions are distributed on a same inner circle, and the outer circle and the inner circle have a same circle center.

In some examples, adjacent display regions may share two of the four locating points. For example, the adjacent display region 1 and display region 2 may share one external locating point A2 and one internal locating point B2. In another example, adjacent display regions may share no locating point.

In another example, the locating structure may alternatively include two locating points, the two locating points may be distributed at a diagonal of the display region, and the two locating points may include one external locating point and one internal locating point. For example, for the display region 1, the locating structure may include a locating point A1 and a locating point B2, or the locating structure may include a locating point A2 and a locating point B1. It should be further understood that, in this embodiment of this application, the electronic device may further divide the 12 display regions into a plurality of encoding regions. For example, as shown in FIG. 5, the display region 1 and the display region 2 may be an encoding region 0, the display region 3 and the display region 4 may be an encoding region 1, and the display region 5 and the display region 6 may be an encoding region 2.

A 1st digit in the connection pairing code is encoded in the display region 1, a 2nd digit in the connection pairing code is encoded in the display region 2, a 3rd digit in the connection pairing code is encoded in the display region 3, a 4th digit in the connection pairing code is encoded in the display region 4, a 5th digit in the connection pairing code is encoded in the display region 5, and a 6th digit in the connection pairing code is encoded in the display region 6.

It should be understood that different encoding regions may correspond to different encoding manners, and different encoding manners have different code tables. In other words, the encoding region 0 has a code table, the encoding region 1 has a code table, and the encoding region 2 has a code table. Based on the code table, the electronic device may implement data encoding and decoding.

Still refer to FIG. 5. The display region 7 may be the encoding region 1, and is encoded with the 4th digit in the connection pairing code. The display region 8 and the display region 9 are the encoding region 2, the 5th digit in the connection pairing code is encoded in the display region 8, and the 6th digit in the connection pairing code is encoded in the display region 9. The display region 10 and the display region 11 are the encoding region 0, the 1st digit in the connection pairing code is encoded in the display region 10, and the 2nd digit in the connection pairing code is encoded in the display region 11. The display region 12 may be the encoding region 1, and is encoded with the 3rd digit in the connection pairing code.

In this way, in the example shown in FIG. 5, an order of the encoding regions of the annular pattern is "001122122001" sequentially from the display region 1 to the display region 12, and corresponding sequence numbers in the connection pairing code are "123456456123". For example, if the connection pairing code is "318031", digits sequentially encoded in the display region 1 to the display region 12 are "318031031318". This redundancy encoding manner can improve a possibility of successfully obtaining the correct connection pairing code by a peer device.

It should be understood that, in another example, the order of the encoding regions may alternatively be another order, or an order of the sequence numbers in the connection pairing code may alternatively be another order. This is not limited in embodiments of this application.

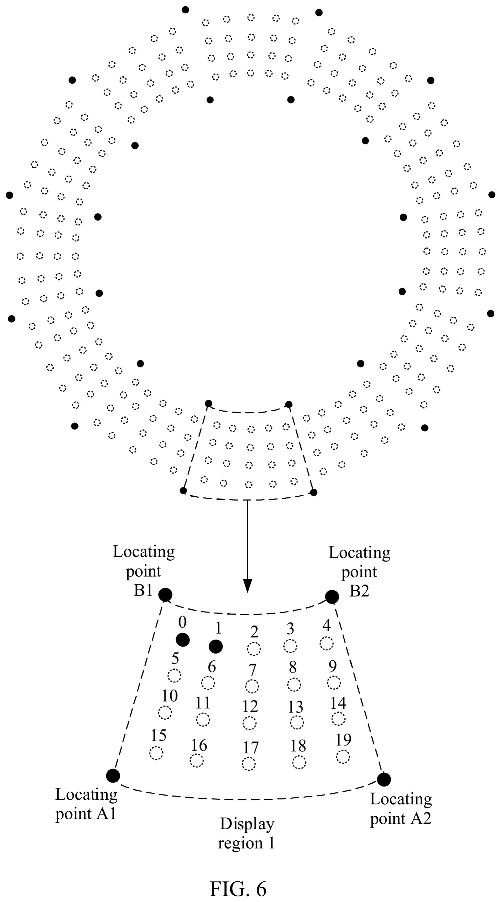

In some cases, the display region determined based on the locating structure may include several information points. The electronic device may encode different digits based on different distribution manners of the information points. The following describes a distribution manner of the information points in this application with reference to FIG. 6. For example, FIG. 6 is a diagram of possible distribution of the information points according to an embodiment of this application. As shown in FIG. 6, each display region may include a total of a*b information points that may be distributed in a rows and b columns.

For ease of description, in this embodiment of this application, an example in which a is 4 and b is 5, that is, each display region includes 20 information points that may be distributed is used for description.

For example, the display region 1 includes four locating points and 20 information points that may be distributed, and numbers of the 20 information points that may be distributed are sequentially 0 to 19. As shown in FIG. 6, a number of an information point closest to the internal locating point B1 in the information points is 0, and numbers of other information points are sequentially arranged in a row sequence.

It should be understood that a specific order of numbering the information points is not limited in embodiments of this application. In another example, an order of numbering the information points may alternatively be opposite to the manner in FIG. 6. For example, a number of an information point closest to the internal locating point B1 in the information points is 19, and numbers of other information points are sequentially arranged in a row sequence.

It should be understood that, in this embodiment of this application, the information points appearing at different locations in the foregoing numbers represent different encoded numbers.

For example, Table 1 shows a code table of a connection pairing code including a plurality of encoding regions. In Table 1, the encoding regions include an encoding region 0, an encoding region 1, and an encoding region 2, each encoding region corresponds to encoded data 0 to 9, and numbers corresponding to possible information points corresponding to each piece of encoded data are 0 to 19.

Table 1

| Encoding region | Encoded data | Number corresponding to an information point | | | | | | | | | | | | | | | | | | | |
| --- | --- | 0 | 1 | 2 | 3 | 4 | 5 | 6 | 7 | 8 | 9 | 10 | 11 | 12 | 13 | 14 | 15 | 16 | 17 | 18 | 19 |
| 0 | 0 | 1 | 1 | 0 | 0 | 0 | 0 | 0 | 0 | 0 | 0 | 0 | 0 | 0 | 0 | 0 | 0 | 0 | 0 | 0 | 0 |
| | 1 | 0 | 0 | 1 | 1 | 0 | 0 | 0 | 0 | 0 | 0 | 0 | 0 | 0 | 0 | 0 | 0 | 0 | 0 | 0 | 0 |
| | 2 | 0 | 0 | 0 | 0 | 1 | 1 | 0 | 0 | 0 | 0 | 0 | 0 | 0 | 0 | 0 | 0 | 0 | 0 | 0 | 0 |
| | 3 | 0 | 0 | 0 | 0 | 0 | 0 | 1 | 1 | 0 | 0 | 0 | 0 | 0 | 0 | 0 | 0 | 0 | 0 | 0 | 0 |
| | 4 | 0 | 0 | 0 | 0 | 0 | 0 | 0 | 0 | 1 | 1 | 0 | 0 | 0 | 0 | 0 | 0 | 0 | 0 | 0 | 0 |
| | 5 | 0 | 0 | 0 | 0 | 0 | 0 | 0 | 0 | 0 | 0 | 0 | 1 | 1 | 0 | 0 | 0 | 0 | 0 | 0 | 0 |
| | 6 | 0 | 0 | 0 | 0 | 0 | 0 | 0 | 0 | 0 | 0 | 0 | 0 | 0 | 1 | 1 | 0 | 0 | 0 | 0 | 0 |
| | 7 | 0 | 0 | 0 | 0 | 0 | 0 | 0 | 0 | 0 | 0 | 0 | 0 | 0 | 0 | 0 | 1 | 1 | 0 | 0 | 0 |
| | 8 | 0 | 0 | 0 | 0 | 0 | 0 | 0 | 0 | 0 | 0 | 0 | 0 | 0 | 0 | 0 | 0 | 0 | 1 | 1 | 0 |
| | 9 | 0 | 0 | 0 | 0 | 0 | 0 | 0 | 0 | 0 | 0 | 0 | 0 | 0 | 0 | 0 | 0 | 0 | 0 | 1 | 1 |
| 1 | 0 | 1 | 0 | 1 | 0 | 0 | 0 | 0 | 0 | 0 | 0 | 0 | 0 | 0 | 0 | 0 | 0 | 0 | 0 | 0 | 0 |
| | 1 | 0 | 1 | 0 | 1 | 0 | 0 | 0 | 0 | 0 | 0 | 0 | 0 | 0 | 0 | 0 | 0 | 0 | 0 | 0 | 0 |
| | 2 | 0 | 0 | 0 | 0 | 1 | 0 | 1 | 0 | 0 | 0 | 0 | 0 | 0 | 0 | 0 | 0 | 0 | 0 | 0 | 0 |
| | 3 | 0 | 0 | 0 | 0 | 0 | 0 | 1 | 0 | 1 | 0 | 0 | 0 | 0 | 0 | 0 | 0 | 0 | 0 | 0 | 0 |
| | 4 | 0 | 0 | 0 | 0 | 0 | 0 | 0 | 0 | 0 | 1 | 0 | 1 | 0 | 0 | 0 | 0 | 0 | 0 | 0 | 0 |
| | 5 | 0 | 0 | 0 | 0 | 0 | 0 | 0 | 0 | 0 | 0 | 1 | 0 | 1 | 0 | 0 | 0 | 0 | 0 | 0 | 0 |
| | 6 | 0 | 0 | 0 | 0 | 0 | 0 | 0 | 0 | 0 | 0 | 0 | 0 | 0 | 1 | 0 | 1 | 0 | 0 | 0 | 0 |
| | 7 | 0 | 0 | 0 | 0 | 0 | 0 | 0 | 0 | 0 | 0 | 0 | 0 | 0 | 0 | 1 | 0 | 1 | 0 | 0 | 0 |
| | 8 | 0 | 0 | 0 | 0 | 0 | 0 | 0 | 0 | 0 | 0 | 0 | 0 | 0 | 0 | 0 | 0 | 1 | 0 | 1 | 0 |
| | 9 | 0 | 0 | 0 | 0 | 0 | 0 | 0 | 0 | 0 | 0 | 0 | 0 | 0 | 0 | 0 | 0 | 0 | 1 | 0 | 1 |
| 2 | 0 | 1 | 0 | 0 | 0 | 0 | 1 | 0 | 0 | 0 | 0 | 0 | 0 | 0 | 0 | 0 | 0 | 0 | 0 | 0 | 0 |
| | 1 | 0 | 1 | 0 | 0 | 0 | 0 | 1 | 0 | 0 | 0 | 0 | 0 | 0 | 0 | 0 | 0 | 0 | 0 | 0 | 0 |
| | 2 | 0 | 0 | 1 | 0 | 0 | 0 | 0 | 1 | 0 | 0 | 0 | 0 | 0 | 0 | 0 | 0 | 0 | 0 | 0 | 0 |
| | 3 | 0 | 0 | 0 | 1 | 0 | 0 | 0 | 0 | 1 | 0 | 0 | 0 | 0 | 0 | 0 | 0 | 0 | 0 | 0 | 0 |
| | 4 | 0 | 0 | 0 | 0 | 1 | 0 | 0 | 0 | 0 | 1 | 0 | 0 | 0 | 0 | 0 | 0 | 0 | 0 | 0 | 0 |
| | 5 | 0 | 0 | 0 | 0 | 0 | 0 | 0 | 0 | 0 | 0 | 1 | 0 | 0 | 0 | 0 | 1 | 0 | 0 | 0 | 0 |
| | 6 | 0 | 0 | 0 | 0 | 0 | 0 | 0 | 0 | 0 | 0 | 0 | 1 | 0 | 0 | 0 | 0 | 1 | 0 | 0 | 0 |
| | 7 | 0 | 0 | 0 | 0 | 0 | 0 | 0 | 0 | 0 | 0 | 0 | 0 | 1 | 0 | 0 | 0 | 0 | 1 | 0 | 0 |
| | 8 | 0 | 0 | 0 | 0 | 0 | 0 | 0 | 0 | 0 | 0 | 0 | 0 | 0 | 1 | 0 | 0 | 0 | 0 | 1 | 0 |
| | 9 | 0 | 0 | 0 | 0 | 0 | 0 | 0 | 0 | 0 | 0 | 0 | 0 | 0 | 0 | 1 | 0 | 0 | 0 | 0 | 1 |

It may be understood that sequence numbers of the encoded data in Table 1 may be 0 to 29, where the encoding region 0 corresponds to sequence numbers 0 to 9, the encoding region 1 corresponds to sequence numbers 10 to 19, and the encoding region 2 corresponds to sequence numbers 20 to 29.

The electronic device may generate, based on Table 1, information points at corresponding locations in different display regions based on digits that need to be transmitted. A value of each information point may be 1 or 0, where the value 1 indicates that there is one information point at the location, and the value 0 indicates that there is no information point at the location.

Distribution in an annular region in FIG. 6 is used as an example. The display region 1 belongs to the encoding region 0, and the 1st digit in the connection pairing code is "0". Based on the code table corresponding to the encoding region 0 in Table 1, it may be determined that values of information points numbered "0" and "1" corresponding to the encoded data "0" are 1, and values of remaining information points are 0.

For an encoding result, refer to FIG. 6. Solid circles are displayed at information points numbered 0 and 1 in the display region 1, and hollow circles are displayed at remaining locations. In other words, a specific graph may be displayed in a first manner at a location having an information point, and a specific graph may be displayed in a second manner different from the first manner at another location. In another example, solid circles are displayed at information points numbered 0 and 1 in the display region 1, and nothing is displayed at remaining locations. In other words, the display region 1 includes only specific graphs displayed at the information points numbered 0 and 1.

For another example, if the 1st digit in the connection pairing code is "1", based on the code table corresponding to the encoding region 0 in Table 1, it may be determined that values of information points that are numbered "2" and "3" and that correspond to the encoded data "1" are 1, and values of remaining information points are 0. The encoding result is not shown in the figure, and may be deduced by analogy with reference to the example in FIG. 6. For example, solid circles are displayed at the information points numbered 2 and 3 in the display region 1, and hollow circles are displayed at remaining locations.

It should be understood that, for another digit in the connection pairing code, the same manner may be used to complete an encoding process. Details are not described herein again.

It should be understood that, for ease of illustration, in FIG. 6, an example in which the solid circle of the information point is black is used for description. In another example, a color of the information point may alternatively be another color, for example, yellow, blue, or gray. This is not limited in embodiments of this application.

It should be further understood that a shape of the information point is not limited in embodiments of this application. In another example, the information point may alternatively be a rectangle, a triangle, or in another irregular shape.

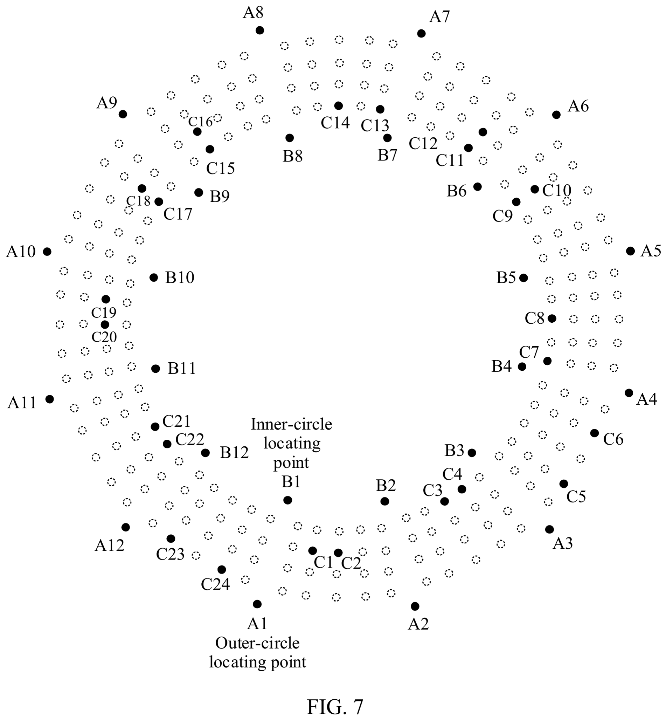

In some cases, to make the locating points and the encoded information points more concealed and not easily visible to a user, in this embodiment of this application, the electronic device may use random colors when generating the locating point and the information point. The following describes the technical solution with reference to FIG. 7.

For example, FIG. 7 is a diagram of particle points included in an annular pattern according to an embodiment of this application. As shown in FIG. 7, the particle points may include locating points and information points.

The locating points may include 12 outer-circle locating points and 12 inner-circle locating points. The outer-circle locating points are A1, A2, A3, ..., and A12 respectively, and the inner-circle locating points are B1, B2, B3, ..., and B12 respectively.

Each display region may include two information points, and there are 24 information points in total. Numbers of the information points are sequentially C1, C2, C3, ..., and C12 from the display region 1 to the display region 12.

When the electronic device displays the particle points, in a same frame of image, the 12 outer-circle locating points A1, A2, A3, ..., and A12 each are cyclically displayed in an order of a first color, a second color, and a third color, the 12 outer-circle locating points B1, B2, B3, ..., and B12 each are cyclically displayed in an order of the second color, the third color, and the first color, and the first color C1, C2, C3, ..., and C12 of the 24 information points each are cyclically displayed in an order of the third color, the first color, and the second color. The first color, the second color, and the third color are different from each other.

For example, the first color is yellow, the second color is blue, and the third color is gray. In the same frame of image, A1 is displayed in yellow, A2 is displayed in blue, A3 is displayed in gray, ..., A10 is displayed in yellow, A11 is displayed in blue, and A12 is displayed in gray. B1 is displayed in blue, B2 is displayed in gray, B3 is displayed in yellow, ..., B10 is displayed in blue, B11 is displayed in gray, and B12 is displayed in yellow. C1 is displayed in gray, C2 is displayed in yellow, C3 is displayed in blue, ..., C22 is displayed in gray, C23 is displayed in yellow, and C24 is displayed in blue.

In another example, in the same frame of image, the locating points may be displayed in the foregoing display manner, but the information points in the display regions 1 to 12 each are cyclically displayed in an order of the third color, the first color, and the second color. The first color, the second color, and the third color are different from each other. For example, the first color is yellow, the second color is blue, and the third color is gray. In this case, information points C1 and C2 in the display region 1 are displayed in gray, information points C3 and C4 in the display region 2 are displayed in yellow, information points C5 and C6 in the display region 3 are displayed in blue, ..., information points C19 and C20 in the display region 10 are displayed in gray, information points C21 and C22 in the display region 11 are displayed in yellow, and information points C23 and C24 in the display region 12 are displayed in blue. It should be understood that the first color, the second color, and the third color may alternatively be other colors. This is not limited in embodiments of this application.

It should be understood that, when displaying the particle points, the electronic device may further display other particle points that do not include information. Refer to FIG. 3(a) above. The display interface 210 may be a frame of image displayed by the electronic device. The locating points, the information points, and other particle points that do not include information are concealed in the annular pattern in the image, and the plurality of particle points are aggregated to form a ring.

In this way, the outer-circle locating point, the inner-circle locating point, and the information point each are cyclically displayed in different colors, so that the particle points can be better concealed in the image, and a display effect that the particle points are not perceived by naked eyes of the user is achieved.

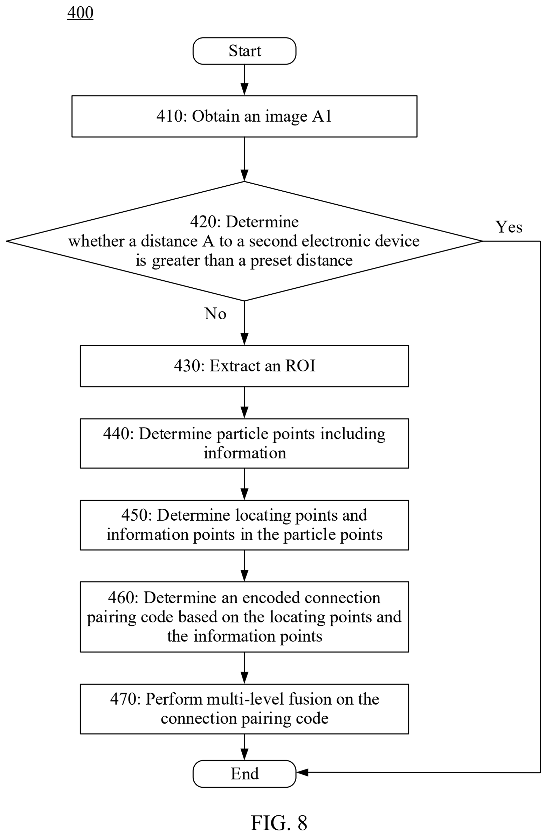

The foregoing describes the encoding process of the electronic device with reference to FIG. 4 to FIG. 7. In this embodiment of this application, after the electronic device encodes the connection pairing code, a peer electronic device may use a camera lens to photograph or scan the display interface on which the electronic device encodes the connection pairing code, and decode an obtained image, to determine the encoded connection pairing code, and establish a connection relationship with the electronic device based on the connection pairing code. The following describes a decoding process of the peer electronic device in embodiments of this application with reference to FIG. 8 to FIG. 24.

For example, FIG. 8 is a schematic flowchart of a decoding method according to an embodiment of this application. As shown in FIG. 8, a method 400 may include step 410 to step 470.

410: A first electronic device obtains an image A1.

For example, the first electronic device may photograph, through a camera, a display interface that is of the second electronic device and that is used for a device connection, to obtain the image A1. It should be understood that the image A1 may be the display interface 210 of the electronic device 200 described above.

It should be understood that the first electronic device may be the electronic device 300 described above, and the second electronic device may be the electronic device 200 described above.

420: The first electronic device determines whether a distance A to the second electronic device is greater than a preset distance.

In some examples, when the first electronic device determines that the distance A to the second electronic device is greater than the preset distance, it may be understood that the distance between the first electronic device and the second electronic device is excessively long. In this case, the first electronic device may not perform the process in this embodiment of this application.

It should be understood that an execution sequence of steps 410 and 420 is not limited in embodiments of this application. In another example, step 410 may alternatively be performed after step 420, or step 410 and step 420 may be simultaneously performed.

In some examples, when determining that the distance A to the second electronic device is less than or equal to the preset distance, the first electronic device may continue to perform step 430 in this embodiment of this application. It should be understood that a specific value of the preset distance is not limited in embodiments of this application. For example, the preset distance is 50 cm or 60 cm.

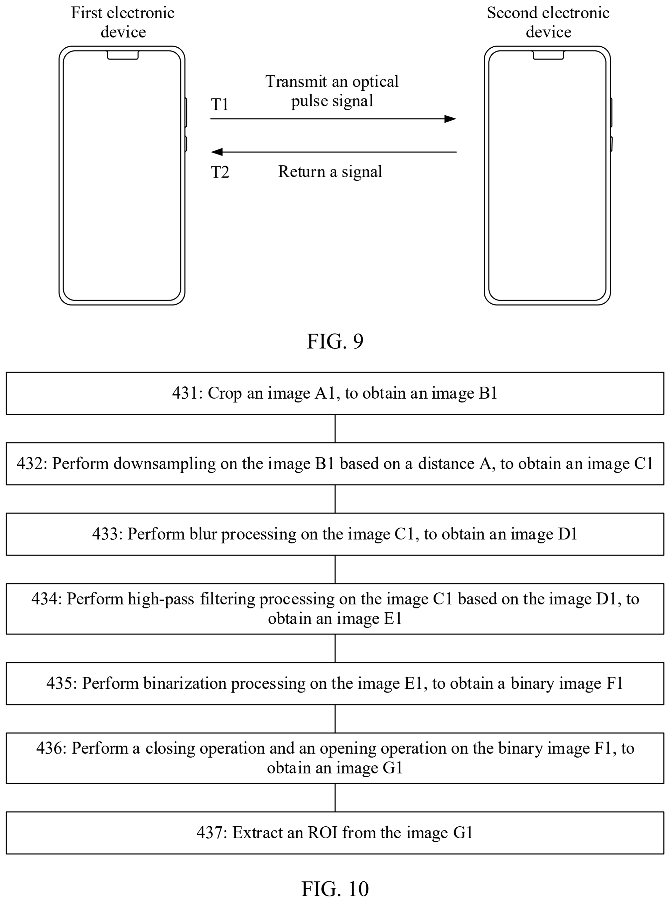

For example, the first electronic device may determine the distance to the second electronic device in a depth of time of flight (depth of time of flight, DToF) manner. FIG. 9 is a diagram of determining the distance according to an embodiment of this application.

As shown in FIG. 9, when measuring the distance to the second electronic device, the first electronic device may transmit an optical pulse signal at a moment T1. The optical pulse signal is reflected back after encountering the second electronic device. It is assumed that the first electronic device receives a reflected signal at a moment T2. In this case, the distance between the first electronic device and the second electronic device may be represented by the following formula:

$$d = \frac{c\Delta t}{2}$$

Herein, d represents the distance between the first electronic device and the second electronic device; c represents a speed of light in a medium; and $\Delta t$ represents a time difference between transmitting the optical pulse signal and receiving a returned signal, and is T2-T1 herein.

For example, the first electronic device may include a DToF sensor, and transmit the optical pulse signal through the DToF sensor. For example, a carrier of the optical pulse signal may be laser light or infrared light.

In another example, the first electronic device may alternatively determine the distance to the second electronic device in a camera ranging manner. This is not limited in embodiments of this application.

In some examples, the first electronic device may alternatively determine the distance to the second electronic device by using a size of an annular region in the obtained image A1.

For example, the first electronic device may include a correspondence between a size of an annular region and a distance. When obtaining the image A1, the first electronic device may determine the corresponding distance based on the size of the annular region in the image A1.

In another example, when the first electronic device determines that the distance to the second electronic device is greater than the preset distance, the first electronic device may further zoom in the image A1. For example, after the first electronic device zooms in the image A1, the annular region in the image A1 is zoomed in by X times, so that a distance corresponding to the zoomed-in annular region is less than or equal to the preset distance.

Further, when the first electronic device still fails to perform decoding after zooming in the annular region by a preset rate, prompt information 1 may be displayed, and the prompt information 1 indicates the user to shorten the distance between the first electronic device and the second electronic device. For example, the prompt information 1 may include text content "Place the annular pattern in the viewfinder" or "Approach the new device and place the pattern completely in the scan frame". It should be understood that specific text content in the prompt information 1 is not limited in embodiments of this application.

In another example, when camera performance of the first electronic device is not high, zooming in the image A1 easily causes low quality of a zoomed-in image, and affects a decoding result. In this case, when the first electronic device determines that the distance to the second electronic device is greater than the preset distance, the first electronic device may alternatively directly display the prompt information 1.

In another example, when the first electronic device determines that the distance to the second electronic device is greater than the preset distance, the first electronic device may alternatively directly display the prompt information 1.

430: The first electronic device extracts a region of interest ROI from the image A1.

It should be understood that the ROI is a region that includes locating points and information points in the image A1. For example, as shown in FIG. 3(a), the ROI is a region including the annular pattern 211.

In this embodiment of this application, the first electronic device may extract the region of interest ROI from the image A1, to facilitate subsequent processing of the ROI, so as to obtain the locating points and the information points that are encoded in the ROI.

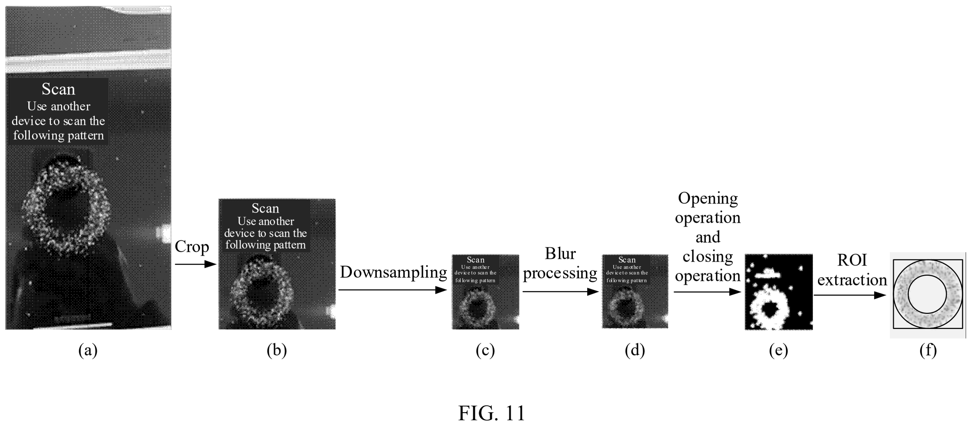

Refer to FIG. 10 and FIG. 11. FIG. 10 is a schematic flowchart of extracting the ROI according to an embodiment of this application. FIG. 11 is a diagram of extracting the ROI according to an embodiment of this application.

As shown in FIG. 10, step 430 may include at least step 431 to step 436.

431: The first electronic device crops the image A1, to obtain an image B1.

Because there is a specific distance between the first electronic device and the second electronic device, when the first electronic device photographs the display interface that is displayed by the second electronic device and that is used for the device connection, the obtained image A1 includes not only the display interface of the second electronic device, but also another region like a frame of the second electronic device. If the first electronic device processes the entire image A1, a decoding workload of the first electronic device is increased. Therefore, step 431 may be understood as that the first electronic device pre-crops the image A1, to roughly obtain the image B1 including the annular region, where the annular region is the region encoded with the locating points and the information points. The following describes, with reference to FIG. 11, a technical solution in which the first electronic device crops the image A1 to obtain the image B1.

As shown in FIG. 11, it is assumed that a length of the image A1 is w and a width of the image A1 is h. In this case, after the image A1 is cropped, a length and a width of the obtained image B1 are $w' = w - (\Delta w_0 + \Delta w_1)$ and $h' = h - (\Delta h_0 + \Delta h_1)$ respectively. Herein, $\Delta w_0$ is a cropped length of a left part of the image A1, $\Delta w_1$ is a cropped length of a right part of the image A1, $\Delta h_0$ is a cropped width of an upper part of the image A1, and $\Delta h_1$ is a cropped width of a lower part of the image A1. It should be understood that $\Delta w_0$, $\Delta w_1$, $\Delta h_0$, and $\Delta h_1$ may be specified values. Specific specified values are not limited in embodiments of this application.

For example, as shown in (a) and (b) in FIG. 11, (a) in FIG. 11 is the image A1, and after cropping the image A1, the first electronic device obtains the image B1 in (b) in FIG. 11.

432: The first electronic device performs downsampling on the image B1 based on the distance A, to obtain an image C1.

After obtaining the image B1, the first electronic device may perform downsampling processing on the image B1 based on the distance A determined in step 420, to obtain the image C1.

It should be understood that, after downsampling processing is performed on the image B1, a size of the obtained image C1 is less than a size of the image B1, but the image C1 still includes the annular pattern.

For example, for different distances, the first electronic device may set different downsampling rates. For example, when the distance A is less than a distance $d_0$, the first electronic device may set a downsampling rate to a rate 1; and when the distance A is greater than $d_0$ and less than or equal to $d_1$, the first electronic device may set the downsampling rate to a rate 2, where $d_0$ is less than $d_1$, and the rate 1 is greater than the rate 2.

It should be understood that specific values of the distances $d_0$ and $d_1$ are not limited in embodiments of this application. For example, $d_0$ may be 25 cm or 30 cm, and $d_1$ may be 55 cm or 60 cm. Specific values of the distance rate 1 and the rate 2 are not limited in embodiments of this application. For example, the rate 1 may be seven times or eight times, and the rate 2 may be three times or four times.

As shown in (c) in FIG. 11, after performing downsampling on the image B1, the first electronic device obtains the image C1 shown in (c) in FIG. 11, and the size of the image C1 is less than that of the image B1.

In this way, the first electronic device may dynamically set the downsampling rate based on different distances to the second electronic device, so that the first electronic device can obtain appropriate images C1 at different distances. 433: The first electronic device performs blur processing on the image C1, to obtain an image D1.

It should be understood that a specific means used by the first electronic device to perform blur processing on the image C1 is not limited in embodiments of this application.

For example, the first electronic device may perform Gaussian blur processing on the image C1, to obtain a high-frequency information part of the image C1. Performing blur processing on the image C1 can reduce noise and detail information in the image C1, so that subsequent processing performed by the first electronic device on the image is more accurate and stable.

As shown in (d) in FIG. 11, the first electronic device performs blur processing on the image C1, to obtain the image D1 shown in (d) in FIG. 11.

It should be understood that step 433 is an optional step. In some examples, step 433 may not be performed. This is not limited in embodiments of this application.

434: The first electronic device performs high-pass filtering processing on the image C1 based on the image D1, to obtain an image E1.

It should be understood that step 434 is an optional step. In some examples, step 434 may not be performed. This is not limited in embodiments of this application.

435: The first electronic device performs binarization processing on the image E1, to obtain a binary image F1.

For example, the first electronic device converts the image E1 from a red, green, and blue (red, green, blue, RGB) color space to a hue, saturation, and value (hue, saturation, value, HSV) color space, and performs binarization processing. For example, the first electronic device may separately set pixel gray-scale thresholds in an H domain, an S domain, and a V domain. When a pixel value of a pixel in the image E1 is greater than or equal to the gray-scale thresholds in the H domain, the S domain, and the V domain, a gray-scale value of the pixel is set to 255. When a pixel value of a pixel is less than the gray-scale threshold in the H domain, the S domain, or the V domain, the pixel value of the pixel is set to 0. Therefore, a gray-scale value of a pixel included in the image F1 is 0 or 255, and the binary image F1 visually presents a black-white effect.

436: The first electronic device performs a closing operation and an opening operation on the binary image F1, to obtain an image G1.

For example, the first electronic device may set kernel functions of the closing operation and the opening operation based on the distance A, so that the first electronic device can quickly perform the closing operation and the opening operation, to reduce a processing calculation amount of the first electronic device.

For example, the opening operation may be first eroding the image F1 and then dilating the image F1, so that discrete points form a connected component.

For example, eroding the image F1 may be understood as using a first rectangle (a width is m pixels, and a height is n pixels); for each pixel X in the image F1, placing the pixel X in a center of the first rectangle; traversing all other pixels covered by the first rectangle; and modifying a value of the pixel X to a minimum value of pixels covered by the first rectangle.

Dilating the image F1 may be understood as using a first rectangle (a width is m pixels, and a height is n pixels); for each pixel X in the image F1, placing the pixel X in a center of the first rectangle; traversing all other pixels covered by the first rectangle; and modifying a value of the pixel X to a maximum value of pixels covered by the first rectangle. For example, the closing operation may be first dilating the image F1 and then eroding the image F1, so that discrete points form a connected component.

The first rectangle may be dynamically set based on the distance A between the first electronic device and the second electronic device.

It should be understood that, as shown in (e) in FIG. 11, after the first electronic device performs the closing operation and the opening operation on the binary image, the obtained image G1 has a connected component including the particle points in the annular region.

437: The first electronic device extracts the ROI from the image G1.

For example, as shown in (f) in FIG. 11, the first electronic device may perform elliptic fitting processing on the connected component in the image G1, to obtain the ROI including the annular region.

It should be understood that a fitting manner is not limited in embodiments of this application. In another example, the first electronic device may alternatively perform fitting in another manner.

In this way, the first electronic device can successfully provide the ROI including the annular region, so that when subsequently decoding the image displayed by the second electronic device, decoding may be performed based on the ROI, to reduce a calculation workload of the first electronic device.

In another example, the first electronic device may alternatively analyze pixels in the image G1 to extract the ROI.

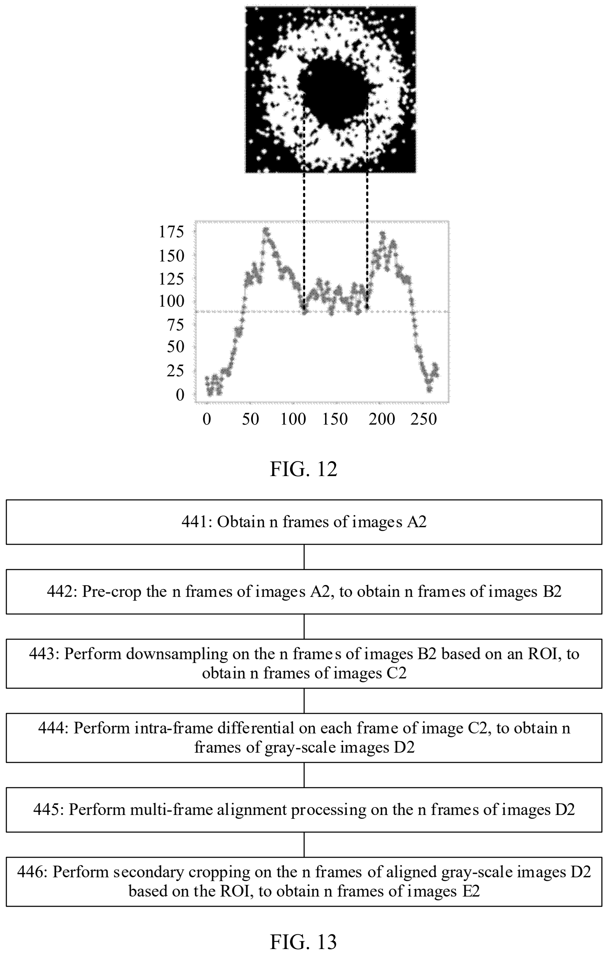

FIG. 12 is a diagram of analyzing the pixels in the image G1 to extract the ROI according to an embodiment of this application. For example, the first electronic device may accumulate pixel values in a same column of a pixel matrix in the image G1 on an x axis, and draw a line chart by using an accumulated value as a value on a y axis.

The line chart has a feature of double humps. A hump part in which a change is sharp is the annular region, a region between the humps and in which a change is smooth is an inner-diameter region of the annular region, and a middle of the inner-diameter region is an x-axis coordinate of a circle center. Because a ratio of an inner diameter to an outer diameter of the annular region is fixed, the outer diameter of the annular region can be determined.

Similarly, pixel values in a same column of the pixel matrix in the image G1 on the y axis are accumulated, and an accumulated value is used as a value on the x axis to draw a line chart, so that the inner diameter and the outer diameter of the annular region can also be determined, and a y-axis coordinate of the circle center can be determined. In this way, coordinates of the circle center and a location of the annular region can be determined, so that the ROI including the annular region can be successfully extracted.

In another example, the first electronic device may alternatively extract the ROI in another manner. For example, the first electronic device extracts, in a manner of clustering the particle points, the ROI including the annular region.

440: The first electronic device crops n frames of obtained images A2 based on the ROI, to obtain n frames of images E2 including the particle points.

In some examples, FIG. 13 is a diagram of determining an image including the particle points according to an embodiment of this application. As shown in FIG. 13, step 440 may include step 441 to step 446.

441: The first electronic device obtains the n frames of images A2.

For example, the first electronic device may obtain the n frames of images A2 through the camera lens.

It should be understood that the images A2 include the display interface that is of the second electronic device and that is used for the device connection. The n frames of images A2 may also include the image A1.

442: The first electronic device pre-crops the n frames of images A2, to obtain n frames of images B2.

For example, the first electronic device may pre-crop each of the n frames of images A2, to obtain the n frames of images B2.

It should be understood that, for a process in which the first electronic device pre-crops each frame of image A2, refer to the foregoing descriptions in step 431. For brevity, details are not described herein again.

443: The first electronic device performs downsampling on the n frames of images B2 based on the ROI, to obtain n frames of images C2.

In step 430, the first electronic device has obtained, by processing the image A1, the ROI including the annular region. Therefore, to set the downsampling rate more accurately, the first electronic device may perform downsampling on the n frames of images based on the ROI.

For example, as shown in (f) in FIG. 11, the ROI has a circumscribed rectangle. The first electronic device may perform downsampling on each of the n frames of images B2 based on a length of the circumscribed rectangle of the ROI.

An example in which the first electronic device performs downsampling on one of the n frames of images B2 is used for description. For example, when a larger one in the length and a width of the circumscribed rectangle of the ROI is greater than a preset value, the first electronic device performs downsampling on the image B2 by a factor of 2. When the larger one in the length and the width of the circumscribed rectangle of the ROI in an image obtained through downsampling by the factor of 2 is still greater than the preset value, downsampling continues to be performed by the factor of 2 until the larger one in the length and the width of the circumscribed rectangle of the ROI is less than or equal to the preset value, to obtain one frame of image C2.

It should be understood that a specific value of the preset value is not limited in embodiments of this application.

444: The first electronic device performs intra-frame differential on each frame of image C2, to obtain n frames of gray-scale images D2.

An example in which the first electronic device performs intra-frame differential on one of the n frames of images C2 is used for description.

The image C2 has RGB three channels. The first electronic device first performs RGB three-channel decomposition on the image C2 to obtain an R-channel image, a G-channel image, and a B-channel image, where corresponding values are respectively denoted as R1, G1, and B1.

In an example, the first electronic device may perform intra-frame differential processing by using a formula $D2=|(B1-R1)+(B1-G1)|$, to obtain the gray-scale image D2.

In another example, the first electronic device may perform intra-frame differential processing by using a formula $D2=|(G1-R1)+(G1-B1)|$, to obtain the gray-scale image D2.

In this way, intra-frame differential processing is performed on each frame of image C2, so that particle points included in the obtained gray-scale image are clearer. This helps the first electronic device obtain a connection pairing code encoded in the gray-scale image.

445: The first electronic device performs multi-frame alignment processing on the n frames of gray-scale images D2. An example in which n is 3 is used for description. The first electronic device may perform alignment processing on a previous frame of image of an intermediate image and a next frame of image of the intermediate image by using the intermediate image as a reference.

The first electronic device performs multi-frame alignment processing on the n frames of gray-scale images, so that impact of misplacement caused by jitter when the first electronic device obtains the image of the ROI can be reduced. It should be understood that step 445 is an optional step. In some examples, step 445 may not be performed.

446: The first electronic device performs secondary cropping on the n frames of aligned gray-scale images D2 based on the ROI, to obtain n frames of images E2.

An example in which the first electronic device performs secondary cropping on one of the n frames of gray-scale images D2 is used for description.

For example, when performing secondary cropping on the image D2, the first electronic device may crop the image D2 based on the ROI, so that the image E2 obtained through cropping has a size corresponding to the ROI. In this way, when the image E2 includes the annular region, the size of the image E2 can be reduced as much as possible, to further reduce a calculation amount of the first electronic device in subsequent image processing.

The image E2 includes locating points, information points, and possible clutter information that are encoded by the second electronic device.

450: The first electronic device determines locating points and information points in the n frames of images E2.

In some cases, the first electronic device may determine locating points and information points in each of the n frames of images E2. Alternatively, the first electronic device may determine locating points and information points in a plurality of frames of images in the n frames of images E2, and use the locating points and the information points in the plurality of frames of images as finally determined locating points and information points.

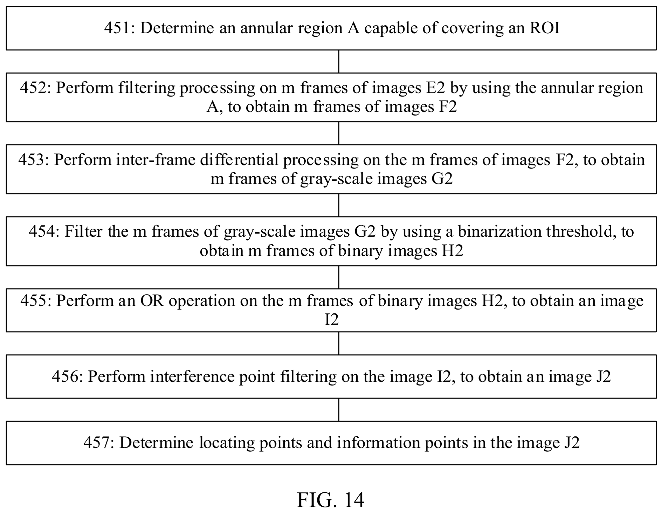

In some examples, FIG. 14 is a schematic flowchart of determining the locating points and the information points according to an embodiment of this application. As shown in FIG. 13, step 450 may include step 451 to step 457.

451: The first electronic device determines an annular region A capable of covering the ROI.

For example, the first electronic device has obtained the ROI in step 430. Therefore, in this step, the first electronic device may determine the annular region A capable of covering the ROI.

452: The first electronic device performs filtering processing on m frames of images E2 by using the annular region A, to obtain m frames of images F2.

Herein, m is less than n, and the m frames of images E2 may be a part of the n frames of images E2. For example, n is 5, and m is 3.

For example, the annular region A is a mask (mask). The first electronic device performs filtering processing on the m frames of images E2 by using the mask, to obtain particle points corresponding to a mask region, and particle points outside the mask region are filtered out.

In this way, the m frames of images F2 obtained by the first electronic device include the particle points in the annular region A, and a clutter beside is filtered out.

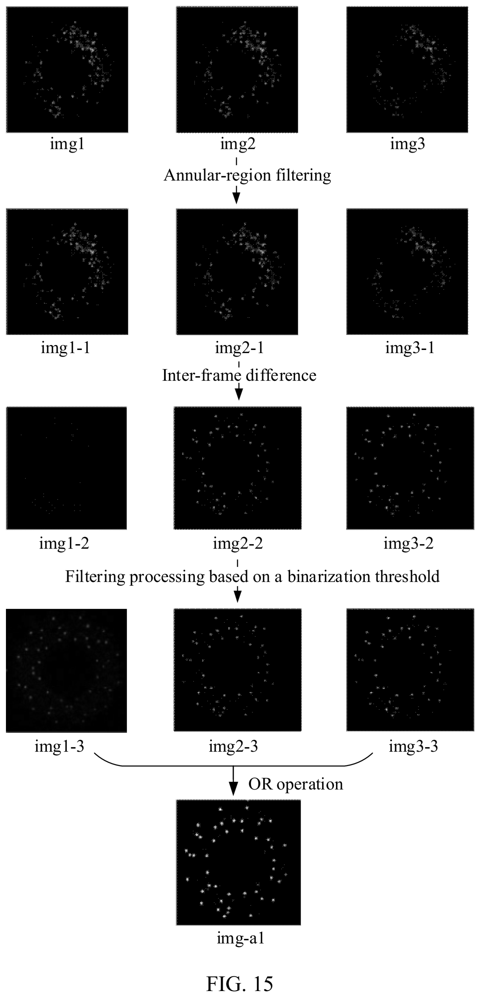

An example in which m is 3 is used for description. FIG. 15 is a diagram of a result of determining the locating points and the information points according to an embodiment of this application.

As shown in FIG. 15, three frames of images E2 are respectively img1, img2, and img3. After filtering img1, img2, and img3 by using the annular region A, the first electronic device obtains three frames of images F2, which are respectively img1-1, img2-1, and img3-1.

453: The first electronic device performs inter-frame differential on the m frames of images F2, to obtain m frames of gray-scale images G2.

For example, the first electronic device may separately perform pairwise differential processing on the m frames of images F2.

An example in which m is 3 is used to describe the inter-frame difference process. It is assumed that the three frames of images F2 are respectively F2-1, F2-2, and F2-3. The first electronic device may perform a difference operation on F2-1 and F2-1 to obtain a frame of gray-scale image. The first electronic device may perform a difference operation on F2-1 and F2-3 as an image to obtain a frame of gray-scale image. The first electronic device may perform a difference operation on F2-2 and F2-3 to obtain a frame of gray-scale image.

It should be understood that the difference operation may be understood as a process of obtaining, through subtraction, a difference between gray-scale values of corresponding pixels in two frames of images, and calculating an absolute value.

Still refer to FIG. 15. After performing inter-frame differential on the three frames of images img1-1, img2-1, and img3-1, the first electronic device obtains three frames of gray-scale images G2, which are respectively img1-2, img2-2, and img3-2.

In this way, through differential processing between a plurality of frames, a different part in the plurality of frames of images may be reserved. During encoding, the second electronic device cyclically displays the locating points and the information points in different colors, and a picture background and a clutter are the same. Therefore, the locating points and the information points in the image may be reserved as many as possible through differential processing, and a clutter part may be filtered out.

454: The first electronic device filters the m frames of gray-scale images G2 by using a binarization threshold, to obtain m frames of binary images H2.

An example in which the first electronic device filters one frame of gray-scale image G2 is used for description. In the gray-scale image G2, for a part whose pixel value is greater than or equal to the binarization threshold, a gray-scale value is set to 255, and for a part whose pixel value is less than the binarization threshold, the pixel value is set to 0. In this way, a binary image H2 may be obtained by traversing all pixels in the gray-scale image G2.

It should be understood that, the foregoing processing is performed on each of the m frames of gray-scale images G2, so that m frames of binary images H2 can be obtained.

Still refer to FIG. 15. The first electronic device filters the three frames of gray-scale images img1-2, img2-2, and img3-2 by using the binarization threshold, to obtain three frames of binary images H2, which are respectively img1-3, img2-3, and img2-3.

It should be understood that a specific value of the binarization threshold is not limited in embodiments of this application. The binarization threshold may be set by a developer according to experience, or may be determined by the first electronic device through image analysis.

455: The first electronic device performs an OR operation on the m frames of binary images H2, to obtain an image I2.

After the first electronic device performs the OR operation on the m frames of binary images H2, the image I2 includes all particle points in the m frames of binary images. In this way, the image I2 can include as many locating points and information points as possible, to improve a possibility of successful decoding by the first electronic device.

Still refer to FIG. 15. The first electronic device performs the OR operation on the three frames of binary images img1-3, img2-3, and img2-3, to obtain the image I2, namely, img-a1. The image I2 includes all particle points in the three frames of binary images img1-3, img2-3, and img2-3.

456: The first electronic device performs interference point filtering on the image I2, to obtain an image J2.

It should be understood that the first electronic device may further perform pixel fusion processing on the m frames of gray-scale images G2, to obtain a gray-scale image G2-1. In addition, the gray-scale image G2-1 is filtered by using an image I2, to filter out an interference point in the gray-scale image G2-1, to obtain a gray-scale image G2-a.

For example, the first electronic device may add the m frames of gray-scale images G2 pixel by pixel, to obtain the gray-scale image G2-1. The gray-scale image G2-1 is filtered by using the image I2 as a mask, to obtain the gray-scale image G2-a.

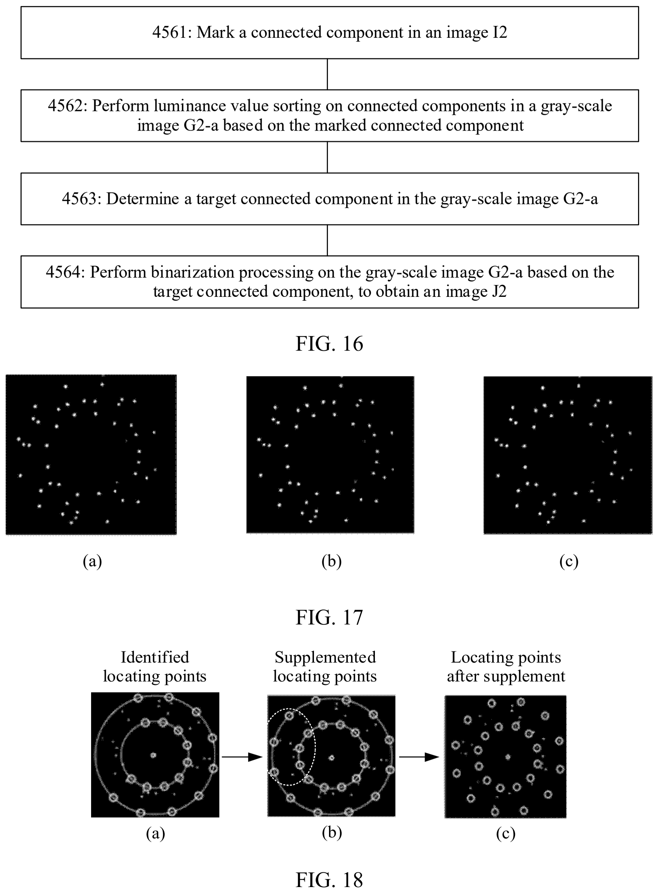

For example, FIG. 16 is a schematic flowchart of filtering the interference point according to an embodiment of this application. As shown in FIG. 16, step 456 may include at least step 4561 to step 4566.

4561: The first electronic device marks a connected component in the image I2.

For example, because the image I2 is a binary image, the first electronic device may mark a connected component including a pixel, to obtain a coordinate set of each connected component. In addition, the first electronic device may further determine other attributes of each connected component, such as an area and a center point.

4562: The first electronic device performs luminance value sorting on connected components in the gray-scale image G2-a based on the marked connected component.

For example, the first electronic device may determine, based on the coordinate set of the connected component marked in step 4561, a location of the connected component. Therefore, the first electronic device may perform luminance sorting on the connected components in the gray-scale image G2-a based on coordinate sets of the connected components.

For example, for each connected component, the first electronic device may add pixel values of all pixels in the connected component to obtain a luminance value of the connected component, and luminance values are sorted in descending order.

4563: The first electronic device determines a target connected component in the gray-scale image G2-a.

For example, the target connected component may be understood as a region that is determined by the first electronic device and that is of particle points (locating points or information points) including information.

A part with a large luminance value may have a large luminance change, and may affect a subsequent decoding process. Therefore, when the first electronic device determines that a quantity of connected components (or a quantity of luminance values) is less than or equal to a threshold (for example, 19), it indicates that a quantity of particle points including information is small, and the first electronic device may exit the decoding process.

When the quantity of luminance values is greater than the threshold, the first electronic device may start selection from a luminance value greater than the threshold.

For example, if the threshold is 19, the first electronic device may perform selection starting from a 20th sorted luminance value, to determine a corresponding target connected component.

It may be understood that a quantity of target connected components determined by the first electronic device is less than or equal to 48 (a sum of quantities of locating points and information points).

In an implementation, the first electronic device performs selection starting from the 20th luminance value, selects a maximum of 48 luminance values in descending order of luminance values, and uses a connected component corresponding to the selected luminance values as the target connected component.

Alternatively, the first electronic device performs selection starting from the 20th luminance value, selects first 48 luminance values in descending order of luminance values, and uses a connected component corresponding to the selected luminance values as the target connected component.

In another implementation, the first electronic device performs selection starting from the 20th luminance value, and selects a luminance value according to a principle that the luminance value is greater than a preset luminance value. For example, the first electronic device performs selection starting from the 20th luminance value. If first 45 luminance values are all greater than the preset luminance value, a connected component corresponding to the 45 luminance values is used as the target connected component.

4564: The first electronic device performs binarization processing on the gray-scale image G2-a based on the target connected component, to obtain the image J2.

For example, the first electronic device may set a pixel value in the target connected component in the gray-scale image G2-a to 255, and set a pixel value at a remaining location to 0, to obtain the binary image J2.

It may be understood that the first electronic device may determine a plurality of frames of binary images J2 from the n frames of images E2 in the foregoing manner. For example, n is 5, and m is 3. The first electronic device may obtain three frames of binary images J2 in a sliding window manner, which are respectively J2-1, J2-2, and J2-3. The first electronic device may further determine, for each of the images J2-1, J2-2, and J2-3, a product of a target luminance difference and the quantity of target connected components, and sort the images J2-1, J2-2, and J2-3 based on values of the products. An image with a larger product indicates that the image includes a larger quantity of particle points and a larger luminance difference, and therefore quality of the binary image is higher. This helps subsequent successful decoding of the binary image by the first electronic device.

The target luminance difference represents a largest luminance difference between two adjacent target connected components. Alternatively, a luminance difference between two adjacent target connected components is stored in a list, and a largest difference is m. The target luminance difference is a luminance difference corresponding to a largest subscript in luminance differences greater than 0.7*m in the list.

For example, FIG. 17 is a diagram of sorting based on the product of the target luminance difference and the quantity of target connected components according to an embodiment of this application. For example, the images J2-1, J2-2, and J2-3 are sorted in descending order by the products of the target luminance differences in the images J2-1, J2-2, and J2-3 and the quantity of target connected components. In this case, (a) in FIG. 17 corresponds to the image J2-1, (b) in FIG. 17 corresponds to the image J2-2, and (c) in FIG. 17 corresponds to the image J2-3.

It may be understood that the first electronic device may select an image with a largest product of a target luminance difference and the quantity of target connected components for recognition, to determine locating points and information points in the image.

457: The first electronic device determines locating points and information points in the image J2.

It should be understood that the first electronic device may further determine a plurality of frames of images J2 by using step 451 to step 457, and further determine locating points and information points in the plurality of frames of images J2. Alternatively, the first electronic device determines locating points and information points in one frame of image that is in the plurality of frames of images J2 and that has a largest quantity of particle points, or the first electronic device determines locating points and information points in one frame of image that is in the plurality of frames of images J2 and that has a largest quantity of particle points and a largest luminance difference.

For example, the first electronic device may first determine locating points in the image J2, and may determine each display region (for example, the display region 1 to the display region 12) by using the determined locating points.

For example, the first electronic device may determine coordinates of all the locating points by using the previously obtained coordinates of the circle center of the ROI, coordinates of all particle points in the image J2, and a geometric relationship of distribution of the locating points in the inner and outer circles. Then, the first electronic device separately performs elliptic fitting on inner-circle locating points and outer-circle locating points in the locating points, to determine accurate coordinates of the circle center. Therefore, the first electronic device may determine each display region based on the distribution of the locating points.

In some cases, there may be a phenomenon that some locating points in the image J2 are missing. The first electronic device may supplement the missing locating based on the geometric relationship of the locating point part. For example, FIG. 18 is a diagram of locating point supplementation according to an embodiment of this application.

(a) in FIG. 18 shows distribution of the locating points that is determined by the first electronic device based on the coordinates of the particle points in the image J2, and points shown by circles distributed on a circumference are locating points. Specifically, there are nine outer-circle locating points and nine inner-circle locating points, and three outer-circle locating points and three inner-circle locating points are missing. To supplement the missing locating points, the first electronic device may supplement the missing locating points based on coordinates of the already known locating points and distribution of the locating points.

For example, because all the locating points are symmetrically distributed around the circle center, the first electronic device may determine coordinates of the missing locating points by using this distribution relationship, to supplement the locating points. For example, as shown in (b) in FIG. 18, the first electronic device separately supplements three missing locating points in the inner-circle locating points and three missing locating points in the outer-circle locating points.

As shown in (c) in FIG. 18, after supplementing the missing locating points, the first electronic device may determine all the inner-circle locating points and outer-circle locating points.

In another example, the first electronic device may further determine the plurality of groups of images J2 by using step 451 to step 456. In step 457, the first electronic device may separately extract locating points and information points from the plurality of groups of images J2, so that a possibility that the first electronic device finds all the locating points and the information points can be improved.

460: The first electronic device determines the encoded connection pairing code based on the locating points and the information points.

It should be understood that the first electronic device may determine each display region based on the distribution of the locating points, and may determine an encoded digit based on distribution of the information points in each display region.

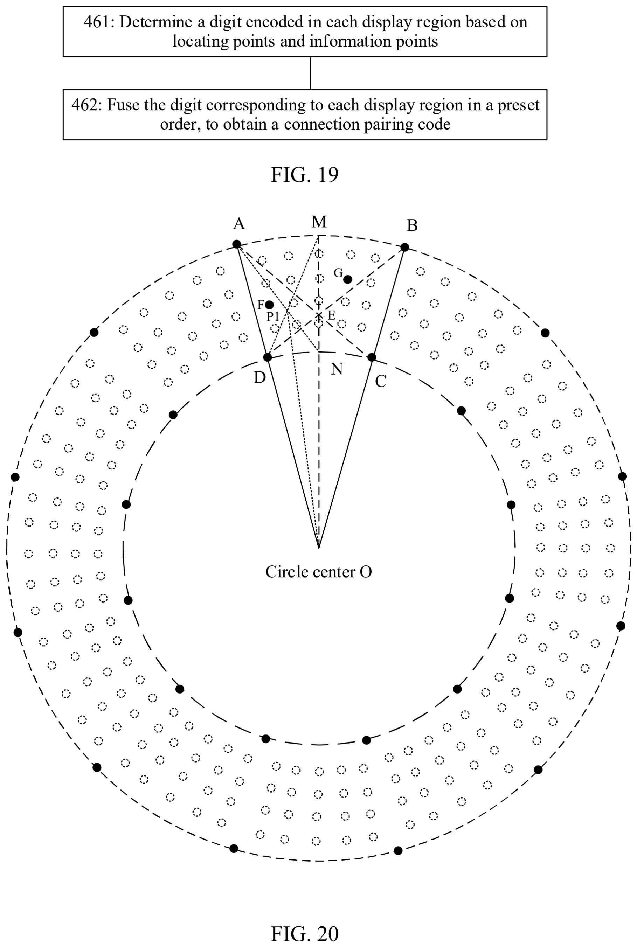

For example, FIG. 19 is a schematic flowchart of determining the connection pairing code based on the locating points and the information points according to an embodiment of this application. Step 460 may include step 461 and step 462.

461: The first electronic device determines a digit encoded in each display region based on the locating points and the information points.

For example, as shown in FIG. 5, the first electronic device may determine the display region 1 by using the outer-circle locating points A1 and A2 and the inner-circle locating points B1 and B2, and determine the display region 2 by using the outer-circle locating points A2 and A3 and the inner-circle locating points B2 and B3.

It should be understood that the first electronic device may determine the display region 3 to the display region 12 in a similar manner. Details are not described again.

In this embodiment of this application, after determining the display region, the first electronic device needs to further determine distribution of the information points in the display region. For example, as shown in FIG. 6, the first electronic device needs to further determine numbers of locations of information points in each display region, so that an encoded digit can be determined by querying Table 1.

An example in which the first electronic device determines an encoded digit in the display region 7 is used for description.

FIG. 20 is a diagram of determining the locations of the information points according to an embodiment of this application.

For ease of description, in the locating points in the display region 7, two outer-circle locating points are respectively named A and B, two inner-circle locating points are respectively named C and D, and the circle center of the annular region is O. It should be understood that the locating point A may be the locating point A8 described above, the locating point B may be the locating point A7 described above, the locating point C may be the locating point B7 described above, and the locating point D may be the locating point B8 described above.

For example, a process in which the first electronic device determines the locations of the information points may include steps S1 to S8.

S1: Determine an intersection point E of line segments AC and BD.

S2: Determine an intersection point M between a straight line on which OE is located and an arc on which AB is located and an intersection point N between the straight line on which OE is located and an arc on which CD is located. S3: Determine an intersection point P1 between line segments AN and DM and an intersection point P2 (not shown in the figure) between line segments CM and BN.

It is assumed that the information points are named F and G.

S4: Separately determine angles of polar coordinates of OA, OB, OE, OP1, OP2, OF and OG, to respectively obtain $\alpha_{OA}$, $\alpha_{OB}$, $\alpha_{OE}$, $\alpha_{OP1}$, $\alpha_{OP2}$, $\alpha_{OF}$ and $\alpha_{OG}$.

S5: Determine, based on an angle relationship between $\alpha_{OF}$, $\alpha_{OG}$, $\alpha_{OA}$, $\alpha_{OB}$, $\alpha_{OE}$, $\alpha_{OP1}$, and $\alpha_{OP2}$, a column in which the information point is located.

For example, a location of F is determined. An angle of a polar coordinate of each point is determined, so that a column in which the point F is located in the display region may be determined.

For example, if $\alpha_{OF}$ is between $\alpha_{OA}$ and $\alpha_{OP1}$, it may be determined that the point F is located in a column in which information points are numbered 4, 9, 14, and 19.

S6: Determine, based on a relationship between line segment lengths of line segments between the point F, the point G, and the locating point, a row in which the information point is located.

For example, the location of F is determined. Line segment lengths of a line segment FA and a line segment FD are determined, so that it may be determined that the point F is located in a row in which information points are numbered 5, 6, 7, 8, and 9.

S7: Determine a number of the information point.

For example, based on steps S5 and S6, it may be determined that a number of the point F is 9. The first electronic device may further determine, in the same manner, that a number of the point G is 11.

S8: Determine an encoded digit based on the numbers of the information points.

For example, the first electronic device may query Table 1 based on the numbers of the determined information points. Because the display region 7 belongs to the encoding region 1, the code table corresponding to the encoding region 1 in Table 1 is searched. The numbers of the information points are 9 and 11, that is, values corresponding to the numbers 9 and 11 in the corresponding code table are "1", and values at remaining locations are "0". It can be determined by querying Table 1 that the encoded digit is "5".

It should be understood that, for information points in another display region, the first electronic device may determine numbers of the information points in the another display region in the same manner, and determine a digit encoded in the display region.

In another example, after determining the numbers of the information points in the display region, the first electronic device may further obtain demodulation information corresponding to the display region, for example, " 00000000101000000000", where a value of a number of an information point is 1, and a value of a remaining number is 0. Then, the first electronic device compares the demodulation information "00000000101000000000" with Table 1, and may determine, based on a comparison result, that the display region belongs to the encoding region 1, and the encoded digit is "5".

It should be understood that the first electronic device may determine, in this manner, an encoding region and an encoded digit corresponding to a remaining display region.

In another example, after the first electronic device determines the binary image (for example, the image J2) that includes the locating points and the information points, the first electronic device may further filter the binary image by using an annular region B, to obtain all information points included in the binary image.

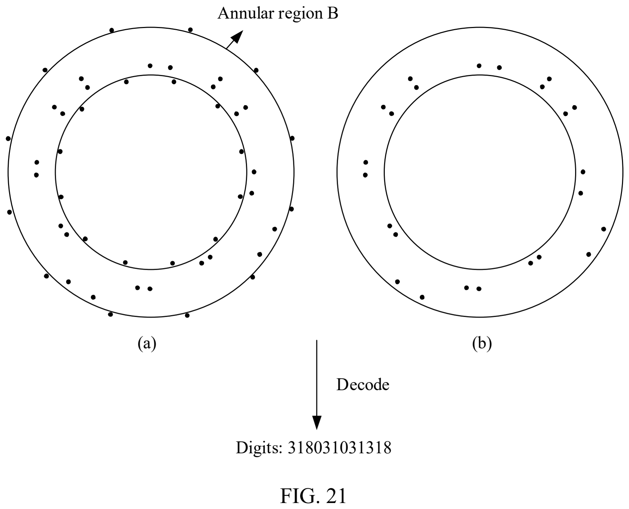

For example, FIG. 21 is a diagram of extracting the information points according to an embodiment of this application. As shown in (a) in FIG. 21, the first electronic device may filter the particle points by using the annular region B, to extract the information points included in the particle points.

For example, the annular region B may be a mask, and the mask may be obtained by dilating inner-circle locating points and eroding outer-circle locating points. For example, a radius s for the dilation and the erosion may be a preset radius.

For example, s may be represented by the following formula:

$$s = \frac{a}{50}$$

Herein, $a$ is a radius of a semi-major axis of the outer circle.

In another example, the radius s may alternatively be a specified fixed value. This is not limited in embodiments of this application.

As shown in (b) in FIG. 21, after the particle points are filtered by using the annular region B, the outer-circle locating points and the inner-circle locating points in the binary image are filtered out, and all the information points are reserved.

It should be understood that the first electronic device may determine sequence numbers of the information points in the foregoing manner, and determine, by querying Table 1, the digit encoded in the information points.

For example, the first electronic device determines that the encoded digits are respectively "318031031318".

462: The first electronic device fuses the digit encoded in each display region in a preset order, to obtain the connection pairing code.

For example, the first electronic device has determined, by using step 461, the digit encoded in each display region. For example, the first electronic device may fuse the digits encoded in the display regions in an order of the display region 1 to the display region 12 in FIG. 5, to obtain the connection pairing code.

For example, the digits that are encoded in the display region 1 to the display region 12 and that are determined by the first electronic device are respectively "318031031318". As shown in FIG. 5, because the display region 1 to the display region 6 are respectively encoded with the 1st digit to the 6th digit in the connection pairing code, it may be determined that the connection pairing code is "318031".

The second electronic device performs redundant encoding during encoding. For example, two same connection pairing codes are encoded in total in the display region 1 to the display region 12. Therefore, in some cases, after the first electronic device determines the display regions, if information points in some display regions are missing, the first electronic device may still successfully obtain the complete connection pairing code.

For example, all or some information points in the display region 2 are missing. Consequently, the first electronic device cannot determine the digit encoded in the display region 2. In this case, because the digit encoded in the display region 11 is the same as the digit encoded in the display region 2, the first electronic device may determine the digit encoded in the display region 11, so that the first electronic device may still determine the complete connection pairing code.

In another example, the first electronic device may alternatively determine the connection pairing code in the following manner.

As shown in Table 1, the encoding regions of the annular region in this embodiment of this application may include the encoding region 0, the encoding region 1, and the encoding region 2.

For example, a sequence of the encoding regions of the annular region is [0, 0, 1, 1, 2, 2, 1, 2, 2, 0, 0, 1], and an order of sequence numbers of the digits in the corresponding connection pairing code is [1, 2, 3, 4, 5, 6, 4, 5, 6, 1, 2, 3]. A 3rd encoding region 0 is a redundancy backup of a 1st encoding region 0 (the 1st encoded digit), a 4th encoding region 0 is a redundancy backup of a 2nd encoding region 0 (the 2nd digit), a 3rd encoding region 1 is a redundancy backup of a 1st encoding region 1 (the 3rd encoded digit), a 4th encoding region 1 is a redundancy backup of the 2nd encoding region 1 (the 4th encoded digit), a 3rd encoding region 2 is a redundancy backup of a 1st encoding region 2 (the 5th encoded digit), and a 4th encoding region 2 is a redundancy backup of a 2nd encoding region 2 (the 6th encoded digit). For example, the first electronic device determines numbers of the information points in each display region in the manner shown in FIG. 20, to obtain demodulation information of all the display regions, where the demodulation information of all the display regions is a 12*20 matrix. In addition, each piece of demodulation information is compared with Table 1, so that an encoding region corresponding to each piece of demodulation information and a corresponding encoded digit may be determined.

When no result is found in Table 1 for one piece of demodulation information, an encoding region to which the demodulation information belongs is the encoding region "3". In this way, when there is an encoding region 3 in a decoding result, it may be determined that a corresponding display region is not successfully decoded.

For example, the first electronic device compares the demodulation information of all the display regions with Table 1, and an obtained encoding region sequence is [1, 2, 2, 0, 0, 1, 0, 0, 1, 1, 2, 3]. The sequence of the encoding regions of the annular region encoded by the second electronic device is [0, 0, 1, 1, 2, 2, 1, 2, 0, 0, 1]. In this case, the first electronic device may perform cyclic shift processing on the encoding region sequence obtained through decoding, so that a sequence obtained through a cyclic shift is equal to the sequence of the encoding regions of the annular region encoded by the second electronic device.

Correspondingly, the first electronic device performs same cyclic shift processing on the corresponding digits, to obtain a correct order in the connection pairing code.

In this way, regardless of a manner in which the first electronic device obtains the annular region displayed by the second electronic device, the correct order in the connection pairing codes can be obtained through the cyclic shift, to improve a possibility of correct decoding by the first electronic device.

In another example, due to different photographing conditions, there may be a case in which information points in a display region are incomplete or redundant when the first electronic device performs decoding. In this case, the first electronic device may further perform error correction processing on the demodulation information, to obtain correct demodulation information.

In an example, if there is only one information point in the display region A, there is only one "1" in demodulation information that is of the display region A and that is obtained by the first electronic device through decoding, and the remaining is 0.

For example, the demodulation information of the display region A belonging to the encoding region 0 is [0, 0, 1, 0, 0, 0, 0, 0, 0, 0, 0, 0, 0, 0, 0, 0, 0, 0, 0, 0], and in comparison with correct demodulation information, one "1" is missing. In this case, the first electronic device may replace one "0" in the demodulation information with "1". The demodulation information exists in Table 1 only when the demodulation information after error correction is [0, 0, 1, 1, 0, 0, 0, 0, 0, 0, 0, 0, 0, 0, 0, 0, 0, 0, 0, 0]. Therefore, the demodulation information after error correction is [0, 0, 1, 1, 0, 0, 0, 0, 0, 0, 0, 0, 0, 0, 0, 0, 0, 0, 0, 0], which is the correct demodulation information of the display region A, where the encoded digit is "1".

In another example, if there are three information points in the display region B, there are three "1"s in demodulation information that is of the display region B and that is obtained by the first electronic device through decoding, and the remaining is 0.

For example, the demodulation information of the display region B belonging to the encoding region 0 is [1, 1, 0, 1, 0, 0, 0, 0, 0, 0, 0, 0, 0, 0, 0, 0, 0, 0, 0, 0], and in comparison with correct demodulation information, one "1" is added. In this case, the first electronic device may replace one "1" in the demodulation information with "0". The demodulation information exists in Table 1 only when the demodulation information after error correction is [1, 1, 0, 0, 0, 0, 0, 0, 0, 0, 0, 0, 0, 0, 0, 0, 0, 0, 0, 0]. Therefore, the demodulation information after error correction is [1, 1, 0, 0, 0, 0, 0, 0, 0, 0, 0, 0, 0, 0, 0, 0, 0, 0, 0, 0], which is the correct demodulation information of the display region B, where the encoded digit is "0".

In this error correction manner, a possibility of correct decoding by the first electronic device can be improved.

470: The first electronic device performs multi-level fusion on the connection pairing code to determine a final connection pairing code.

In some examples, the first electronic device determines, by analyzing the image J2, a connection pairing code 1 encoded in the image J2. The image J2 is obtained by processing m frames of images in the n frames of images E2. The first electronic device may fuse connection pairing codes obtained based on a plurality of frames of images J2, to determine the final connection pairing code.

An example in which n is 5 and m is 3 is used for description. The five frames of images E2 are E2-1, E2-2, E2-3, E2-4, E2-5, and the m frames of images may be three consecutive frames of images in the five frames of images.

For example, the three frames of images are E2-1, E2-2, and E2-3. The first electronic device processes E2-1, E2-2, and E2-3 to obtain an image J2-1, and determines a connection pairing code 1 encoded in the image J2-1.

To improve accuracy of the determined connection pairing code, the first electronic device may further process E2-2, E2-3, and E2-4 to obtain an image J2-2, and determine a connection pairing code 2 encoded in the image J2-2. The first electronic device may further process E2-3, E2-4, and E2-5 to obtain an image J2-3, determine a connection pairing code 3 encoded in the image J2-3, and fuse the connection pairing code 1, the connection pairing code 2, and the connection pairing code 3 to obtain the determined connection pairing code.

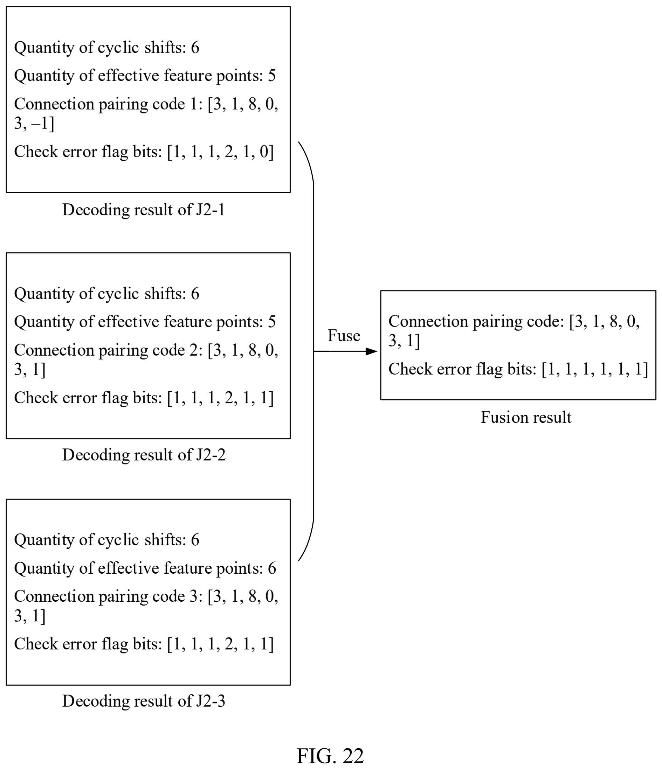

It should be understood that the process in which the first electronic device obtains the five frames of images, determines three connection pairing codes by using the five frames of images, and fuses the three connection pairing codes to obtain one connection pairing code may be referred to as one round of connection pairing code fusion. The following describes the technical solution with reference to FIG. 22.

For example, FIG. 22 is a diagram of obtaining the connection pairing code through multi-frame fusion according to an embodiment of this application. As shown in FIG. 22, a result of decoding each image by the first electronic device may include information such as a quantity of cyclic shifts, a quantity of effective feature points, and a check error flag bit in addition to the connection pairing code.

The quantity of cyclic shifts may be used to restore a correct order in the connection pairing code. In the process of one round of connection pairing code fusion, whether decoding results of the plurality of frames of images are reliable may be determined based on values of quantities of cyclic shifts of the plurality of frames of images.

For example, still refer to FIG. 22. If values of quantities of cyclic shifts of decoding results of the three frames of images J2-1, J2-2, and J2-3 are all 6, the decoding results in this time are reliable, and the first electronic device may fuse the decoding results of the three frames of images.

In another example, if values of quantities of cyclic shifts of decoding results of the images J2-2 and J2-3 are 6, and a value of a quantity of cyclic shifts of a decoding result of the image J2-1 is a value other than 6 (for example, 5), the first electronic device may determine that the decoding results of the images J2-2 and J2-3 are reliable. Therefore, the first electronic device may fuse the decoding results of the images J2-2 and J2-3, to determine the connection pairing code fused in this round.

In some cases, in the decoding results of the plurality of frames of images, the quantities of cyclic shifts are different. In this case, the first electronic device may determine, by using values of quantities of effective feature points, whether the decoding results are reliable.

For example, in a decoding result of the image J2-1, a quantity of cyclic shifts is 5, in a decoding result of the image J2-2, a quantity of cyclic shifts is 6, and in a decoding result of the image J2-3, a quantity of cyclic shifts is 7. In this case, the first electronic device cannot independently determine, based on the quantities of cyclic shifts, images whose decoding results are reliable. In this case, the first electronic device may determine, with reference to a value of the quantity of effective feature points of each frame of image, whether the decoding result is reliable.

When determining that a value of a quantity of effective feature points in a decoding result of an image is greater than a preset value B, the first electronic device may determine that the decoding result of the image is reliable; otherwise, the first electronic device determines that the result of the image is unreliable.

For example, although the values of the quantities of cyclic shifts of the decoding results of the images J2-2 and J2-3 are different from each other, values of quantities of effective feature points of the images J2-2 and J2-3 are greater than the preset value B. In this case, the first electronic device may also determine that the decoding results of the images 2-2 and J2-3 are reliable, and the first electronic device may fuse the decoding results of the images J2-2 and J2-3, to determine the connection pairing code fused in this round.

The check error flag bit has three values: 0, 1, and 2. The value 0 indicates that the result is invalid, the value 1 indicates that the result is correct, and the value 2 indicates that the result is dubious. In decoding results of two frames of images, if values of a same digit are both 2, after fusion, a value of a check error flag bit corresponding to the digit is 1.

For example, refer to the decoding result of the image J2-1. Check error flag bits are respectively "1, 1, 1, 2, 1, 0", indicating that in the connection pairing code 1, the 1st digit is correct, the 2nd digit is correct, the 3rd digit is correct, the 4th digit is dubious, the 5th digit is correct, and the 6th digit is invalid.

It should be understood that, for a digit that is invalid or fails to be decoded, the digit in the connection pairing code is "-1". As shown in the decoding result of the image J2-1, the 6th digit in the connection pairing code 1 is "-1", indicating that the first electronic device fails to decode the 6th digit.

Still refer to FIG. 22. In the decoding results of the images J2-1, J2-2, and J2-3, the quantities of cyclic shifts are all 6, indicating that the decoding results of the images J2-1, J2-2, and J2-3 are all reliable. In this case, the first electronic device may obtain the connection pairing code "318031" fused in this round based on the decoding results of the images J2-1, J2-2, and J2-3. In addition, check error flag bits after fusion are " 111111", that is, each digit in the connection pairing code is correct.

In some other examples, when the first electronic device performs one round of connection pairing code fusion, a case in which a fusion result is incorrect may also occur. To improve accuracy of the determined connection pairing code, the first electronic device may further fuse connection pairing codes determined in a plurality of rounds.

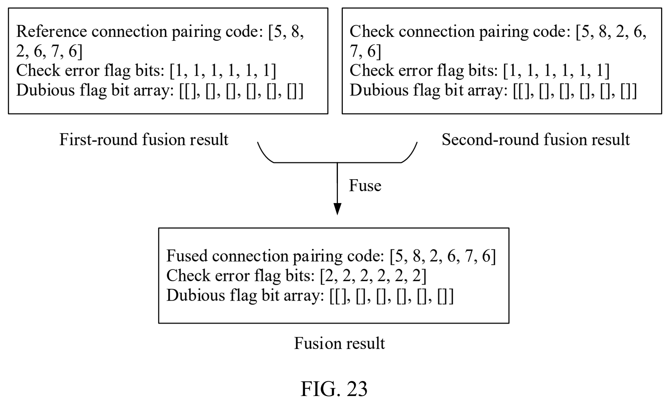

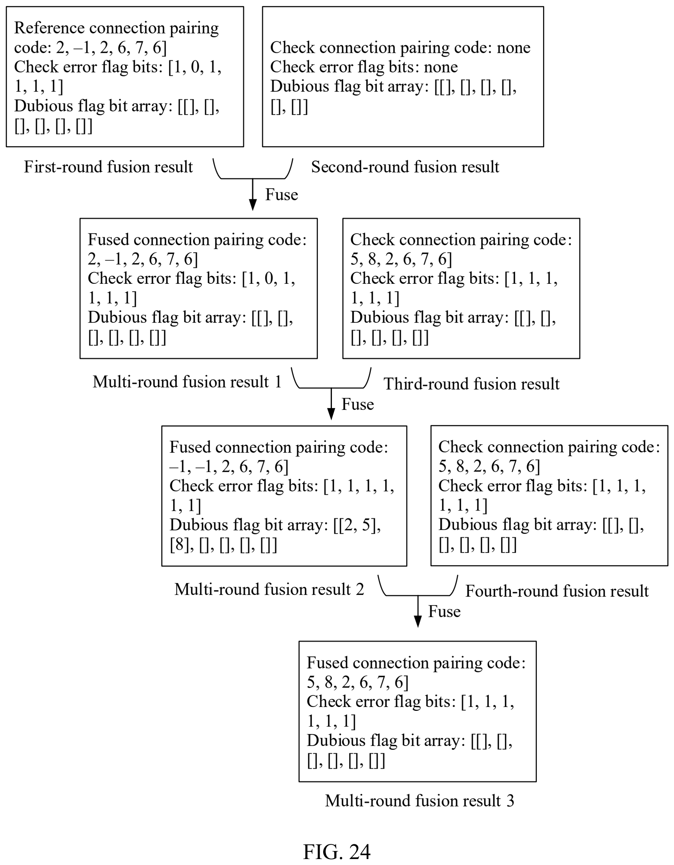

In this case, a connection pairing code determined in a $1^{st}$ round may be used as a reference connection pairing code, a connection pairing code determined in a $2^{nd}$ round is a check pairing code, and a connection pairing code obtained through fusion is a fused connection pairing code. The following describes the technical solution with reference to FIG. 23 and FIG. 24.

FIG. 23 and FIG. 24 are diagrams of multi-round fusion according to an embodiment of this application.

As shown in FIG. 23, an example in which the first electronic device fuses connection pairing codes determined in two rounds is used for description.

In this embodiment of this application, in addition to the connection pairing code and the check error flag bits, the fusion result of each round may further include a dubious flag bit array.

The dubious flag bit array is a two-dimensional array, and the array in each dimension stores a dubious digit.

A value of the check error flag bit may include 0, 1, and 2. The value 0 indicates that the result is invalid, the value 1 indicates that the result is dubious, and the value 2 indicates that the result is valid.

Still refer to FIG. 23. The connection pairing code in the first-round fusion result is used as the reference connection pairing code with a value "582676", the check error flag bits are "111111", and the dubious flag bit array is empty.

The connection pairing code in the second-round fusion result is used as the check connection pairing code with a value "582676", the check error flag bits are "111111", and the dubious flag bit array is empty.

Then, the first electronic device fuses the first-round fusion result and the second-round fusion result. Because the connection pairing codes in the two rounds are the same, a fused connection pairing code obtained through fusion is "582676", and the fused connection pairing code "582676" is the finally determined connection pairing code.

In some cases, more rounds of fusion results need to be fused to determine the final connection pairing code. As shown in FIG. 24, an example in which the first electronic device needs to fuse connection pairing codes determined in four rounds is used for description.

A connection pairing code in a first-round fusion result is used as the reference connection pairing code with a value "2, -1, 2, 6, 7, 6". Check error flag bits are "1, 0, 1, 1, 1, 1", and a dubious flag bit array is empty, indicating that the $2^{nd}$ digit in the connection pairing code is not successfully decoded, and digits at remaining locations are correct.

Both a connection pairing code and check error flag bits in a second-round fusion result are none (none), and a dubious flag bit array is empty. It may be understood that the first electronic device may fail to obtain locating points and information points in the second-round fusion process, resulting in a decoding failure.

In this case, because the second-round fusion result has no data, the first electronic device fuses the first-round fusion result and the second-round fusion result, to obtain a multi-round fusion result 1. The multi-round fusion result 1 is the same as the first-round fusion result.

In a third-round fusion result, a connection pairing code is "5, 8, 2, 6, 7, 6", check error flag bits are "1, 1, 1, 1, 1, 1", and a dubious flag bit array is empty. The first electronic device fuses the multi-round fusion result 1 and the third-round fusion result, to obtain a multi-round fusion result 2.

During fusion, because the $1^{st}$ digit "2" in the multi-round fusion result 1 is different from the $1^{st}$ digit "5" in the third-round fusion result, the first electronic device cannot determine whether the $1^{st}$ digit is "2" or "5". Therefore, the first electronic device may store the digits "2" and "5" in the dubious flag bit array. Similarly, the $2^{nd}$ digit in the multi-round fusion result 1 is not successfully decoded, but the $2^{nd}$ digit in the third-round fusion result is "8", and the first electronic device cannot determine that the $2^{nd}$ digit is "8". Therefore, the first electronic device may store the digit and "8" in the dubious flag bit array.

Refer to the multi-round fusion result 2, where an obtained connection pairing code is "-1, -1, 2, 6, 2, 7", check error flag bits are "1, 1, 1, 1, 1, 1", and in the dubious flag bit array, the $1^{st}$ array is [2, 5], the $2^{nd}$ array is [8], and remaining arrays are empty. Therefore, the first electronic device still cannot determine the final connection pairing code.

In a fourth-round fusion result, a connection pairing code is "5, 8, 2, 6, 7, 6", check error flag bits are "1, 1, 1, 1, 1, 1", and a dubious flag bit array is empty.

When the first electronic device fuses the multi-round fusion result 2 and the fourth-round fusion result, because the $1^{st}$ digit in the multi-round fusion result 2 is "2" or "5", and the $1^{st}$ digit in the fourth-round fusion result is "5", the first electronic device may determine that the $1^{st}$ digit is "5". Similarly, because the $2^{nd}$ digit in the multi-round fusion result 2 is doubted to be "8", and the $2^{nd}$ digit in the fourth-round fusion result is "8", the first electronic device may determine that the $2^{nd}$ digit is "8", and remaining digits are all correct.

Therefore, in a multi-round fusion result 3 obtained by the first electronic device through fusion, a finally obtained connection pairing code is "582676", that is, a connection pairing code finally determined through multi-round fusion is "582676".

Based on this, the first electronic device has determined the connection pairing code encoded by the second electronic device. Therefore, the first electronic device may establish the device connection relationship with the second electronic device based on the connection pairing code.

In some cases, in this embodiment of this application, to avoid a case in which the first electronic device keeps performing the foregoing multi-round fusion process when a decoding condition is poor (for example, serious light reflection or blocking), the first electronic device may further set a threshold of a quantity of fusion rounds. For example, when a quantity of rounds of fusion performed by the first electronic device is greater than a threshold, the decoding process ends, and the device connection process is exited.

It should be understood that a specific value of the threshold is not limited in embodiments of this application. For example, the threshold may be 5 or 6.

It should be understood that an operation performed after the first electronic device establishes the connection relationship with the second electronic device is not limited in embodiments of this application.

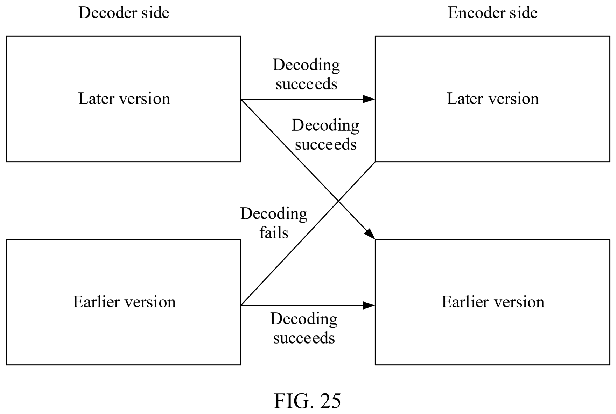

In some cases, as service requirements increase, an amount of encoded data may need to be increased. This causes a change in the foregoing encoding and decoding rules, and in particular, the foregoing code table may be modified. In this case, when information is transmitted between electronic devices of different versions, an electronic device needs to obtain a version number of an encoder side. The following describes the technical solution with reference to FIG. 25 to FIG. 36.

It should be understood that the version number may be a version number of a system version of the electronic device, or may be a version number used in the electronic device to perform the foregoing encoding and decoding. This is not limited in embodiments of this application.

For example, FIG. 25 is a diagram of decoding performed between electronic devices of different versions according to an embodiment of this application. As shown in FIG. 25, the second electronic device at an encoder side may be of a later version or an earlier version, and the first electronic device at a decoder side may be of a later version or an earlier version.

Normally, when the first electronic device of the later version decodes a pattern displayed by the second electronic device of the later version, the decoding can be successful. When the first electronic device of the later version decodes a pattern displayed by the second electronic device of the earlier version, the decoding can be successful. When the first electronic device of the earlier version decodes a pattern displayed by the second electronic device of the earlier version, the decoding can be successful.

However, when the first electronic device of the earlier version decodes a pattern displayed by the second electronic device of the later version, the decoding fails. In this case, the first electronic device may display prompt information, where the prompt information may prompt the user to upgrade the first electronic device, establish the device connection by using a connection code, or the like.

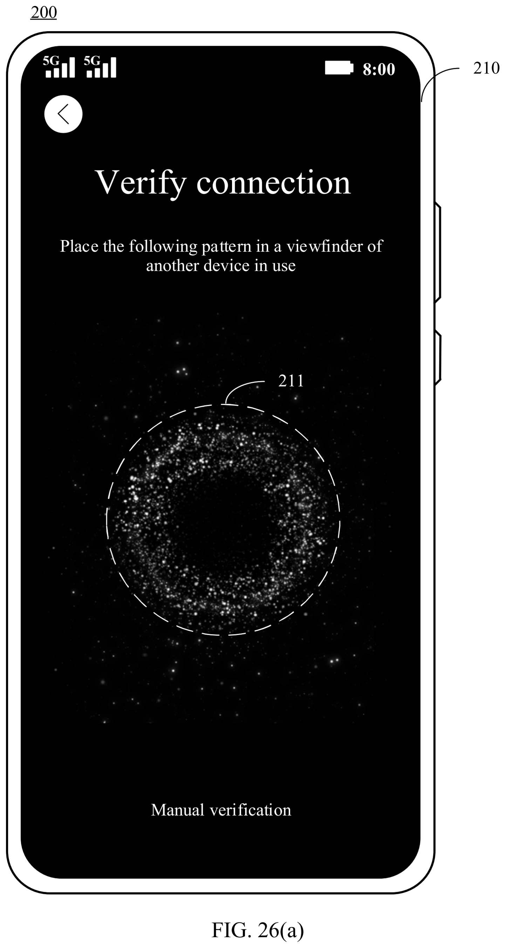

The following describes, with reference to FIG. 26(a) to FIG. 26(c), a technical solution in which the first electronic device of the earlier version displays the prompt information when failing to decode the image displayed by the second electronic device of the later version.

For example, FIG. 26(a) to FIG. 26(c) are diagrams of a group of GUIs according to an embodiment of this application. FIG. 26(a) to FIG. 26(c) show a process in which the electronic device 300 scans the image displayed by the electronic device 200 and displays prompt information when decoding fails.

The first electronic device may be the electronic device 300, and the second electronic device may be the electronic device 200.

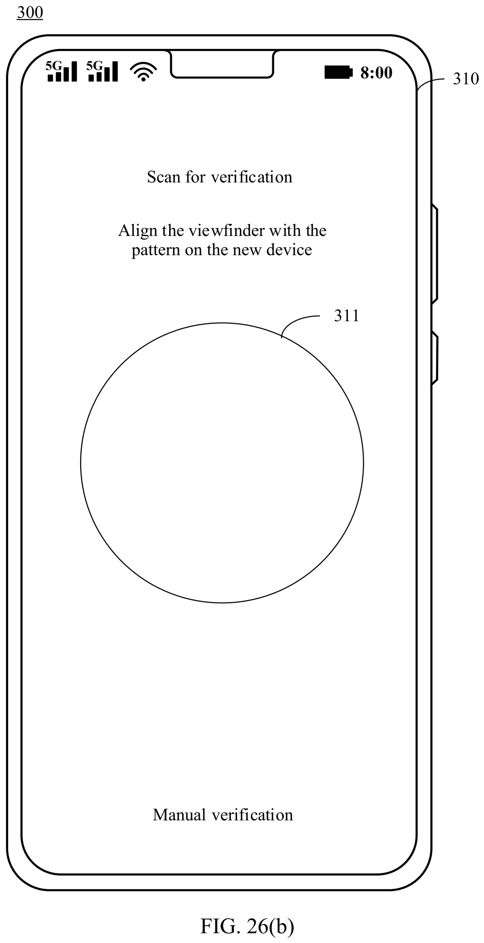

It should be understood that, for FIG. 26(a) and FIG. 26(b), refer to the related descriptions of FIG. 3(a) and FIG. 3(b). For brevity, details are not described herein again.

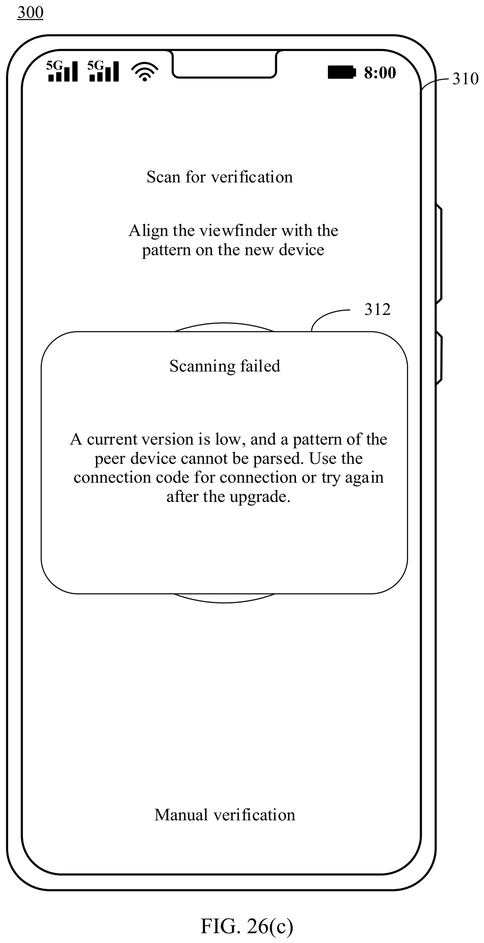

When a version of the electronic device 300 is earlier than a version of the electronic device 200, the electronic device 300 cannot decode the pattern 211 encoded by the electronic device 200. After the electronic device 300 performs the operation of scanning the pattern 211 on the display interface 210 of the electronic device 200, the electronic device 300 may display a GUI shown in FIG. 26(c).

As shown in FIG. 26(c), a prompt card 312 may be displayed on the display interface 310. The prompt card 312 may include text content "Scanning failed" and "A current version is low, and a pattern of the peer device cannot be parsed. Please use the connection code for connection or try again after the upgrade."

It should be understood that the content in the prompt card 312 is merely an example. The prompt card 312 may prompt the user that decoding cannot be successfully performed currently and the electronic device needs to be upgraded. In another example, the prompt card 312 may further include other content, or the foregoing content may be replaced with other content.

According to this embodiment of this application, when an electronic device of an earlier version scans a pattern encoded by an electronic device of a later version for decoding, the electronic device of the earlier version displays diagram information, to prompt the user to upgrade the electronic device.

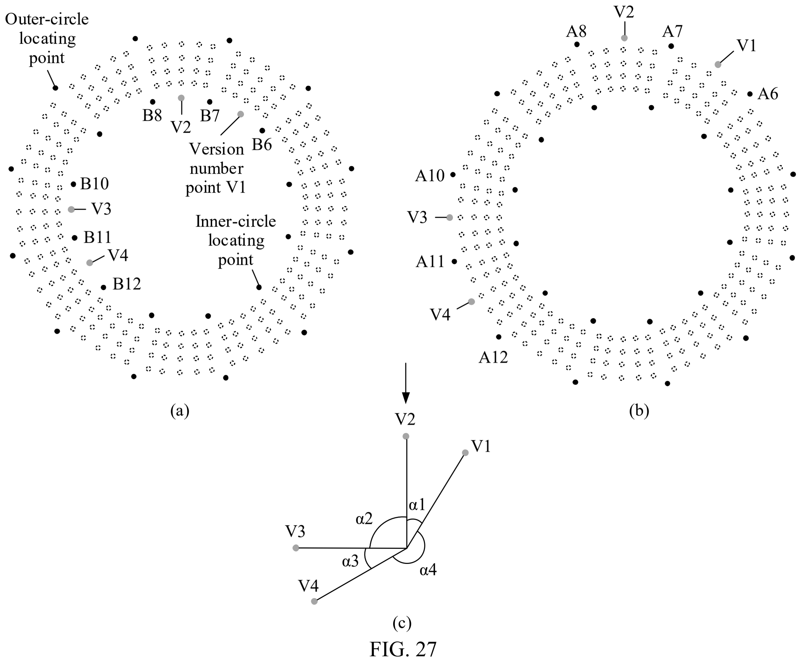

The following describes, with reference to FIG. 27 to FIG. 36, a technical solution of how an electronic device obtains a version number in an embodiment of this application.

For example, FIG. 27 is a diagram of encoding a version number point according to an embodiment of this application. As shown in (a) in FIG. 27, when performing encoding, the electronic device may encode, based on the encoding in FIG. 6, the version number point on the inner circle on which the inner-circle locating points are located.

In this embodiment of this application, the second electronic device may encode a preset quantity of version number points on the inner circle on which the inner-circle locating points are located. For ease of description, an example in which a quantity of version number points is 4 is used for description in this embodiment of this application. In another example, the quantity of version number points may alternatively be 5, 6, or the like.

In some implementations, each of the four version number points may be distributed between two adjacent inner-circle locating points.

For example, still refer to (a) in FIG. 27. The four version number points are respectively denoted as V1, V2, V3, and V4. The version number point V1 is located between the inner-circle locating points B6 and B7, the version number point V2 is located between the inner-circle locating points B7 and B8, V3 is located between the inner-circle locating points B10 and B11, and V4 is located between the inner-circle locating points B11 and B12. Each version number point may be located at a center of an arc on which two inner-circle locating points are located.

For another example, the four version number points may alternatively be distributed between other adjacent inner-circle locating points. This is not limited in embodiments of this application.

In some implementations, two version number points (for example, V1 and V2) in the four version number points may be distributed between two adjacent inner-circle locating points (for example, B7 and B8), and the remaining two version number points (for example, V3 and V4) are distributed between two other adjacent inner-circle locating points (for example, B10 and B11).

In some cases, when the second electronic device encodes the four version number points, in a same frame of image, the four version number points may be cyclically displayed based on a fourth color, a fifth color, and a sixth color, and the fourth color, the fifth color, and the sixth color are different from each other.

For example, the fourth color, the fifth color, and the sixth color each correspond to one of green, red, and gray. For example, the fourth color is green, the fifth color is red, and the sixth color is gray. For another example, the fourth color is red, the fifth color is gray, and the sixth color is green.

It should be understood that the fourth color, the fifth color, and the sixth color may alternatively be other colors. This is not limited in embodiments of this application.

In this way, the version number point is cyclically displayed in different colors, so that the version number points can be better concealed in the image, and a display effect that the version number points are not perceived by naked eyes of the user is achieved.

In another example, as shown in (b) in FIG. 27, the four version number points may alternatively be encoded on the outer circle on which the outer-circle locating points are located. An encoding rule may be the same as that in (a) in FIG. 27, and details are not described herein again.

In some cases, there is a preset included angle between two adjacent version number points in the four version number points.

For example, as shown in (c) in FIG. 27, an included angle between the version number points V1 and V2 is $\alpha 1$, an included angle between V2 and V3 is $\alpha 2$, an included angle between V3 and V4 is $\alpha 3$, and an included angle between V4 and V1 is $\alpha 4$.

In this embodiment of this application, the second electronic device may further form an angle sequence ($\alpha 1$, $\alpha 2$, $\alpha 3$, $\alpha 4$) by using the preset included angle between two adjacent version number points in an order of the version number points V1, V2, V3, and V4. The angle sequence may correspond to the version number of the second electronic device. For a correspondence between the angle sequence and the version number, refer to Table 2.

Table 2

| Version number | Angle sequence |
|---|---|
| Version number 1 | 30°, 90°, 30°, 210° |
| Version number 2 | 15°, 60°, 15°, 270° |
| Version number 3 | 45°, 30°, 45°, 240° |
| ... | ... |
| Version number n | 75°, 15°, 75°, 195° |

It should be understood that a system of the first electronic device may include content of Table 2, so that when learning that the version number of the second electronic device at the peer end is high, the first electronic device may display the prompt information, to prompt the user to upgrade the first electronic device.

In another example, the version number of the second electronic device may alternatively be related to a quantity of encoded information points. For example, in the technical solution in FIG. 7, two information points are encoded in each display region, and the technical solution may correspond to the version number 1. In the version number 2, the second electronic device may encode three information points in each display region, and in the version number 3, the second electronic device may encode four information points in each display region.

During decoding, the first electronic device may determine the version number of the second electronic device based on an obtained quantity of information points encoded in display region of one or more frames of images.

For example, as shown in FIG. 7, the second electronic device encodes 12 display regions in each frame of image. When a ratio of a quantity of display regions that include two information points in the 12 display regions of each frame of image and that are obtained by the first electronic device through decoding to the 12 display regions is greater than or equal to a preset ratio, it is determined that the second electronic device encodes two information points in each display region, and it is determined that the version number of the second electronic device is the version number 1.

For another example, when a ratio of a quantity of display regions that include three information points in the 12 display regions of each frame of image and that are obtained by the first electronic device through decoding to the 12 display regions is greater than or equal to the preset ratio, it is determined that the second electronic device encodes three information points in each display region, and it is determined that the version number of the second electronic device is the version number 2.

For another example, the second electronic device encodes 12 display regions for each frame of image, and display regions included in the m frames of images obtained by the first electronic device through decoding are 12*m. When a ratio of a quantity of display regions including two information points to 12*m is greater than or equal to the preset ratio, it is determined that the second electronic device encodes two information points in each display region, and it is determined that the version number of the second electronic device is the version number 1.

In some examples, due to interference of some clutters, there may be a plurality of cases for the information points included in each display region included in the m frames of images obtained by the first electronic device through decoding.

For example, in the m frames of images obtained by the first electronic device through decoding, if a ratio of a quantity of display regions including two information points to 12*m is less than the preset ratio, and a ratio of a quantity of display regions including three information points to 12*m is less than the preset ratio, the first electronic device determines that the version number of the second electronic device cannot be decoded, and the first electronic device may determine that a version of the second electronic device is an unknown version.

It should be understood that a specific value of the preset ratio is not limited in embodiments of this application. For example, the preset ratio may be 0.7 or 0.8.

It should be understood that, in this embodiment of this application, an example in which the second electronic device encodes 12 display regions for each frame of image is used for description. In another example, the second electronic device may alternatively encode another quantity of display regions for each frame of image.

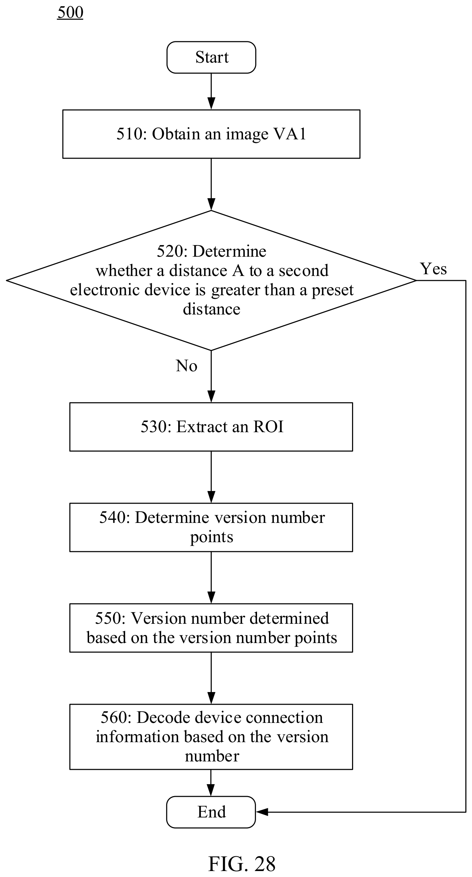

The following describes, with reference to FIG. 28, a technical solution in which the first electronic device determines the version number of the second electronic device in an embodiment of this application.

For example, FIG. 28 is a schematic flowchart of determining a version number of an electronic device according to an embodiment of this application. As shown in FIG. 28, the method 500 may be applied to a first electronic device, and the method 500 may include step 510 to step 560.

510: The first electronic device obtains an image VA1.

520: The first electronic device determines whether a distance A to a second electronic device is greater than a preset distance.

530: The first electronic device extracts an ROI from the image A1.

It should be understood that the image VA1 may be the same as the image A1. In this case, step 510 to step 530 may be the same as step 410 to step 430. For brevity, details are not described herein again.

In some cases, the image VA1 may alternatively be an image different from the image A1. In this case, a manner of processing the image VA1 by the first electronic device is similar to the manner of processing the image A1. For step 510 to step 530, refer to the related descriptions of step 410 to step 430. For brevity, details are not described herein again.

540: The first electronic device extracts version number points from the obtained n frames of images VA2 based on the ROI.

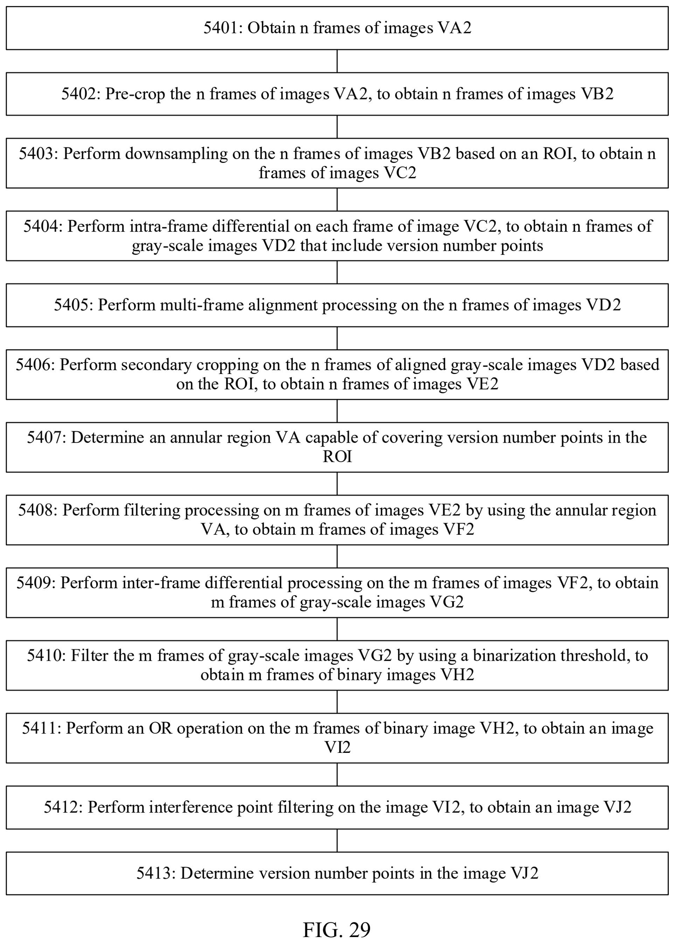

In some examples, FIG. 29 is a diagram of determining an image including version number points according to an embodiment of this application. As shown in FIG. 29, step 540 may include step 5401 to step 5406.

5401: The first electronic device obtains the n frames of images VA2.

5402: The first electronic device pre-crops the n frames of images VA2, to obtain n frames of images VB2.

5403: The first electronic device performs downsampling on the n frames of images VB2 based on the ROI, to obtain n frames of images VC2.

It should be understood that step 5401 to step 5403 may be the same as step 441 and step 443. In another example, the image VA2 may alternatively be an image that is obtained by the first electronic device and that is different from the image A2, but a manner in which the first electronic device processes the image VA2 is the same as that a manner of processing the image A2.

5404: The first electronic device performs intra-frame differential on each frame of image VC2, to obtain n frames of gray-scale images VD2 that include the version number points.

In some examples, the image VC2 is the same as the image C2. However, in step 5404, a manner in which the first electronic device processes the image VC2 is different from the manner of processing the image C2.

For example, in a same frame of image, colors of the version number point are cyclically displayed based on the fourth color, the fifth color, and the sixth color. In different images, colors of a same version number point may be different. For example, the fourth color is green, and a color value RGB is (0, 119, 81), where an R component is 0, a green component is 119, and a blue component is 81; the fifth color is red, and a color value RGB is (147, 60, 117), where an R component is 147, a green component is 60, and a blue component is 117; and the sixth color is gray, and a color value RGB is (98, 99, 98), where an R component is 98, a green component is 99, and a blue component is 98. In the image displayed by the second electronic device, a superimposed color 1 of the fourth color, the fifth color, and the sixth color is displayed for the version number points, and an RGB value of the superimposed color 1 is an RGB value corresponding to a center of gravity of a triangle formed by the fourth color, the fifth color, and the sixth color in the color gamut diagram.

For example, if a color value RGB of the first color is (98, 99, 99), a color value RGB of the second color is (110, 100, 0), and a color value RGB of the third color is (3, 100, 180), the first color, the second color, and the third color form a superimposed color 2, and an RGB value of the superimposed color 2 is an RGB value corresponding to a center of gravity of a triangle formed by the first color, the second color, and the third color in the color gamut diagram.

In this way, the color value of the superimposed color 1 is close to that of the superimposed color 2, so that the version number points, the information points, and the locating points can all be concealed in the background, and the user almost cannot perceive existence of these particle points with the naked eyes. However, different intra-frame difference and inter-frame difference parameters are set, so that the first electronic device may distinguish between the version number points, the information points, and the locating points in the obtained gray-scale image.

For example, the first electronic device performs intra-frame differential processing (intra-frame difference mode 1) on the image C2 by using a formula $D2=-R-G+2B$, and performs intra-frame differential processing (intra-frame difference mode 2) on the image VC2 by using a formula $VD2=-1.2R+1.5G-0.8B$. For results of the intra-frame differential processing, refer to Table 3.

Table 3

| Intra-frame difference mode | Color | Intra-frame difference result |
| --- | --- | --- |
| Intra-frame difference mode 1 | First color | 1 |
| | Second color | -210 |
| | Third color | 257 |
| | Fourth color | -48.3 |
| | Fifth color | -18 |
| | Sixth color | 2.4 |
| Intra-frame difference mode 2 | First color | 43 |
| | Second color | 27 |
| | Third color | -1 |
| | Fourth color | 113.7 |
| | Fifth color | -180 |
| | Sixth color | -47.5 |

5405: The first electronic device performs multi-frame alignment processing on the n frames of images VD2.

5406: The first electronic device performs secondary cropping on the n frames of aligned gray-scale images VD2 based on the ROI, to obtain n frames of images VE2.

In some examples, as shown in (b) in FIG. 27, the version number points are located on the outer circle on which the outer-circle locating points are located. In this case, for steps 5405 and 5406, refer to the related descriptions of steps 445 and 446. For brevity, details are not described herein again.

In some examples, as shown in (a) in FIG. 27, the version number points are located on the inner circle on which the inner-circle locating points are located. In this case, when the first electronic device performs secondary cropping on the n frames of aligned gray-scale images VD2 based on the ROI, a size of the n frames of images VE2 obtained through cropping is a size including an inner circle region. For example, a radius of an inscribed circle of the n frames of images VE2 is X1 pixels greater than a radius of the inner circle. X1 may be a preset value.

In this way, the n frames of images include the version number points, and the size of the n frames of images is small, so that a data amount during subsequent decoding performed by the first electronic device can be reduced.

Further, the first electronic device may determine the version number points in the n frames of images VE2. Therefore, step 540 may further include step 5407 to step 5413.

5407: The first electronic device determines an annular region VA capable of covering the version number points.

In some implementations, as shown in (a) in FIG. 27, the version number points are located on the inner circle in which the inner-circle locating points are located. Because the first electronic device has obtained the radius of the inner circle and the circle center O, the annular region VA may use the circle center O as a circle center, an inner diameter of the annular region VA may be X1 pixels less than the radius of the inner circle, and an outer diameter may be X1 pixels greater than the radius of the inner circle.

In another case, the annular region may alternatively be an ellipse. This is not limited in embodiments of this application.

In some implementations, as shown in (b) in FIG. 27, the version number points are located on the outer circle in which the outer-circle locating points are located, and the annular region VA may be the same as the annular region A in step 451. Details are not described herein again.

5408: The first electronic device performs filtering processing on m frames of images VE2 by using the annular region VA, to obtain m frames of images VF2.

Herein, m is less than n, and the m frames of images VE2 may be a part of the n frames of images VE2. For example, n is 5, and m is 3.

For example, the annular region VA is a mask (mask). The first electronic device performs filtering processing on the m frames of images VE2 by using the mask, to obtain particle points corresponding to a mask region, and particle points outside the mask region are filtered out.

In some cases, the m frames of images VF2 obtained by the first electronic device include the version number points and the inner-circle locating points in the annular region VA, and a clutter beside is filtered out.

In some other cases, the m frames of images VF2 obtained by the first electronic device include particle points that are included in the annular region VA and that are located in a region between the inner-circle locating points and the outer-circle locating points, and a clutter beside is filtered out.

5409: The first electronic device performs inter-frame differential processing on the m frames of images VF2, to obtain m frames of gray-scale images VG2.

It should be understood that the first electronic device may perform inter-frame differential processing on the image VF2, so that in the m frames of gray-scale images VG2, gray-scale values of version number points are higher, and gray-scale values of the information points and the locating points are lower. Therefore, a threshold may be set, to reserve the version number points, and filter out other particle points.

Based on Table 3, for a result of performing inter-frame difference between the image F2 and the image VF2 by the electronic device, refer to Table 4. Different intra-frame difference modes cause different inter-frame difference results.

Table 4

| Intra-frame difference mode | Particle points | Inter-frame difference result |
|---|---|---|
| Intra-frame difference mode 1 | Information points + locating points | (211, 256, 467) |
| | Version number points | (30.3, 45.9, 20.4) |
| Intra-frame difference mode 2 | Information points + locating points | (16, 44, 28) |
| | Version number points | (293.7, 161.2, 132.5) |

It should be understood that the electronic device displays a value that exceeds the pixel value 255 in the inter-frame difference result as the pixel value 255.

It can be learned from Table 4 that, in the intra-frame difference mode 1, the gray-scale values of the information points and the locating points are higher, and the gray-scale values of the version number points are lower. In the intra-frame difference mode 2, the gray-scale values of the information points and the locating points are lower, and the gray-scale values of the version number points are higher.

In this way, different filtering thresholds are set, so that the first electronic device may filter out the version number points in the intra-frame difference mode 1, and may filter out the information points and the locating points in the intra-frame difference mode 2.

5410: The first electronic device filters the m frames of gray-scale images VG2 by using a binarization threshold, to obtain m frames of binary images VH2.

An example in which the first electronic device filters one frame of gray-scale image VG2 is used for description. In the gray-scale image VG2, for a part whose pixel value is greater than or equal to the binarization threshold, a gray-scale value is set to 255, and for a part whose pixel value is less than the binarization threshold, the pixel value is set to 0. In this way, a binary image VH2 may be obtained by traversing all pixels in the gray-scale image VG2.

5411: The first electronic device performs an OR operation on the m frames of binary image VH2, to obtain an image VI2.

After the first electronic device performs the OR operation on the m frames of binary images VH2, the obtained image VI2 includes all particle points in the m frames of binary images. In this way, the image VI2 can include as many version number points as possible, to improve a possibility of successfully obtaining the version number through decoding by the first electronic device.

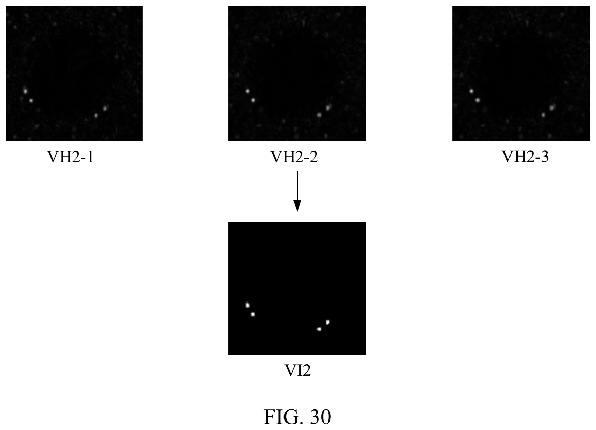

For example, FIG. 30 is a diagram of determining a binary image according to an embodiment of this application. For example, m is 3, and three frames of binary images are respectively denoted as VH2-1, VH2-2, and VH2-3. The first electronic device performs the OR operation on the three frames of binary images VH2-1, VH2-2, and VH2-3, to obtain the image VI2. The image VI2 includes all particle points in the three frames of binary images VH2-1, VH2-2, and VH2-3.

5412: The first electronic device performs interference point filtering on the image VI2, to obtain an image VJ2.

It should be understood that the first electronic device may further perform pixel fusion processing on the m frames of gray-scale images VG2, to obtain a gray-scale image VG2-1. In addition, the gray-scale image VG2-1 is filtered by using an image VI2, to filter out an interference point in the gray-scale image VG2-1, to obtain a gray-scale image VG2-a.

For example, the first electronic device may add the m frames of gray-scale images VG2 pixel by pixel, to obtain the gray-scale image VG2-1. The gray-scale image VG2-1 is filtered by using the image VI2 as a mask, to obtain the gray-scale image VG2-a.

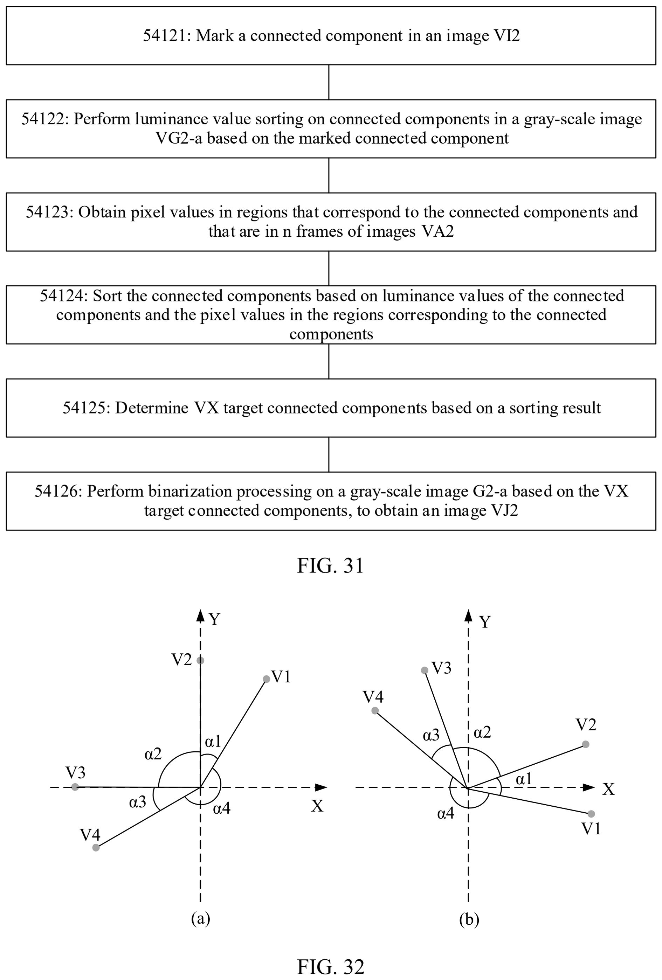

In some examples, FIG. 31 is a schematic flowchart of filtering an interference point according to an embodiment of this application. As shown in FIG. 31, step 5412 may include at least step 54121 to step 54126.

54121: The first electronic device marks a connected component in the image VI2.

54122: The first electronic device performs luminance value sorting on connected components in the gray-scale image VG2-a based on the marked connected component.

It should be understood that, for steps 54121 and 54122, refer to the related descriptions of steps 4561 and 4562.

In another example, the first electronic device may further select, based on a result of sorting luminance values in descending order, luminance values whose quantity is the same as a quantity of version number points, and use a connected component corresponding to the luminance values as the target connected component.

For example, if the quantity of version number points is 4, the first electronic device may further select, based on a result of sorting luminance values, a connected component corresponding to first four luminance values as the target connected component. In this way, the first electronic device can quickly determine the target connected component.

54123: The first electronic device obtains pixel values in regions that correspond to the connected components and that are in the m frames of images VA2.

In this step, the first electronic device may map a location of the marked connected component to a corresponding location in the m frames of image VA2, and determine a score of the connected component in an RGB color gamut. An example in which m=3 and the first electronic device maps a connected component 1 is used for description. The first electronic device may obtain 3*3 pixels in a middle part of the connected component 1, where a color average value of the 3*3 pixels may be (r, g, b), locations of the 3*3 pixels are mapped to three frames of images VA2, and pixel values at corresponding locations are respectively $(r_0, g_0, b_0)$, $(r_1, g_1, b_1)$, and $(r_2, g_2, b_2)$.

It should be understood that the 3*3 pixels are used as an example for description in this embodiment of this application. In another example, the 3*3 pixels may be alternatively replaced with 2*2 or 2*3 pixels. This is not limited in embodiments of this application.

54124: The first electronic device sorts the connected components based on the luminance values of the connected components and the pixel values in the region corresponding to the connected components.

The first electronic device may determine a minimum difference between colors of the 3*3 pixels and colors of corresponding locations in the three frames of images VA2. In this way, a frame of image whose color is closer to the colors of the 3*3 pixels may be determined.

The first electronic device may determine the minimum difference between the colors by using the following formula:

$$S_{\min} = \min(\sqrt{(r-r_0)^2 + (g-g_0)^2 + (b-b_0)^2}, \sqrt{(r-r_1)^2 + (g-g_1)^2 + (b-b_1)^2}, \sqrt{(r-r_2)^2 + (g-g_2)^2 + (b-b_2)^2})$$

A normalization result of a score of the connected component 1 in the RGB color gamut may be determined by using the following formula:

$$S_c = 1 - \frac{S_{\min}}{3 \times 255}$$

A normalization result of a luminance value of the connected component 1 may be expressed as:

$$S_l = \frac{\text{Luminance value}}{255}$$

A final score $S$ of the connected component 1 may be determined by using the following formula: $S = 0.6S_l + 0.4S_c$. It should be understood that the first electronic device may determine final scores S of all the connected components in the foregoing manner. Then, the first electronic device may sort the connected components in descending order of values of S.

54125: The first electronic device determines VX target connected components based on a sorting result.

It should be understood that a quantity of target connected components may be the same as a quantity of version number points. For example, if the quantity of version number points is 4, VX is 4.

Because the quantity of version number points is 4, the first electronic device may select first four target connected components based on the sorting result.

In this way, the first electronic device comprehensively considers the luminance value of the connected component and the pixel value at the location corresponding to the connected component in the image VA2, so that a result of determining VX target connected components with highest scores as version number points can be more accurate.

54126: The first electronic device performs binarization processing on the gray-scale image G2-a based on the VX target connected components, to obtain the image VJ2.

For example, the first electronic device may set pixel values in the VX target connected components in the gray-scale image G2-a to 255, and set a pixel value at a remaining location to 0, to obtain the binary image VJ2.

It should be understood that the locating points and the information points may also be determined in the manner in FIG. 31. A solution thereof is similar, and details are not described herein again.

5413: The first electronic device determines version number points in the image VJ2.

Because the quantity of target connected components is 4, the first electronic device may determine particle points at locations corresponding to the four target connected components as version number points.

550: The first electronic device determines the version number of the second electronic device based on the version number points.

For example, the first electronic device may determine the version number of the second electronic device based on information about an angle between the version number points. For example, as shown in Table 2, different version numbers may correspond to different included angle sequences ($\alpha$1, $\alpha$2, $\alpha$3, $\alpha$4).

For example, the first electronic device determines, based on the version number points, that an included angle sequence between two adjacent version number points is (30°, 90°, 30°, 210°). By querying Table 2, the first electronic device may determine that a version number corresponding to the included angle sequence is the version number 1, and may determine that the version number of the second electronic device is the version number 1.

For example, FIG. 32 is a diagram of a plurality of possibilities of decoding the included angle sequence by the electronic device according to an embodiment of this application.

As shown in (a) in FIG. 32, it is assumed that four version number points obtained by the first electronic device through decoding are respectively V1, V2, V3, and V4, and each version number point is traversed through counterclockwise rotation by using a coordinate axis X-axis as a start point, to obtain a sequence ($\alpha$1, $\alpha$2, $\alpha$3, $\alpha$4) formed by an included angle between every two adjacent version number points. For example, the first electronic device may obtain, by querying Table 2, that a version number corresponding to the included angle sequence is the version number 1.

In another example, the first electronic device may alternatively traverse the version number points clockwise. Alternatively, the first electronic device may use a coordinate axis Y-axis as a start point. This is not limited in embodiments of this application.

In some cases, due to light impact or different use habits of users, the first electronic device may obtain, from different angles, the image displayed by the second electronic device. In this case, even for same version number points, included angle sequences obtained by the first electronic device through decoding may be different. To improve stability of a decoding result, the first electronic device may further perform cyclic shift processing on included angles in the included angle sequence obtained through decoding, to determine whether the included angle sequence obtained through decoding is the same as an included angle sequence corresponding to the version number.

As shown in (b) in FIG. 32, it is assumed that four version number points obtained by the first electronic device through decoding are respectively V1, V2, V3, and V4. The first electronic device traverses each version number point through counterclockwise rotation by using the coordinate axis X-axis as a start point, to obtain an included angle sequence ($\alpha$2, $\alpha$3, $\alpha$4, $\alpha$1) formed by an included angle between every two adjacent version number points. Table 2 is queried, but no version number corresponding to the included angle sequence ($\alpha$2, $\alpha$3, $\alpha$4, $\alpha$1) is matched. The first electronic device may perform cyclic shift processing the included angles in the included angle sequence ($\alpha$2, $\alpha$3, $\alpha$4, $\alpha$1). For example, in one cyclic shift, the first electronic device moves an element at a sequence tail to a sequence head, and sequentially moves remaining elements backward.

In this way, the first electronic device may obtain the included angle sequence ($\alpha$1, $\alpha$2, $\alpha$3, $\alpha$4) by performing one cyclic shift on the included angle sequence ($\alpha$2, $\alpha$3, $\alpha$4, $\alpha$1).

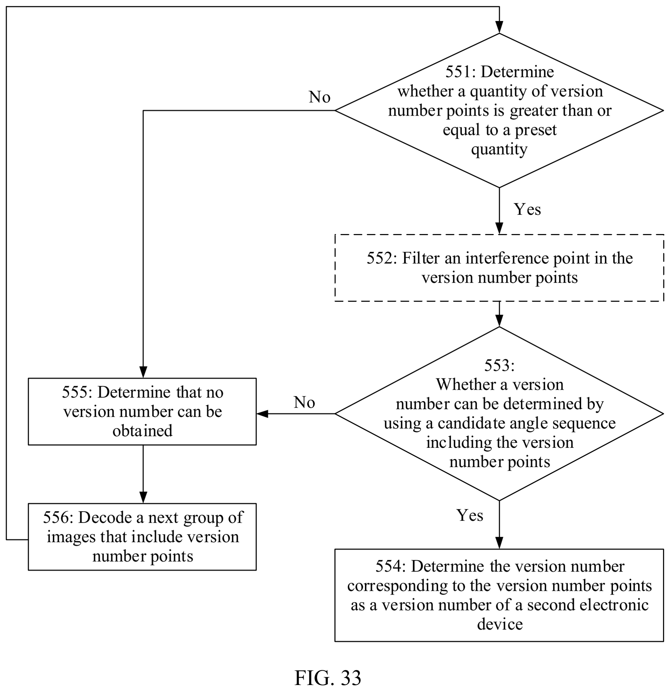

For example, FIG. 33 is a schematic flowchart of determining the version number based on the version number points according to an embodiment of this application. As shown in FIG. 33, step 550 may include step 551 to step 556. 551: The first electronic device determines whether the quantity of version number points is greater than or equal to a preset quantity.

For example, when there are four version number points originally encoded by the second electronic device, the preset quantity may be three. When the quantity of version number points encoded by the second electronic device is another value, the preset quantity may also be another value, where the preset quantity is less than or equal to the quantity of version number points originally encoded by the second electronic device.

In this embodiment of this application, when the quantity of version number points is less than the preset quantity, it indicates that the quantity of version number points is small, and the first electronic device cannot successfully obtain a corresponding version number by using the version number points. Therefore, when the first electronic device determines that the quantity of version number points is less than the preset quantity, step 555 may be performed. When the first electronic device determines that the quantity of version number points is greater than or equal to the preset quantity, step 552 may be performed.

552: The first electronic device filters an interference point in the version number points.

In some implementations, the first electronic device may filter the interference point in the version number points by using coordinate values of the version number points and the previously obtained coordinates of the circle center.

For example, the first electronic device may determine a distance between each version number point and the circle center. When an absolute value of a difference between a distance between a version number point and the circle center and a distance between another version number point and the circle center is greater than a preset difference, the version number point may be an interference point, and the first electronic device may filter out the version number point.

For another example, the first electronic device may fit each version number point by using the previously obtained circle center as a circle center, to obtain a circle or an ellipse. When a version number point definitely deviates, the version number point may be an interference point, and the first electronic device may filter out the version number point.

In some optional embodiments, after filtering the interference point in the version number points, the first electronic device may further determine whether a quantity of currently remaining version number points is greater than or equal to the preset quantity. When the quantity of version number points is less than the preset quantity, it is determined that a version number cannot be determined. When the quantity of version points is still greater than or equal to the preset quantity, step 553 may continue to be performed.

553: The first electronic device determines whether the version number can be determined by using a candidate angle sequence including version number points.

In some implementations, when the first electronic device cannot determine the version number by using the candidate angle sequence including the version number points, step 555 may be performed. When the first electronic device can determine the version number by using the candidate angle sequence including the version number points, step 554 may be performed.

For example, as shown in (a) and (b) in FIG. 32, the candidate angle sequence may be an angle sequence obtained by the first electronic device by traversing, by using the coordinate axis X-axis as a start, all the version number points counterclockwise. If version number points obtained by the first electronic device are shown in (a) in FIG. 32, the candidate angle sequence is ($\alpha$1, $\alpha$2, $\alpha$3, $\alpha$4). If version number points obtained by the first electronic device are shown in (b) in FIG. 32, the candidate angle sequence is ($\alpha$2, $\alpha$3, $\alpha$4, $\alpha$1).

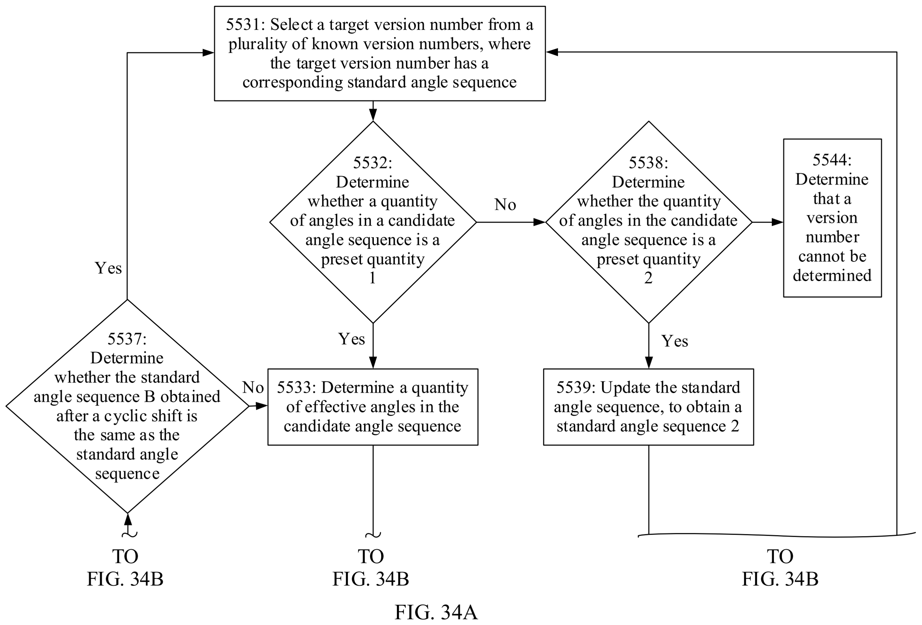

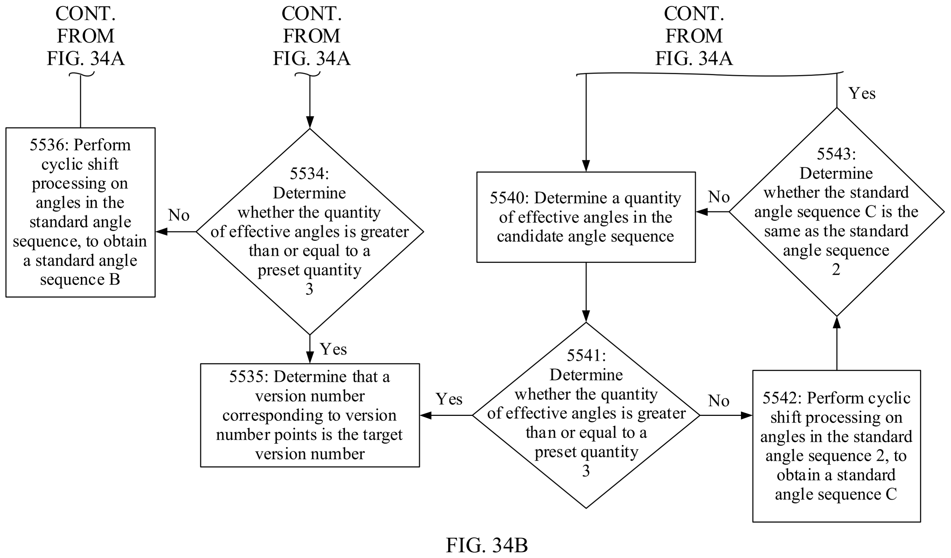

In some examples, FIG. 34A and FIG. 34B are a schematic flowchart of determining the version number by using an angle sequence according to an embodiment of this application. As shown in FIG. 34A and FIG. 34B, step 553 may include step 5531 to step 5544.

5531: The first electronic device selects a target version number from a plurality of known version numbers, where the target version number has a corresponding standard angle sequence.

After the first electronic device determines the candidate angle sequence, the first electronic device cannot directly determine a version number corresponding to the candidate angle sequence. Therefore, the first electronic device may select a target version number from the plurality of known versions, and compare a standard angle sequence of the target version number with the candidate angle sequence, to determine whether the candidate angle sequence matches the standard angle sequence.

It should be understood that the first electronic device may randomly select one of the plurality of known version numbers as the target version number. Alternatively, the first electronic device may select the target version number from the plurality of known version numbers in a preset order. For example, the preset order is an ascending order of the version numbers or a descending order of the version numbers.

For example, refer to Table 2. The first electronic device may include content of Table 2. For example, the target version number is the version number 1, and a standard angle sequence corresponding to the target version number is (30°, 90°, 30°, 210°).

5532: The first electronic device determines whether a quantity of angles in the candidate angle sequence is a preset quantity 1.

For example, there are four version number points, and the preset quantity 1 may be 4.

When the first electronic device determines that the quantity of angles in the candidate angle sequence is the preset quantity 1, step 5533 may be performed. When the first electronic device determines that the quantity of angles in the candidate angle sequence is not the preset quantity 1, step 5538 may be performed.

5533: The first electronic device determines a quantity of effective angles in the candidate angle sequence.

For example, the standard angle sequence is ($\theta1$, $\theta2$, $\theta3$, $\theta4$), and the candidate angle sequence is ($\alpha1$, $\alpha2$, $\alpha3$, $\alpha4$). The first electronic device may determine the quantity of effective angles in the candidate angle sequence in the following manner.

For example, the first electronic device determines whether $|\alpha i - \theta i| \leq \varepsilon \theta i$ is met, where i is 1 to 4, and $\varepsilon$ is a preset value. For example, $\varepsilon$=0.3 or 0.2.

An example in which the first electronic device determines whether a 1st angle in the candidate angle sequence is effective is used for description. When determining $|\alpha 1 - \theta 1| \leq \varepsilon \theta 1$, the first electronic device may determine that the 1st angle is an effective angle; otherwise, it is determined that the 1st angle is an ineffective angle. The first electronic device may determine, in this manner, whether another angle in the candidate angle sequence is an effective angle.

5534: The first electronic device determines whether the quantity of effective angles is greater than or equal to a preset quantity 3.

For example, there are four version number points, the preset quantity 1 may be 4, and the preset quantity 3 may be 2.

In some optional implementations, step 5533 and step 5534 may alternatively be performed in a same step. This is not limited in embodiments of this application.

When the electronic device determines that the quantity of effective angles is greater than or equal to the preset quantity 3, step 5535 may be performed. When the electronic device determines that the quantity of effective angles is less than the preset quantity 3, step 5536 may be performed.

5535: The first electronic device determines that the version number corresponding to the version number points is the target version number.

When the quantity of angles in the candidate angle sequence is 4, when determining that the quantity of effective angles is greater than or equal to 2, the first electronic device may determine that the candidate angle sequence is the same as the standard angle sequence, and the version number corresponding to the candidate angle sequence is the target version number corresponding to the standard angle sequence.

For example, the standard angle sequence is (30°, 90°, 30°, 210°). The quantity of effective angles in the version number points determined by the first electronic device is 2, that is, the included angle between the version number points V1 and V2 is 30°, and the included angle between the version number points V2 and V3 is 90°. This means that the version number points V1, V2, and V3 are all correct, and only the version number point V4 is incorrect. In this case, it may still be determined that the version number corresponding to the candidate angle sequence is the version number 1 corresponding to the standard angle sequence.

In this way, even if one of the four version number points determined by the first electronic device is incorrect, the first electronic device can still correctly obtain the corresponding version number through decoding. This improves fault tolerance of the first electronic device.

5536: The first electronic device performs cyclic shift processing on angles in the standard angle sequence, to obtain a standard angle sequence B.

For example, if the standard angle sequence is (30°, 90°, 30°, 210°), a standard angle sequence B obtained through cyclic shift processing for the first time may be (210°, 30°, 90°, 30°), and a standard angle sequence B obtained through cyclic shift processing for the second time may be (30°, 210°, 30°, 90°).

5537: The first electronic device determines whether the standard angle sequence B obtained after the cyclic shift is the same as the standard angle sequence.

When the first electronic device determines that the standard angle sequence B is the same as the standard angle sequence, it means that the first electronic device has performed cyclic shift processing on the standard angle sequence a plurality of times, all cyclic shift possibilities are completed, and the candidate angle sequence still cannot match the standard angle sequence B. Therefore, the first electronic device needs to select a next version number from the plurality of known version numbers for matching. In this case, the first electronic device may perform step 5531.

5538: The first electronic device determines whether the quantity of angles in the candidate angle sequence is a preset quantity 2.

For example, there are four version number points, the preset quantity 1 may be 4, and the preset quantity 2 may be 3. For example, the candidate angle sequence is ($\alpha$1, $\alpha$2, $\alpha$3).

When the first electronic device determines that the quantity of angles in the candidate angle sequence is the preset quantity 2, step 5539 may be performed. When the first electronic device determines that the quantity of angles in the candidate angle sequence is not the preset quantity 2, step 5544 may be performed.

5539: The first electronic device updates the standard angle sequence, to obtain a standard angle sequence 2.

For example, the standard angle sequence is ($\theta$1, $\theta$2, $\theta$3, $\theta$4), and the candidate angle sequence is ($\alpha$1, $\alpha$2, $\alpha$3). Because the quantity of candidate angles is 3, the first electronic device successfully extracts three version number points, and one version number point is missing. In this case, an angle in the candidate angle sequence is a sum of angle values of two original adjacent angles. The first electronic device may update the standard angle sequence in the following manner.

The first electronic device adds two adjacent angle values in the standard angle sequence, to obtain the following possible standard angle sequences 2:

($\theta$1+$\theta$2, $\theta$3, $\theta$4), ($\theta$1, $\theta$2+$\theta$3, $\theta$4), ($\theta$1, $\theta$2, $\theta$3+$\theta$4), and ($\theta$1+$\theta$4, $\theta$2, $\theta$3).

5540: The first electronic device determines a quantity of effective angles in the candidate angle sequence.

It should be understood that the first electronic device may match the candidate angle sequence with each standard angle sequence 2 in the manner in step 5533, to determine a quantity of effective angles in the candidate angle sequence. It should be understood that the first electronic device may perform, in a preset order, matching on angle sequences included in the standard angle sequence 2, to determine the quantity of effective angles in the candidate angle sequence. 5541: The first electronic device determines whether the quantity of effective angles is greater than or equal to the preset quantity 3.

When the first electronic device determines that the quantity of effective angles is greater than or equal to the preset quantity 3, step 5535 may be performed. In this way, even if the first electronic device fails to extract one version number point, the first electronic device can still successfully determine the version number of the second electronic device. This improves fault tolerance of the first electronic device.

When the first electronic device determines that the quantity of effective angles is less than the preset quantity 3, step 5542 may be performed.

5542: The first electronic device performs cyclic shift processing on the angles in the standard angle sequence 2, to obtain a standard angle sequence C.

Herein, ($\theta$1+$\theta$2, $\theta$3, $\theta$4) in the standard angle sequence 2 is used as an example. After cyclic shift processing for the first time, a standard angle sequence C is obtained as ($\theta$4, $\theta$1+$\theta$2, $\theta$3). After cyclic shift processing for the second time, a standard angle sequence C is obtained as ($\theta$3, $\theta$4, $\theta$1+$\theta$2).

5543: The first electronic device determines whether the standard angle sequence C is the same as the standard angle sequence 2.

For example, the standard angle sequence C obtained by the first electronic device by performing cyclic shift processing on ($\theta$1+$\theta$2, $\theta$3, $\theta$4) is ($\theta$4, $\theta$1+$\theta$2, $\theta$3) for the first time, and the standard angle sequence C is different from an original standard angle sequence in the standard angle sequences 2. In this case, the first electronic device may perform step 5540, to further determine a quantity of effective angles in the candidate angle sequence.

In some examples, when the first electronic device determines that the standard angle sequence C is the same as the standard angle sequence 2, step 5531 may be performed, so that the first electronic device continues to select a next target version number for matching.

It should be understood that, if the first electronic device still cannot successfully match the version number corresponding to the candidate angle sequence after traversing the known version numbers, the first electronic device may decode a next group of images to obtain a new version number, and perform the foregoing matching process, to successfully match the corresponding version number. If the first electronic device still cannot successfully match the version number corresponding to the candidate angle sequence after performing the foregoing matching process a plurality of times, the current decoding fails.

5544: The first electronic device determines that the version number cannot be determined.

When the quantity of angles in the candidate angle sequence is less than the preset quantity 2, the first electronic device cannot determine the version number.

554: The first electronic device determines that the version number corresponding to the version number points is the version number of the second electronic device.

After determining the version number based on the candidate angle sequence formed by the version number points, the first electronic device may determine that the version number is the version number of the second electronic device. 555: The first electronic device determines that no version number can be obtained.

When the first electronic device cannot determine the version number by using the candidate angle sequence formed by the extracted version number points, the first electronic device determines that the version number of the second electronic device cannot be obtained. In other words, the first electronic device cannot determine the code table for information encoding by the second electronic device, and subsequently, the first electronic device may fail to obtain the corresponding device connection information, and cannot establish the connection relationship with the second electronic device by scanning the pattern encoded by the second electronic device. To further improve a possibility of successful decoding by the first electronic device, the first electronic device may further perform step 556.

556: The first electronic device decodes a next group of images that include version number points.

For example, n=5, m=3, and the first electronic device cannot obtain the version number by using the three frames of images. The first electronic device may further obtain a next group of three frames of images in a sliding window manner, and extract version number points in the next group of images. Then, the first electronic device may perform step 551 to successfully perform decoding. This can improve fault tolerance of decoding by the first electronic device. 560: The first electronic device determines an information encoding manner of the second electronic device based on the version number of the second electronic device.

In this embodiment of this application, after determining the version number of the second electronic device, the first electronic device may determine the corresponding information encoding manner of the second electronic device based on the version number.

For example, different version numbers may correspond to different code tables. In this way, after obtaining the version number of the second electronic device through decoding, the first electronic device may determine the encoding manner used by the second electronic device to encode information. For example, the first electronic device may be indicated to smoothly obtain, through decoding, the device connection information encoded by the second electronic device.

For example, the first electronic device determines that the version number of the second electronic device is the version number 1, and the code table corresponding to the version number 1 may be Table 2. In this case, when decoding the device connection information encoded by the second electronic device, the first electronic device may determine the encoding manner of the second electronic device, that is, 12 inner-circle locating points, 12 outer-circle locating points, and 24 information points. Therefore, when determining the target connected component in step 4563, the first electronic device may directly determine that the quantity of target connected components is 48, so that complexity of processing data by the first electronic device can be reduced.

In addition, after determining the information encoding manner of the second electronic device, the first electronic device may further make a precise mask (mask) when filtering the interference point in the particle points.

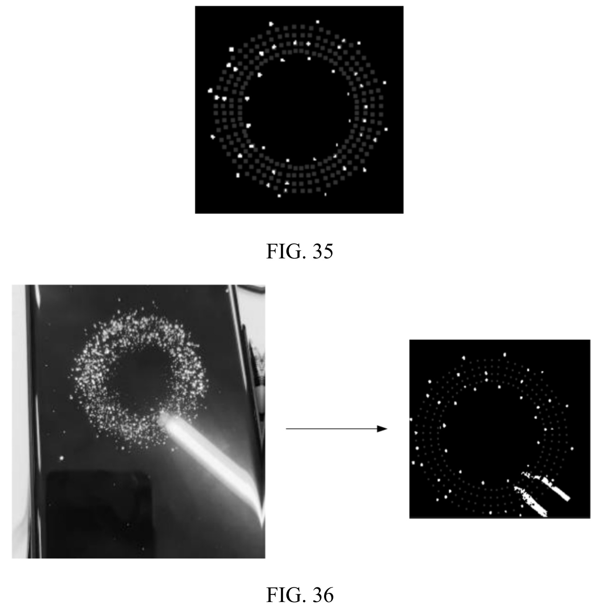

For example, FIG. 35 is a diagram of filtering the particle points by using the precise mask according to an embodiment of this application.

For example, the second electronic device encodes the particle points in the manner shown in FIG. 5 or FIG. 7. There are 48 effective particle points in total, and the encoding region is divided into 12 regions. After determining the version number of the second electronic device, the first electronic device may obtain the foregoing information.

As shown in FIG. 35, the precise mask (mask) may include location distribution of 48 particle points. In step 4564, the first electronic device may directly filter the gray-scale image G2-a based on the precise mask (mask), so that in a filtering result, particle points at locations of the 48 particle points are reserved, and a clutter in another part is filtered out. In this way, the filtering result is more accurate. This helps improve decoding accuracy of the first electronic device.

A principle of determining the precise mask (mask) by the first electronic device is as follows.

Transpositions of coordinates of 24 locating points ($p_0$ to $p_{23}$) encoded by the second electronic device are respectively: $\vec{p_0} = (x_0, y_0)^T$, $\vec{p_1} = (X_1, y_1)^T$, $\vec{p_2} = (x_2, y_2)^T$, ..., and $\vec{p_{23}} = (x_{23}, y_{23})^T$.

Transpositions of coordinates of 24 locating points ($q_0$ to $q_{23}$) extracted by the first electronic device are respectively: $\vec{q_0} = (\widehat{x_0}, \widehat{y_0})^T$, $\vec{q_1} = (\widehat{x_1}, \widehat{y_1})^T$, $\vec{q_2} = (\widehat{x_2}, \widehat{y_2})^T$, ..., and $\vec{q_{23}} = (\widehat{x_{23}}, \widehat{y_{23}})^T$.

Through perspective transformation, a perspective transformation matrix $\vec{h}$ from the encoded locating points to the extracted locating points may be obtained. In addition, coordinates of 24 information points ($r_0$ to $r_{23}$) encoded by the second electronic device are known, and therefore, locations of the information points in the precise mask (mask) may be obtained by using the perspective transformation matrix $\vec{h}$.

In another example, the annular region B in FIG. 21 may also be a mask determined by using such a precise mask (mask), so that the first electronic device can obtain accurate information points, to improve a possibility of successful decoding by the first electronic device.

In another example, when determining the locating points, the first electronic device may alternatively filter the image by using the precise mask (mask), to obtain accurate locations of the locating points.

For example, FIG. 36 is a diagram of determining the information points according to an embodiment of this application. In this manner, the locations of the information points are determined. When the first electronic device obtains the image displayed by the second electronic device, even if the second electronic device is partially tilted, the first electronic device can still obtain the accurate locations of the information points, determine a precise mask (mask), and complete effective clutter filtering.

It should be understood that step 560 is an optional step. In some examples, step 560 may not be performed. This is not limited in embodiments of this application.

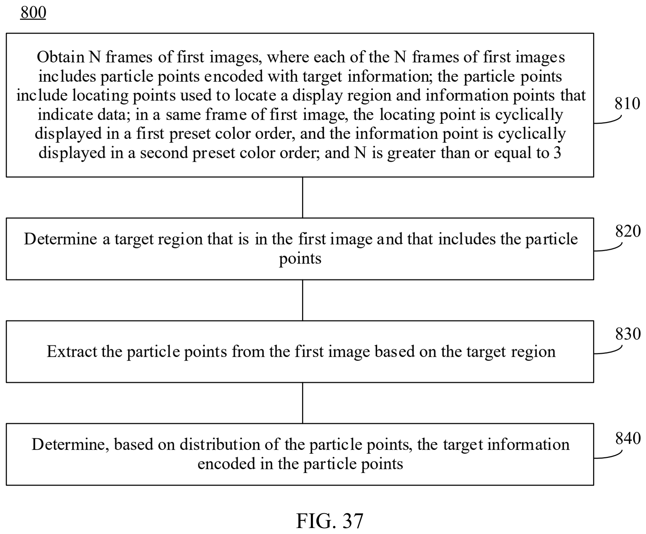

FIG. 37 is a schematic flowchart of an information transmission method according to an embodiment of this application. As shown in FIG. 37, a method 800 may be applied to a first electronic device, and the method 800 may include step 810 to step 840.

810: The first electronic device obtains N frames of first images, where each of the N frames of first images includes particle points encoded with target information; the particle points include locating points used to locate a display region and information points that indicate data; in a same frame of first image, the locating point is cyclically displayed in a first preset color order, and the information point is cyclically displayed in a second preset color order; and N is greater than or equal to 3.

For example, as shown in FIG. 5, the locating points are used to locate the display region 1 to the display region 12. As shown in FIG. 7, the display region may include information points that indicate data.

It should be understood that specific color orders and quantities of colors included in the first preset color order and the second preset color order are not limited in embodiments of this application. The first preset color order is different from the second preset color order.

For example, the first preset color order may be a first color and a second color, and the first preset color order may be the second color and the first color.

Alternatively, the first preset color order may be the first color, the second color, and a third color, and the second preset color order may be the third color, the second color, and the first color.

For example, the locating points may further include external locating points and internal locating points.

That the locating point is cyclically displayed in the first preset color order includes:
the external locating point is cyclically displayed in a first color, a second color, and a third color, and the internal locating point is cyclically displayed in the second color, the third color, and the first color, where the first color, the second color, and the third color are different from each other.

For example, that the information point is cyclically displayed in the second preset color order includes:
the information point is cyclically displayed in the third color, the first color, and the third color.

For example, the first color is yellow, the second color is blue, and the third color is gray. Alternatively, the first color, the second color, and the third color may be other colors.

820: The first electronic device determines a target region that is in the first image and that includes the particle points. In some examples, the particle points may be distributed in an annular manner, and the target region may be a rectangular region including the particle points. For example, the target region may be the ROI in step 430.

In another example, the particle points may alternatively be distributed in another shape. This is not limited in embodiments of this application.

830: The first electronic device extracts the particle points from the first image based on the target region.

It should be understood that the first electronic device may determine, by predetermining the target region, that the particle points in the first image are distributed in the target region, and subsequently process an image in the target region, to extract the corresponding particle points.

840: The first electronic device determines, based on distribution of the particle points, the target information encoded in the particle points.

For example, the first electronic device may determine each display region based on distribution of the locating points, determine information encoded in each display region based on distribution of information points in each display region, and determine the final target information based on the information encoded in each display region.

According to this embodiment of this application, the first electronic device may obtain the N frames of first images, and the first image includes the particle points encoded with the target information. In addition, in the same frame of image, the locating point and the information point in the particle points are cyclically displayed in the preset color orders, so that the encoded particle points can have a good concealment effect.

In addition, the first electronic device only needs to scan the first image, to extract the particle points, and further determine the target information encoded in the particle points. For example, the target information is a connection pairing code (for example, a PIN code) used for a device connection. The first electronic device may obtain the connection pairing code in this convenient manner, and establish a device connection relationship with a second electronic device. This way streamlines a device interaction process and enhances the futuristic appeal.

In some implementations, before determining the target region that is in the first image and that includes the particle points, the method 800 further includes: determining that a first distance between the first electronic device and the second electronic device is less than or equal to a preset distance.

For example, the first electronic device may determine the first distance to the second electronic device in the manner in FIG. 9.

A specific value of the preset distance is not limited in embodiments of this application. For example, the preset distance may be 30 centimeters or 60 centimeters.

According to this embodiment of this application, when the first distance between the first electronic device and the second electronic device is less than the preset distance, the target region that is in the first image and that includes the particle points is determined, so that the information transmission method in this application can be performed when the distance between the two electronic devices is appropriate, to improve a possibility of successful decoding by the first electronic device.

In some implementations, determining the target region that is in the first image and that includes the particle points includes:

the first electronic device performs downsampling on a 1st frame of first image in the N frames of first images based on the first distance, to obtain a second image;
the first electronic device performs binarization processing on the second image, to obtain a binary image; and
the first electronic device determines the target region based on the binary image.

Optionally, the first electronic device may further crop the 1st frame of first image, and perform downsampling on a cropped image to obtain the second image.

For example, as shown in FIG. 10, the 1st frame of first image may be the image A1, and the second image may be the image C1. The binary image may be the image F1, and the target region may be the ROI.

According to this embodiment of this application, the first electronic device performs downsampling on the first image based on the first distance to the second electronic device, performs binarization processing on the second image obtained through downsampling, and determines the target region based on the binary image. In this way, a downsampling rate can be more appropriate, and a workload of determining the target region by the first electronic device by processing the image can be reduced.

Optionally, the 1st frame of first image may be alternatively replaced with any one of first several frames of images in the N frames of first images. This is not limited in embodiments of this application. Alternatively, the 1st frame of first image may be replaced with one of the N frames of first images.

In some examples, that the first electronic device determines the target region based on the binary image includes:

the first electronic device performs a closing operation and an opening operation on the binary image, and determines the target region based on an image obtained through the closing operation and the opening operation.

In some implementations, the method 800 further includes:

performing downsampling on the N frames of first images based on the target region, to obtain N frames of third images;
performing intra-frame differential processing on the N frames of third images by using a first intra-frame difference parameter, to obtain N frames of first gray-scale images; and
cropping the N frames of first gray-scale images based on the target region, to obtain N frames of second gray-scale images.

For example, as shown in FIG. 13, the N frames of first images may be the n frames of images A2, or may be the n frames of images B2 obtained by cropping the n frames of images A2. The N frames of third images may be the n frames of images C2, the first gray-scale image may be the gray-scale image D2, and the second gray-scale image may be the image E2.

According to this embodiment of this application, because the target region has been determined, the first electronic device performs downsampling on the N frames of first images based on the target region, so that a downsampling rate can be accurately determined, and a workload of processing the image by the first electronic device can be reduced. In addition, intra-frame differential processing is performed on the image, so that particle points included in the obtained first gray-scale image are clearer. This helps the first electronic device obtain information encoded in the first gray-scale image. Further, the first electronic device crops the first gray-scale image by using the previously obtained target region, so that a size of the second gray-scale image obtained through cropping is the same as that of the target region, and the first electronic device only needs to process the second gray-scale image that includes a particle point part. This improves a decoding speed of the first electronic device.

In some implementations, extracting the particle points from the first image based on the target region includes:

filtering M frames of second gray-scale images in the N frames of second gray-scale images by using an annular region capable of covering the target region, to obtain M frames of third gray-scale images, where each of the M frames of gray-scale images reserves a part covered by the annular region;
performing inter-frame differential processing on the M frames of third gray-scale images, to obtain M frames of fourth gray-scale images;
performing binarization processing on the M frames of fourth gray-scale images, to obtain M frames of binary images;
performing an OR operation on the M frames of binary images, to obtain a first target binary image;
performing interference point filtering on the first target binary image, to obtain a second target binary image; and extracting the particle points from the second target binary image.

For example, as shown in FIG. 14, the annular region capable of covering the target region may be the annular region A, the third gray-scale image may be the image F2, the fourth gray-scale image may be the image G2, the binary image may be H2, the first target binary image may be the image I2, and the second target binary image may be the image J2.

According to this embodiment of this application, the second gray-scale image is filtered by using the annular region capable of covering the target region, to obtain particle points corresponding to the annular region, and particle points outside the annular region is filtered out. In this way, the M frames of third gray-scale images obtained by the first electronic device include particle points in the annular region, and a clutter in another region is filtered out.

In addition, the first electronic device may reserve, through differential processing between a plurality of frames, a different part in the plurality of frames of images. During encoding, the second electronic device cyclically displays the locating points and the information points in different colors, and a picture background and a clutter are the same. Therefore, the locating points and the information points in the image may be reserved as many as possible through differential processing, and a clutter part may be filtered out.

In addition, the first electronic device performs interference point filtering on the first target binary image, so that quality of the obtained second target binary image is better. This helps the first electronic device successfully extract the particle points with the encoded information from the second target binary image.

In some implementations, the method 800 further includes:

determining a plurality of groups of first information based on the N frames of first images; and
fusing the plurality of groups of first information, to obtain a first fusion result including the target information.

It should be understood that the first information is target information determined by the first electronic device based on the N frames of first images. For example, the target information encoded by the second electronic device is a connection pairing code 147258. The first electronic device needs to decode the obtained image to obtain the correct connection pairing code, but due to impact of an environment and a decoding capability, the first information obtained by the first electronic device through decoding is not necessarily completely the same as the target information encoded by the second electronic device. Therefore, the first electronic device may fuse the plurality of groups of first information to obtain the target information through fusion.

An example in which N is 5 is used for description. The first electronic device may determine a group of first information based on a 1st frame of image, a 2nd frame of image, and a 3rd frame of image, determine a group of first information based on the 2nd frame of image, the 3rd frame of image, and a 4th frame of image, and determine a group of first information based on the 3rd frame of image, the 4th frame of image, and a 5th frame of image. Then, the first electronic device may fuse the three groups of first information to obtain the final target information.

For example, as shown in FIG. 22, the first information may be the decoding results of J2-1, J2-2, and J2-3. The first fusion result may be the fusion result.

According to this embodiment of this application, the first electronic device may determine the plurality of groups of first information based on the N frames of first images, and fuse the plurality of groups of first information to obtain the final target information. In this way, the finally obtained target information can be more accurate.

In some implementations, the method 800 further includes:

obtaining second N frames of first images;
determining a plurality of groups of second information based on the second N frames of first images;
fusing the plurality of groups of second information, to obtain a second fusion result including the target information; and
fusing the first fusion result and the second fusion result, to obtain a third fusion result, where the third fusion result includes the finally determined target information.

It may be understood that the second fusion result may be determined in the same manner as the first fusion result. For example, as shown in FIG. 23, the second fusion result may be the second-round fusion result, the first fusion result may be the first-round fusion result, and the third fusion result is the fusion result in FIG. 23.

According to this embodiment of this application, the first electronic device may further fuse a plurality of rounds of fusion results, so that the finally determined target information can be more accurate.

In some implementations, determining, based on the distribution of the particle points, the target information encoded in the particle points includes: determining a plurality of display regions based on a part of the locating points in the particle points;

determining information encoded in each of the plurality of display regions based on distribution of information points included in the plurality of display regions; and

fusing the information encoded in each display region in a preset order, to obtain the target information.

For example, as shown in FIG. 5, the locating points may include the internal locating points and the external locating points, and the display region 1 to the display region 12 may be determined based on the distribution of the locating points. As shown in FIG. 7, the information points may be distributed in each display region, and different information are encoded based on different distribution of the information points.

As shown in FIG. 20, the first electronic device may determine the distribution of the information points in each display region in the manner shown in FIG. 20, obtain the demodulation information of all the display regions, and determine the information encoded in each display region by querying Table 1.

According to this embodiment of this application, the first electronic device may determine the plurality of display regions based on the distribution of the locating points, determine the information encoded in each display region, and then fuse the information encoded in the plurality of display regions, to obtain the encoded target information. In this technical solution, the first electronic device can successfully obtain, through decoding, the target information encoded by the second electronic device.

In some implementations, the first information includes at least one of a connection pairing code, account login information, a product serial number, and a media access control MAC address of the second electronic device.

In another example, the target information may further include other content, for example, a conference link. This is not limited in embodiments of this application.

In some implementations, the particle points are distributed in an annular region.

In another example, the particle points may alternatively be distributed in another shape, for example, a rectangle or another regular or irregular shape.

In some implementations, the method 800 may further include:

determining the located display region based on the locating points in the particle points; and

determining a version number of the second electronic device based on a quantity of information points in the display region, where different version numbers correspond to different quantities of information points in the display region.

For example, different quantities of information points included in the display region correspond to different version numbers of the second electronic device.

It should be understood that the first electronic device may alternatively determine the version number of the second electronic device based on a quantity of information points in a display region included in the plurality of frames.

For example, in the technical solution in FIG. 7, two information points are encoded in each display region, and the technical solution may correspond to the version number 1. In the version number 2, the second electronic device may encode three information points in each display region, and in the version number 3, the second electronic device may encode four information points in each display region.

For example, as shown in FIG. 7, the second electronic device encodes 12 display regions in each frame of image. When a ratio of a quantity of display regions that include two information points in the 12 display regions of each frame of image and that are obtained by the first electronic device through decoding to the 12 display regions is greater than or equal to a preset ratio, it is determined that the second electronic device encodes two information points in each display region, and it is determined that the version number of the second electronic device is the version number 1.

For another example, when a ratio of a quantity of display regions that include three information points in the 12 display regions of each frame of image and that are obtained by the first electronic device through decoding to the 12 display regions is greater than or equal to the preset ratio, it is determined that the second electronic device encodes three information points in each display region, and it is determined that the version number of the second electronic device is the version number 2.

For another example, the second electronic device encodes 12 display regions for each frame of image, and display regions included in the m frames of images obtained by the first electronic device through decoding are 12*m.

When a ratio of a quantity of display regions including two information points to 12*m is greater than or equal to the preset ratio, it is determined that the second electronic device encodes two information points in each display region, and it is determined that the version number of the second electronic device is the version number 1.

In some examples, due to interference of some clutters, there may be a plurality of cases for the information points included in each display region included in the m frames of images obtained by the first electronic device through decoding.

For example, in the m frames of images obtained by the first electronic device through decoding, if a ratio of a quantity of display regions including two information points to 12*m is less than the preset ratio, and a ratio of a quantity of display regions including three information points to 12*m is less than the preset ratio, the first electronic device determines that the version number of the second electronic device cannot be decoded, and the first electronic device may determine that a version of the second electronic device is an unknown version.

It should be understood that a specific value of the preset ratio is not limited in embodiments of this application. For example, the preset ratio may be 0.7 or 0.8.

It should be understood that, the version number of the second electronic device may be a system version number of the second electronic device, or may be a version number used by the second electronic device to encode information. According to this embodiment of this application, the first electronic device may determine the version number of the second electronic device by using the quantity of information points in the display region that is obtained through decoding, so that the first electronic device can conveniently and quickly determine the version number of the second electronic device. In this way, the first electronic device simply and efficiently determines the version number of the second electronic device.

In some implementations, the particle points further include corresponding version number points that indicate a version number of the second electronic device, and in the same frame of first image, the version number point is cyclically displayed in a third preset color order.

Optionally, a quantity of version number points is a preset quantity. For example, there are four or five version number points.

The third preset color order is different from the first preset color order and the second preset color order. For example, the third preset color order is a fourth color, a fifth color, and a sixth color, and the fourth color, the fifth color, and the sixth color are different from each other.

For example, the fourth color, the fifth color, and the sixth color each correspond to one of green, red, and gray. For example, the fourth color is green, the fifth color is red, and the sixth color is gray. For another example, the fourth color is red, the fifth color is gray, and the sixth color is green.

It should be understood that the fourth color, the fifth color, and the sixth color may alternatively be other colors. This is not limited in embodiments of this application.

Optionally, a difference between a center of gravity of a triangle formed by the fourth color, the fifth color, and the sixth color in a color gamut diagram and a center of gravity of a triangle formed by the first color, the second color, and the third color in the color gamut diagram is less than a preset difference. In this way, the information points and the locating points can have colors similar to those of the version number points, and can be better concealed in the background.

According to this embodiment of this application, the particle points may further include the version number points that indicate the version number. In the same frame of image, the version number is cyclically displayed in the preset color order. In this way, the version number points can be well concealed in the background, so that the user cannot perceive existence of these particle points with the naked eyes.

In some implementations, the method 800 may further include:

performing intra-frame differential processing on the N frames of third images by using a second intra-frame difference parameter, to obtain N frames of fifth gray-scale images; and

cropping the N frames of fifth gray-scale images based on the target region, to obtain N frames of sixth gray-scale images.

It should be understood that the second intra-frame difference parameter is different from the first intra-frame difference parameter. Alternatively, that the difference parameters are different may be understood as that an intra-frame difference mode used by the first electronic device for the information point and the locating point is different from an intra-frame difference mode used for the version number point.

For example, a difference mode corresponding to the first intra-frame difference parameter may be the intra-frame difference mode 1 described above, and a difference mode corresponding to the second intra-frame difference parameter may be the intra-frame difference mode 2 described above. For details, refer to the foregoing related descriptions.

In this way, when extracting the information points and the locating points, the first electronic device can filter out the version number points, and when extracting the version number points, the first electronic device can filter out the information points and the locating points. This can improve a possibility of successful decoding by the first electronic device.

In some implementations, that the first electronic device extracts the particle points from the first image based on the target region includes:

filtering M frames of sixth gray-scale images in the N frames of sixth gray-scale images by using a second annular region capable of covering the version number points, to obtain M frames of seventh gray-scale images, where each of the M frames of seventh gray-scale images reserves a part covered by the second annular region, and M is less than or equal to N;

performing inter-frame differential processing on the M frames of seventh gray-scale images, to obtain M frames of eighth gray-scale images;

performing binarization processing on the M frames of eighth gray-scale images, to obtain M frames of binary images B;

performing an OR operation on the M frames of binary images B, to obtain a third target binary image;

performing interference point filtering on the third target binary image, to obtain a fourth target binary image; and

extracting the version number points in the particle points from the fourth target binary image.

For example, as shown in FIG. 29, the sixth gray-scale image may be the image VE2, the seventh gray-scale image may be the image VF2, the eighth gray-scale image may be the image VG2, the binary image B may be the binary image VH2, the third target binary image may be VI2, and the fourth target binary image may be the image VJ2.

It should be understood that the first electronic device may perform interference point filtering on the third target binary image in the manner in FIG. 31, to obtain the fourth target binary image.

For example, the second annular region capable of covering the version number points may be used as a mask (mask) to filter the sixth gray-scale image, to reserve the part (including the version number points) covered by the second annular region.

In some examples, if the version number points are encoded on an inner circle in which inner-circle locating points in the locating points are located, the second annular region may be an annular region covering the inner circle.

For example, the second annular region may be the annular region VA described above.

In some examples, if the version number points are encoded on an outer circle in which outer-circle locating points in the locating points are located, the second annular region may be an annular region covering the outer circle. According to this embodiment of this application, the first electronic device filters the sixth gray-scale image by using the second annular region, so that particle points outside the second annular region can be filtered out, and the first electronic device can successfully extract the version number points from the particle points.

In addition, the first electronic device performs interference point filtering on the third target binary image, so that quality of the obtained fourth target binary image is better. This helps the first electronic device successfully extract the version number points from the particle points.

In some implementations, that the first electronic device determines, based on the distribution of the particle points, the target information encoded in the particle points includes:

determining an angle sequence based on an angle between every two adjacent version number points in the version number points; and

determining the version number of the second electronic device based on a relationship between the angle sequence and a preset angle sequence, where different version numbers correspond to different preset angle sequences. It should be understood that the first electronic device may determine the angle sequence based on the angle between every two adjacent version number points in a preset order. For example, if there are four version number points, the angle sequence may include four angle values.

For example, as shown in FIG. 27, the version number points may be V1, V2, V3, and V4, and the angle sequence may be ($\alpha$1, $\alpha$2, $\alpha$3, $\alpha$4).

For example, as shown in Table 2, the version number 1 corresponds to the preset angle sequence 1 (30°, 90°, 30°, 210°), the version number 2 corresponds to the preset angle sequence 2 (15°, 60°, 15°, 270°), and the version number 3 corresponds to the preset angle sequence 3 (45°, 30°, 45°, 240°).

According to this embodiment of this application, the first electronic device may determine the angle sequence based on distribution of the version number points, and match the angle sequence with the preset angle sequence, to determine the version number of the second electronic device.

In some implementations, that the first electronic device determines the version number of the second electronic device based on the relationship between the angle sequence and the preset angle sequence includes:

matching each angle in the angle sequence with a corresponding angle in the preset angle sequence, to determine a quantity of effective angles in the angle sequence; and

when the quantity of effective angles in the angle sequence is greater than a first preset quantity, determining that the version number of the second electronic device is a version number corresponding to the preset angle sequence.

For example, when a difference between a 1st angle in the angle sequence and a 1st angle in the preset angle sequence is small (for example, the difference is less than a preset value), it may be determined that the 1st angle is an effective angle.

For another example, as shown in FIG. 34A and FIG. 34B, the angle sequence is the candidate angle sequence, the preset angle sequence is the standard angle sequence, and the first electronic device may further determine an effective angle in the angle sequence in the manner of determining the effective angle in step 5533.

For example, if the angle sequence includes four angles, the first preset quantity may be 2.

According to this embodiment of this application, when the angle sequence is matched with a preset angle sequence, if a quantity of effective angles is greater than the first preset quantity, it may be determined that the version number of the second electronic device is a version number corresponding to the preset angle sequence.

In some implementations, the version number points are located on a circle of the locating points, and each of the version number points is located between two adjacent locating points.

It should be understood that the circle of the locating points may be an inner circle or an outer circle.

For example, as shown in (a) in FIG. 27, the version number points are located on the inner circle of the locating points, and each version number point is located between two adjacent locating points.

For example, as shown in (b) in FIG. 27, the version number points are located on the outer circle of the locating points, and each version number point is located between two adjacent locating points.

In another example, alternatively, two version number points in the version number points may be located between two adjacent locating points. This is not limited in embodiments of this application.

According to this embodiment of this application, when the version number points are located in the inner circle or the outer circle of the locating points, the version number points may not affect encoding of the information points.

In addition, when the version number points are located in the inner circle, an image obtained by the first electronic device through secondary cropping may be smaller, so that a data amount of the first electronic device is reduced.

In some implementations, the method 800 may further include:

displaying first prompt information when it is determined that the version number of the second electronic device is higher than a version number of the first electronic device, where the first prompt information prompts to upgrade the first electronic device, or the first prompt information prompts a user to establish a connection relationship with the second electronic device by using the connection pairing code.

For example, as shown in FIG. 26(c), the first prompt information may be the prompt card 312, and the prompt card may include text content "Scanning failed" and "A current version is low, and a pattern of the peer device cannot be parsed. Please use the connection code for connection or try again after the upgrade."

According to this embodiment of this application, when the first electronic device determines that the version number of the second electronic device is higher than the version number of the first electronic device, the first prompt information may be displayed, to prompt the user that a current version of the first electronic device is low and the first electronic device needs to be upgraded, or when a device connection is established by scanning a pattern, the first prompt information may alternatively prompt the user to establish the connection relationship with the second electronic device by using the connection pairing code or in a manual manner.

An embodiment of this application further provides an information transmission method. The method is applied to a second electronic device, and the method includes: generating particle points encoded with target information; displaying a first image, where the first image includes the particle points encoded with the target information, the particle points include locating points used to locate a display region and information points that indicate data, and in a same frame of first image, the locating point is cyclically displayed in a first preset color order, and the information point is cyclically displayed in a second preset color order.

According to this embodiment of this application, the particles encoded in the first image displayed by the second electronic device include the locating points and the information points. In the same frame of first image, the locating point is cyclically displayed in the first preset color order, and the information point is cyclically displayed in the second preset color order. In this way, the locating point and the information point may be cyclically displayed in different colors, to increase hiding of the particle points.

In some implementations, the particle points further include corresponding version number points that indicate a version number of the second electronic device, and in the same frame of first image, the version number point is cyclically displayed in a third preset color order.

According to this embodiment of this application, the particle points encoded by the second electronic device may further include the version number points that indicate the version number. In the same frame of image, the version number is cyclically displayed in the preset color order. In this way, the version number points can be well concealed in a background, so that a user cannot perceive existence of these particle points with naked eyes.

An embodiment of this application further provides an electronic device, including one or more processors and one or more memories. The one or more memories store one or more instructions, and when the instructions are executed by the one or more processors, the information transmission method in any one of the foregoing possible implementations is performed.

An embodiment of this application further provides an apparatus, including a processor and a communication interface. The communication interface is configured to receive a signal, and transmit the signal to the processor. The processor processes the signal, so that the information transmission method in any one of the foregoing possible implementations is performed.

The apparatus may be a chip. For example, the chip may be a chip system, an independent chip, or the like.

An embodiment of this application further provides a readable storage medium. The readable storage medium stores instructions. When the instructions are run on an electronic device, the electronic device is enabled to perform the foregoing related method steps to implement the information transmission method in the foregoing embodiments.

An embodiment of this application further provides a program product. When the program product runs on an electronic device, the electronic device is enabled to perform the foregoing related steps to implement the information transmission method in the foregoing embodiments.

An embodiment of this application further provides an apparatus, including a module configured to implement the information transmission method in any one of the foregoing embodiments.

In addition, an embodiment of this application further provides an apparatus. The apparatus may be specifically a chip, a component, or a module. The apparatus may include a processor and a memory that are connected to each other. The memory is configured to store instructions. When the apparatus runs, the processor may execute the instructions stored in the memory, so that the apparatus performs the information transmission method in the foregoing method embodiments.

The device, the readable storage medium, the program product, or the apparatus provided in embodiments may be configured to perform the corresponding methods provided above. Therefore, for beneficial effects that can be achieved, refer to the beneficial effects of the corresponding methods provided above. Details are not described herein again.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, and may be located at one location, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes: any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An information transmission method, wherein the method is applied to a first electronic device, and the method comprises:

    obtaining N frames of first images, wherein each of the N frames of first images comprises particle points encoded with target information; the particle points comprise locating points used to locate a display region and information points that indicate data; in a same frame of first image, the locating point is cyclically displayed in a first preset color order, and the information point is cyclically displayed in a second preset color order; and N is greater than or equal to 3;
    determining a target region that is in the first image and that comprises the particle points;
    extracting the particle points from the first image based on the target region; and
    determining, based on distribution of the particle points, the target information encoded in the particle points.

2. The method according to claim 1, wherein before determining the target region that is in the first image and that comprises the particle points, the method further comprises:
    determining that a first distance between the first electronic device and a second electronic device is less than or equal to a preset distance.

3. The method according to claim 2, wherein determining the target region that is in the first image and that comprises the particle points comprises:

    performing downsampling on a 1st frame of first image in the N frames of first images based on the first distance, to obtain a second image;
    performing binarization processing on the second image, to obtain a binary image; and
    determining the target region based on the binary image.

4. The method according to claim 3, wherein the method further comprises:

    performing downsampling on the N frames of first images based on the target region, to obtain N frames of third images;
    performing intra-frame differential processing on the N frames of third images by using a first intra-frame difference parameter, to obtain N frames of first gray-scale images; and
    cropping the N frames of first gray-scale images based on the target region, to obtain the N frames of second gray-scale images.

5. The method according to claim 4, wherein extracting the particle points from the first image based on the target region comprises:

    filtering M frames of second gray-scale images in the N frames of second gray-scale images by using an annular region capable of covering the target region, to obtain M frames of third gray-scale images, wherein each of the M frames of third gray-scale images reserves a part covered by the annular region, and M is less than or equal to N;
    performing inter-frame differential processing on the M frames of third gray-scale images, to obtain M frames of fourth gray-scale images;
    performing binarization processing on the M frames of fourth gray-scale images, to obtain M frames of binary images;
    performing an OR operation on the M frames of binary images, to obtain a first target binary image;
    performing interference point filtering on the first target binary image, to obtain a second target binary image; and
    extracting the particle points from the second target binary image.

6. The method according to any one of claims 1 to 5, wherein the method further comprises:

determining a plurality of groups of first information based on the N frames of first images; and

fusing the plurality of groups of first information, to obtain a first fusion result comprising the target information.

7. The method according to claim 6, wherein the method further comprises:

obtaining second N frames of first images;

determining a plurality of groups of second information based on the second N frames of first images;

fusing the plurality of groups of second information, to obtain a second fusion result comprising the target information; and

fusing the first fusion result and the second fusion result, to obtain a third fusion result, wherein the third fusion result comprises the finally determined target information.

8. The method according to any one of claims 1 to 7, wherein determining, based on the distribution of the particle points, the target information encoded in the particle points comprises:

determining a plurality of display regions based on distribution of the locating points in the particle points;

determining information encoded in each of the plurality of display regions based on distribution of information points comprised in the plurality of display regions; and

fusing the information encoded in each display region in a preset order, to obtain the target information.

9. The method according to any one of claims 1 to 8, wherein the target information comprises at least one of a connection pairing code, account login information, a product serial number, and a media access control MAC address of the second electronic device.

10. The method according to any one of claims 1 to 9, wherein the particle points are distributed in an annular region.

11. The method according to claim 5, wherein the method further comprises:

determining the located display region based on the locating points in the particle points; and

determining a version number of the second electronic device based on a quantity of information points in the display region, wherein different version numbers correspond to different quantities of information points in the display region.

12. The method according to any one of claims 1 to 10, wherein the particle points further comprise corresponding version number points that indicate a version number of the second electronic device, and in the same frame of first image, the version number point is cyclically displayed in a third preset color order.

13. The method according to claim 12, wherein the method further comprises:

performing intra-frame differential processing on the N frames of third images by using a second intra-frame difference parameter, to obtain N frames of fifth gray-scale images; and

cropping the N frames of fifth gray-scale images based on the target region, to obtain the N frames of sixth gray-scale images.

14. The method according to claim 13, wherein extracting the particle points from the first image based on the target region comprises:

filtering M frames of sixth gray-scale images in the N frames of sixth gray-scale images by using a second annular region capable of covering the version number points, to obtain M frames of seventh gray-scale images, wherein each of the M frames of seventh gray-scale images reserves a part covered by the second annular region, and M is less than or equal to N;

performing inter-frame differential processing on the M frames of seventh gray-scale images, to obtain M frames of eighth gray-scale images;

performing binarization processing on the M frames of eighth gray-scale images, to obtain M frames of binary images B;

performing an OR operation on the M frames of binary images B, to obtain a third target binary image;

performing interference point filtering on the third target binary image, to obtain a fourth target binary image; and

extracting the version number points in the particle points from the fourth target binary image.

15. The method according to any one of claims 12 to 14, wherein determining, based on the distribution of the particle points, the target information encoded in the particle points comprises:

determining an angle sequence based on an angle between every two adjacent version number points in the version number points; and
determining the version number of the second electronic device based on a relationship between the angle sequence and a preset angle sequence, wherein different version numbers correspond to different preset angle sequences.

16. The method according to claim 15, wherein determining the version number of the second electronic device based on the relationship between the angle sequence and the preset angle sequence comprises:

matching each angle in the angle sequence with a corresponding angle in the preset angle sequence, to determine a quantity of effective angles in the angle sequence; and
when the quantity of effective angles in the angle sequence is greater than a first preset quantity, determining that the version number of the second electronic device is a version number corresponding to the preset angle sequence.

17. The method according to any one of claims 12 to 16, wherein the version number points are located on a circle of the locating points, and each of the version number points is located between two adjacent locating points.

18. The method according to any one of claims 11 to 17, wherein the method further comprises:
displaying first prompt information when it is determined that the version number of the second electronic device is higher than a version number of the first electronic device, wherein the first prompt information prompts to upgrade the first electronic device, or the first prompt information prompts a user to establish a connection relationship with the second electronic device by using the connection pairing code.

19. An information transmission method, wherein the method is applied to a second electronic device, and the method comprises:

generating particle points encoded with target information; and
displaying a first image, wherein the first image comprises the particle points encoded with the target information, the particle points comprise locating points used to locate a display region and information points that indicate data, and in a same frame of first image, the locating point is cyclically displayed in a first preset color order, and the information point is cyclically displayed in a second preset color order.

20. The method according to claim 19, wherein the particle points further comprise corresponding version number points that indicate a version number of the second electronic device, and in the same frame of first image, the version number point is cyclically displayed in a third preset color order.

21. An electronic device, comprising one or more processors and one or more memories, wherein the one or more memories store one or more programs, and when the one or more programs are executed by the one or more processors, the information transmission method according to any one of claims 1 to 19 is performed.

22. A chip, wherein the chip comprises a processor and a communication interface, the communication interface is configured to: receive a signal and transmit the signal to the processor, and the processor processes the signal, so that the information transmission method according to any one of claims 1 to 19 is performed.

23. A readable storage medium, wherein the readable storage medium stores instructions, and when the instructions are run on a device, the information transmission method according to any one of claims 1 to 19 is performed.

24. A program product, wherein the program product comprises program code, and when the program code is run on an electronic device, the information transmission method according to any one of claims 1 to 19 is performed.

Electronic device 100

FIG. 1

| Application layer | Camera | Calendar | Maps | WLAN | Music | Messaging |
|---|---|---|---|---|---|---|
| | Gallery | Phone | Navigation | Bluetooth | Videos | ... |

| Application framework layer | Window manager | Content provider | Phone manager | Resource manager |
|---|---|---|---|---|
| | Notification manager | View system | ... | |

| System library | Surface manager | Three-dimensional graphics processing library | | |
|---|---|---|---|---|
| | Two-dimensional graphics engine | Media library | Image processing library | ... |

| Kernel layer | Display driver | Camera driver | |
|---|---|---|---|
| | Audio driver | Sensor driver | ... |

FIG. 2

FIG. 3(a)

300

FIG. 3(b)

FIG. 4

FIG. 5

FIG. 6

FIG. 7

400

```
           ┌─────────────┐
           │    Start    │
           └─────────────┘
                  │
                  ▼
   ┌──────────────────────────────────┐
   │   410: Obtain an image A1         │
   └──────────────────────────────────┘
                  │
                  ▼
          ╱────────────────╲
         ╱  420: Determine   ╲                    Yes
   ╱ whether a distance A to a second electronic device ╲────────►
         ╲ is greater than a preset distance ╱
          ╲────────────────╱
                  │
                  │ No
                  ▼
   ┌──────────────────────────────────┐
   │   430: Extract an ROI             │
   └──────────────────────────────────┘
                  │
                  ▼
   ┌──────────────────────────────────┐
   │  440: Determine particle points   │
   │        including information       │
   └──────────────────────────────────┘
                  │
                  ▼
   ┌──────────────────────────────────┐
   │  450: Determine locating points   │
   │  and information points in the    │
   │         particle points           │
   └──────────────────────────────────┘
                  │
                  ▼
   ┌──────────────────────────────────┐
   │  460: Determine an encoded        │
   │  connection pairing code based on │
   │  the locating points and the      │
   │       information points          │
   └──────────────────────────────────┘
                  │
                  ▼
   ┌──────────────────────────────────┐
   │  470: Perform multi-level fusion  │
   │  on the connection pairing code   │
   └──────────────────────────────────┘
                  │
                  ▼
           ┌─────────────┐
           │     End     │◄───────────────
           └─────────────┘
```

FIG. 8

First electronic
device

Second electronic
device

T1  Transmit an optical
pulse signal

T2  Return a signal

FIG. 9

431: Crop an image A1, to obtain an image B1

432: Perform downsampling on the image B1 based on a distance A, to obtain an image C1

433: Perform blur processing on the image C1, to obtain an image D1

434: Perform high-pass filtering processing on the image C1 based on the image D1, to obtain an image E1

435: Perform binarization processing on the image E1, to obtain a binary image F1

436: Perform a closing operation and an opening operation on the binary image F1, to obtain an image G1

437: Extract an ROI from the image G1

FIG. 10

FIG. 11

FIG. 12

| 441: Obtain n frames of images A2 |
|---|

| 442: Pre-crop the n frames of images A2, to obtain n frames of images B2 |
|---|

| 443: Perform downsampling on the n frames of images B2 based on an ROI, to obtain n frames of images C2 |
|---|

| 444: Perform intra-frame differential on each frame of image C2, to obtain n frames of gray-scale images D2 |
|---|

| 445: Perform multi-frame alignment processing on the n frames of images D2 |
|---|

| 446: Perform secondary cropping on the n frames of aligned gray-scale images D2 based on the ROI, to obtain n frames of images E2 |
|---|

FIG. 13

451: Determine an annular region A capable of covering an ROI

452: Perform filtering processing on m frames of images E2 by using the annular region A, to obtain m frames of images F2

453: Perform inter-frame differential processing on the m frames of images F2, to obtain m frames of gray-scale images G2

454: Filter the m frames of gray-scale images G2 by using a binarization threshold, to obtain m frames of binary images H2

455: Perform an OR operation on the m frames of binary images H2, to obtain an image I2

456: Perform interference point filtering on the image I2, to obtain an image J2

457: Determine locating points and information points in the image J2

FIG. 14

FIG. 15

4561: Mark a connected component in an image I2

4562: Perform luminance value sorting on connected components in a gray-scale image G2-a based on the marked connected component

4563: Determine a target connected component in the gray-scale image G2-a

4564: Perform binarization processing on the gray-scale image G2-a based on the target connected component, to obtain an image J2

FIG. 16

(a)　　　　　　　　(b)　　　　　　　　(c)

FIG. 17

Identified locating points

Supplemented locating points

Locating points after supplement

(a)　　　　　　　　(b)　　　　　　　　(c)

FIG. 18

461: Determine a digit encoded in each display region based on locating points and information points

462: Fuse the digit corresponding to each display region in a preset order, to obtain a connection pairing code

FIG. 19

Circle center O

FIG. 20

Annular region B

(a)

(b)

Decode

Digits: 318031031318

FIG. 21

Quantity of cyclic shifts: 6

Quantity of effective feature points: 5

Connection pairing code 1: [3, 1, 8, 0, 3, –1]

Check error flag bits: [1, 1, 1, 2, 1, 0]

Decoding result of J2-1

Quantity of cyclic shifts: 6

Quantity of effective feature points: 5

Connection pairing code 2: [3, 1, 8, 0, 3, 1]

Check error flag bits: [1, 1, 1, 2, 1, 1]

Decoding result of J2-2

Quantity of cyclic shifts: 6

Quantity of effective feature points: 6

Connection pairing code 3: [3, 1, 8, 0, 3, 1]

Check error flag bits: [1, 1, 1, 2, 1, 1]

Decoding result of J2-3

Fuse

Connection pairing code: [3, 1, 8, 0, 3, 1]

Check error flag bits: [1, 1, 1, 1, 1, 1]

Fusion result

FIG. 22

Reference connection pairing code: [5, 8, 2, 6, 7, 6]
Check error flag bits: [1, 1, 1, 1, 1, 1]
Dubious flag bit array: [[], [], [], [], [], []]

Check connection pairing code: [5, 8, 2, 6, 7, 6]
Check error flag bits: [1, 1, 1, 1, 1, 1]
Dubious flag bit array: [[], [], [], [], [], []]

First-round fusion result

Second-round fusion result

Fuse

Fused connection pairing code: [5, 8, 2, 6, 7, 6]
Check error flag bits: [2, 2, 2, 2, 2, 2]
Dubious flag bit array: [[], [], [], [], [], []]

Fusion result

FIG. 23

Reference connection pairing
code: 2, –1, 2, 6, 7, 6]
Check error flag bits: [1, 0, 1,
1, 1, 1]
Dubious flag bit array: [[], [],
[], [], [], []]

Check connection pairing code: none
Check error flag bits: none
Dubious flag bit array: [[], [], [], [],
[], []]

First-round fusion result          Second-round fusion result

Fuse

Fused connection pairing code:
2, –1, 2, 6, 7, 6]
Check error flag bits: [1, 0, 1,
1, 1, 1]
Dubious flag bit array: [[], [],
[], [], [], []]

Check connection pairing code:
5, 8, 2, 6, 7, 6]
Check error flag bits: [1, 1, 1,
1, 1, 1]
Dubious flag bit array: [[], [],
[], [], [], []]

Multi-round fusion result 1          Third-round fusion result

Fuse

Fused connection pairing code:
–1, –1, 2, 6, 7, 6]
Check error flag bits: [1, 1, 1, 1,
1, 1]
Dubious flag bit array: [[2, 5],
[8], [], [], [], []]

Check connection pairing code:
5, 8, 2, 6, 7, 6]
Check error flag bits: [1, 1, 1,
1, 1, 1]
Dubious flag bit array: [[], [],
[], [], [], []]

Multi-round fusion result 2          Fourth-round fusion result

Fuse

Fused connection pairing code:
5, 8, 2, 6, 7, 6]
Check error flag bits: [1, 1, 1,
1, 1, 1]
Dubious flag bit array: [[], [],
[], [], [], []]

Multi-round fusion result 3

FIG. 24

Decoder side                                                    Encoder side

```
┌─────────────────────┐                    ┌─────────────────────┐
│                     │  Decoding          │                     │
│                     │  succeeds          │                     │
│    Later version    │ ──────────────────▶│    Later version    │
│                     │  Decoding          │                     │
│                     │  succeeds          │                     │
└─────────────────────┘                    └─────────────────────┘

              Decoding
              fails
┌─────────────────────┐                    ┌─────────────────────┐
│                     │                    │                     │
│                     │                    │                     │
│   Earlier version   │ ──────────────────▶│   Earlier version   │
│                     │  Decoding          │                     │
│                     │  succeeds          │                     │
└─────────────────────┘                    └─────────────────────┘
```

FIG. 25

200

FIG. 26(a)

300

Scan for verification

Align the viewfinder with the
pattern on the new device

311

Manual verification

FIG. 26(b)

310

300

5G 5G 📶 8:00 ⎯ 310

Scan for verification

Align the viewfinder with the
pattern on the new device

⎯ 312

Scanning failed

A current version is low, and a pattern of the
peer device cannot be parsed. Use the
connection code for connection or try again
after the upgrade.

Manual verification

FIG. 26(c)

Outer-circle locating point

B8 V2 B7
Version number point V1
B6

B10
V3
B11
V4
B12

Inner-circle locating point

(a)

V2
A8 A7
V1
A6

A10
V3

A11

V4

A12

(b)

V2

V1

α2 α1

V3
α3 α4

V4

(c)

FIG. 27

EP 4 746 379 A1

75

500

```
                    ┌──────────┐
                    │  Start   │
                    └────┬─────┘
                         │
                         ▼
        ┌────────────────────────────────────┐
        │     510: Obtain an image VA1        │
        └────────────────┬───────────────────┘
                         │
                         ▼
                   ╱──────────╲
              ╱─────────────────────╲
          ╱   520: Determine            ╲        Yes
        ╱  whether a distance A to a second ╲─────────┐
        ╲  electronic device is greater than a ╱      │
          ╲  preset distance            ╱             │
              ╲─────────────────────╱                 │
                   ╲──────────╱                        │
                         │ No                          │
                         ▼                             │
        ┌────────────────────────────────────┐        │
        │        530: Extract an ROI          │        │
        └────────────────┬───────────────────┘        │
                         │                             │
                         ▼                             │
        ┌────────────────────────────────────┐        │
        │  540: Determine version number      │        │
        │            points                   │        │
        └────────────────┬───────────────────┘        │
                         │                             │
                         ▼                             │
        ┌────────────────────────────────────┐        │
        │  550: Version number determined     │        │
        │  based on the version number points │        │
        └────────────────┬───────────────────┘        │
                         │                             │
                         ▼                             │
        ┌────────────────────────────────────┐        │
        │  560: Decode device connection      │        │
        │  information based on the version   │        │
        │            number                   │        │
        └────────────────┬───────────────────┘        │
                         │                             │
                         ▼                             │
                    ┌──────────┐                       │
                    │   End    │◄──────────────────────┘
                    └──────────┘
```

FIG. 28

5401: Obtain n frames of images VA2

5402: Pre-crop the n frames of images VA2, to obtain n frames of images VB2

5403: Perform downsampling on the n frames of images VB2 based on an ROI, to obtain n frames of images VC2

5404: Perform intra-frame differential on each frame of image VC2, to obtain n frames of gray-scale images VD2 that include version number points

5405: Perform multi-frame alignment processing on the n frames of images VD2

5406: Perform secondary cropping on the n frames of aligned gray-scale images VD2 based on the ROI, to obtain n frames of images VE2

5407: Determine an annular region VA capable of covering version number points in the ROI

5408: Perform filtering processing on m frames of images VE2 by using the annular region VA, to obtain m frames of images VF2

5409: Perform inter-frame differential processing on the m frames of images VF2, to obtain m frames of gray-scale images VG2

5410: Filter the m frames of gray-scale images VG2 by using a binarization threshold, to obtain m frames of binary images VH2

5411: Perform an OR operation on the m frames of binary image VH2, to obtain an image VI2

5412: Perform interference point filtering on the image VI2, to obtain an image VJ2

5413: Determine version number points in the image VJ2

FIG. 29

VH2-1　　　　　　　　VH2-2　　　　　　　　VH2-3

VI2

FIG. 30

54121: Mark a connected component in an image VI2

54122: Perform luminance value sorting on connected components in a gray-scale image VG2-a based on the marked connected component

54123: Obtain pixel values in regions that correspond to the connected components and that are in n frames of images VA2

54124: Sort the connected components based on luminance values of the connected components and the pixel values in the regions corresponding to the connected components

54125: Determine VX target connected components based on a sorting result

54126: Perform binarization processing on a gray-scale image G2-a based on the VX target connected components, to obtain an image VJ2

FIG. 31

(a)                    (b)

FIG. 32

551: Determine whether a quantity of version number points is greater than or equal to a preset quantity

No

Yes

552: Filter an interference point in the version number points

553: Whether a version number can be determined by using a candidate angle sequence including the version number points

No

555: Determine that no version number can be obtained

556: Decode a next group of images that include version number points

Yes

554: Determine the version number corresponding to the version number points as a version number of a second electronic device

FIG. 33

5531: Select a target version number from a plurality of known version numbers, where the target version number has a corresponding standard angle sequence

5532: Determine whether a quantity of angles in a candidate angle sequence is a preset quantity 1

No →

5538: Determine whether the quantity of angles in the candidate angle sequence is a preset quantity 2

Yes →

5539: Update the standard angle sequence, to obtain a standard angle sequence 2

5544: Determine that a version number cannot be determined

Yes ↓

5533: Determine a quantity of effective angles in the candidate angle sequence

TO FIG. 34B

No ↑

5537: Determine whether the standard angle sequence B obtained after a cyclic shift is the same as the standard angle sequence

Yes →

TO FIG. 34B

TO FIG. 34B

**FIG. 34A**

5536: Perform cyclic shift processing on angles in the standard angle sequence, to obtain a standard angle sequence B

5534: Determine whether the quantity of effective angles is greater than or equal to a preset quantity 3

No

Yes

5535: Determine that a version number corresponding to version number points is the target version number

5540: Determine a quantity of effective angles in the candidate angle sequence

5543: Determine whether the standard angle sequence C is the same as the standard angle sequence 2

Yes

No

5541: Determine whether the quantity of effective angles is greater than or equal to a preset quantity 3

Yes

No

5542: Perform cyclic shift processing on angles in the standard angle sequence 2, to obtain a standard angle sequence C

FIG. 34B

EP 4 746 379 A1

FIG. 35

FIG. 36

<u>800</u>

Obtain N frames of first images, where each of the N frames of first images includes particle points encoded with target information; the particle points include locating points used to locate a display region and information points that indicate data; in a same frame of first image, the locating point is cyclically displayed in a first preset color order, and the information point is cyclically displayed in a second preset color order; and N is greater than or equal to 3 — 810

Determine a target region that is in the first image and that includes the particle points — 820

Extract the particle points from the first image based on the target region — 830

Determine, based on distribution of the particle points, the target information encoded in the particle points — 840

FIG. 37

## INTERNATIONAL SEARCH REPORT

| International application No. |
|---|
| **PCT/CN2025/101701** |

| A. | CLASSIFICATION OF SUBJECT MATTER |
|---|---|

H04L 67/06(2022.01)i

According to International Patent Classification (IPC) or to both national classification and IPC

| B. | FIELDS SEARCHED |
|---|---|

Minimum documentation searched (classification system followed by classification symbols)

IPC: H04L, G06K

Documentation searched other than minimum documentation to the extent that such documents are included in the fields searched

Electronic data base consulted during the international search (name of data base and, where practicable, search terms used)

CNTXT, WPABS, ENTXT, VEN, 3GPP, ETSI, IETF, CNKI: 二维码, 颜色, 循环, 显示, 帧, 第二, 定位点, QR code, color, cycle, display, frame, second, positioning point

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 102750564 A (WANG ANRAN et al.) 24 October 2012 (2012-10-24) description, paragraphs 53 and 55 | 1, 2, 6-10, 12, 13, 17-24 |
| Y | CN 112651475 A (BEIJING BYTEDANCE NETWORK TECHNOLOGY CO., LTD.) 13 April 2021 (2021-04-13) claim 1 | 1, 2, 6-10, 12, 13, 17-24 |
| A | US 2023419063 A1 (LIGHTDROP B.V.) 28 December 2023 (2023-12-28) entire document | 1-24 |
| A | WO 2024121928 A1 (NIPPON TELEGRAPH & TELEPHONE) 13 June 2024 (2024-06-13) entire document | 1-24 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 August 2025** | **03 September 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 746 379 A1

| INTERNATIONAL SEARCH REPORT | International application No. |
| Information on patent family members | PCT/CN2025/101701 |

| Patent document cited in search report | | | Publication date (day/month/year) | Patent family member(s) | | | Publication date (day/month/year) |
|---|---|---|---|---|---|---|---|
| CN | 102750564 | A | 24 October 2012 | None | | | |
| CN | 112651475 | A | 13 April 2021 | None | | | |
| US | 2023419063 | A1 | 28 December 2023 | US | 12380300 | B2 | 05 August 2025 |
| | | | | EP | 4300353 | A1 | 03 January 2024 |
| | | | | EP | 4300353 | B1 | 06 August 2025 |
| WO | 2024121928 | A1 | 13 June 2024 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410804850
- CN 202410865237X
- CN 202411336391